(19) Europäisches Patentamt
European Patent Office
Office européen des brevets

(11) EP 4 057 376 A1

(12) **DEMANDE DE BREVET EUROPEEN**

(43) Date de publication:
**14.09.2022 Bulletin 2022/37**

(21) Numéro de dépôt: **22160894.6**

(22) Date de dépôt: **08.03.2022**

(51) Classification Internationale des Brevets (IPC):
***H01M 4/04** (2006.01)* ***H01M 4/13** (2010.01)*
***H01M 4/139** (2010.01)* ***H01M 4/62** (2006.01)*
*H01M 10/052 (2010.01)* *H01M 10/0562 (2010.01)*
*H01M 10/0565 (2010.01)*

(52) Classification Coopérative des Brevets (CPC):
**H01M 4/622; H01M 4/0404; H01M 4/13; H01M 4/139;** H01M 4/623; H01M 4/625; H01M 10/052; H01M 10/0562; H01M 10/0565; H01M 2300/0082; H01M 2300/0091

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **09.03.2021 FR 2102254**

(71) Demandeurs:
- **Commissariat à l'Energie Atomique et aux Energies Alternatives**
**75015 Paris (FR)**
- **SAFT**
**92300 Lavallois-Perret (FR)**

(72) Inventeurs:
- **NGUYEN, Huu-Dat**
**38054 GRENOBLE cedex 09 (FR)**
- **PICARD, Lionel**
**38054 GRENOBLE cedex 09 (FR)**

(74) Mandataire: **Nony**
**11 rue Saint-Georges**
**75009 Paris (FR)**

(54) **ÉLECTRODE COMPOSITE COMPORTANT UN ÉLECTROLYTE SOLIDE À BASE DE POLYCARBONATES**

(57) Electrode composite comportant un électrolyte solide à base de polycarbonates L'invention concerne une électrode composite comprenant :
- au moins un électrolyte solide constitué d'un ou plusieurs (co)polymères obtenus par (co)polymérisation par ouverture de cycle (ROP) d'au moins un carbonate cyclique de cinq à huit chaînons et, éventuellement, d'au moins une lactone de cinq à huit chaînons, catalysée par l'acide méthane sulfonique ou opérée sous irradiation par micro-ondes en l'absence de catalyseur ; les fonctions hydroxyles en bout de chaîne du ou desdits (co)polymères étant éventuellement protégées ; et d'au moins un sel de métal alcalin ou alcalino-terreux, en particulier un sel de lithium ;
- au moins un matériau actif d'électrode ; et
- éventuellement, un ou plusieurs additifs conducteurs électroniques et/ou un ou plusieurs liants.

Elle concerne encore une encre et un procédé pour la préparation de cette électrode composite, ainsi que son utilisation dans un système électrochimique, en particulier dans une batterie au lithium.

EP 4 057 376 A1

## Description

### Domaine technique

La présente invention concerne une électrode composite pour un dispositif électrochimique, en particulier une cellule électrochimique, notamment une batterie au lithium, un dispositif électrochimique comprenant l'électrode composite, et un procédé de préparation d'une telle électrode composite.

Plus particulièrement, l'invention concerne une électrode composite incorporant un électrolyte solide constitué d'un ou plusieurs polycarbonates aliphatiques, rendus conducteurs par la dissolution d'au moins un sel alcalin ou alcalino-terreux, en particulier un sel de lithium. Les polycarbonates mis en œuvre pour former l'électrolyte solide incorporé au niveau d'une électrode composite selon l'invention sont synthétisés par (co)polymérisation par ouverture de cycle (ROP) dans des conditions spécifiques, mettant en œuvre l'acide méthane sulfonique (MSA) comme catalyseur ou, alternativement, en l'absence de catalyseur sous irradiation par micro-ondes.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative. Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

La cellule électrochimique, par exemple d'un accumulateur au lithium, est ainsi classiquement formée d'une électrode négative et d'une électrode positive, séparées par un électrolyte (dit électrolyte séparateur). Chacune des électrodes positive et négative est en contact avec un collecteur de courant, qui assure le transport des électrons vers un circuit électrique extérieur. Selon le type d'accumulateur, l'électrolyte séparateur peut se présenter sous une forme solide, liquide ou sous forme d'un gel.

Les électrodes pour batteries au lithium sont des électrodes volumiques pour lesquelles la réaction électrochimique est distribuée dans le volume de l'électrode à la surface des particules de matériau actif. Les électrodes sont des matériaux composites complexes généralement obtenus en mélangeant une poudre d'un matériau électrochimiquement actif avec des adjuvants conducteurs électroniques comme du noir de carbone et un liant polymérique. Ce milieu très complexe doit être conducteur mixte à la fois des ions $Li^+$ et des électrons, de façon à ce que ces réactifs soient acheminés le plus efficacement possible jusqu'à chacun des grains du matériau actif.

Les électrodes composites sont généralement mises en forme par enduction d'une encre comprenant le matériau électrochimiquement actif pulvérulent, un liant et un adjuvant conducteur électronique, dispersés dans un solvant organique ou aqueux, sur un collecteur de courant.

Le liant polymérique doit conférer à l'électrode la cohésion des différents composants et sa tenue mécanique sur le collecteur de courant. Il est souhaitable également qu'il confère une certaine flexibilité à l'électrode pour sa mise en œuvre en cellule, par exemple vis-à-vis d'une étape de bobinage.

Les matériaux électrochimiquement actifs mis en œuvre au sein d'une électrode composite peuvent également présenter une forte expansion volumique lors de la lithiation. Cette expansion peut induire une dégradation de l'intégrité de l'électrode et une fracture de l'interface électrode-électrolyte.

Pour prévenir la dégradation de l'électrode et améliorer les performances électrochimiques des batteries, de nombreuses études ont porté sur la nature du liant. Les liants polymères utilisés jusqu'à présent dans les batteries au lithium sont par exemple de type polyfluoroure de vinylidène, la carboxyméthyle cellulose, le caoutchouc nitrile, le caoutchouc styrène-butadiène ou encore l'acide polyacrylique ([1], [2]).

Avec le développement des électrolytes polymériques conducteurs intrinsèques ou gélifiés, des électrolytes polymériques ont également été proposés comme liant d'électrodes composites, ce qui permet notamment d'accommoder plus facilement les variations de volume des matériaux d'électrode ([3], [4]). L'électrolyte polymère entrant dans la composition d'une électrode composite, par exemple pour une batterie au lithium, doit assurer à la fois la cohésion mécanique de l'électrode et la distribution des ions en tout point de l'électrode.

La présente invention vise précisément à proposer une nouvelle électrode composite, par exemple pour une batterie au lithium, incorporant un électrolyte solide à base d'un ou plusieurs polycarbonates aliphatiques, en particulier de type poly(triméthylène carbonate) ou leurs copolymères avec l'$\varepsilon$-caprolactone, obtenus dans des conditions de synthèse par (co)polymérisation par ouverture de cycle (ROP) spécifiques, catalysée par l'acide méthane sulfonique (MSA) ou, alternativement, sans catalyseur, sous irradiation par micro-ondes.

Des polycarbonates aliphatiques, en particulier le poly(triméthylène carbonate) (PTMC) et ses copolymères, ont déjà été décrits pour former des films ou membranes d'électrolytes solides polymériques, par exemple dans des

batteries rechargeables au lithium. La plupart des polycarbonates proposés pour former des électrolytes solides séparateurs dans des batteries rechargeables, notamment dans des batteries au lithium, sont obtenus polymérisation par ouverture de cycle catalysée par Sn(Oct)2, comme décrit par exemple par Brandell *et al.* ([5]) et Mindemark *et al.* ([6]).

Plus précisément, Brandell *et al.* ([5]) décrivent la synthèse de poly(triméthylène carbonate) de haut poids moléculaire (368 000 $g.mol^{-1}$) par polymérisation en masse, par ouverture de cycle catalysée par de l'octanoate stanneux (Sn(Oct)2), pour former des électrolytes polymériques solides dans des batteries au lithium. En mettant en œuvre la même voie de synthèse, Mindemark *et al.* [6] décrivent la synthèse de copolymères aléatoires de triméthylène carbonate (TMC) et d'ε-caprolactone (CL), de masse moléculaire allant de 457 000 à 508 000 $g.mol^{-1}$, pour une application comme électrolyte polymérique solide. Toutefois, la voie de synthèse par polymérisation par ouverture de cycle catalysée par du Sn(Oct)2, comme proposé par Brandell *et al.* et Mindemark *et al.*, requiert des temps de réaction longs (au moins 72 heures) pour des températures élevées (≥130 °C), ce qui ne permet pas d'envisager leur transposition à l'échelle industrielle, en raison d'une consommation trop élevée d'énergie. Qui plus est, les conditions sévères de synthèse à hautes températures ne permettent pas un contrôle de la polymérisation et de la polydispersité des polycarbonates obtenus. Elles sont également susceptibles d'induire des défauts dans la structure chimique des polymères obtenus. Enfin, le catalyseur mis en œuvre, $Sn(Oct)_2$, ne peut être totalement éliminé du produit final du fait de sa solubilité similaire à celle du polymère synthétisé dans de nombreux solvants organiques. Pour des nombreuses applications de ces polymères, par exemple comme biomatériaux, la présence résiduelle du catalyseur au sein du matériau polymérique formé ne pose pas de problème. Toutefois, pour des applications liées à des processus électrochimiques, comme dans les batteries rechargeables au lithium, la présence de catalyseur, et en particulier de cations métalliques tels que $Sn^{2+}$, $Zn^{2+}$, etc., est susceptible d'avoir des effets néfastes sur les performances et la durabilité des batteries, puisque ces cations peuvent également être réduits/oxydés au cours des processus de charge/décharge.

A la connaissance des inventeurs, il n'a par ailleurs jamais été proposé d'incorporer des polycarbonates ainsi obtenus par ROP catalysée par du Sn(Oct)2 dans la composition d'une électrode composite pour un système électrochimique.

D'autre part, des synthèses de polycarbonates aliphatiques par ROP catalysée par l'acide méthane sulfonique (encore appelé acide méthylsulfonique et noté « MSA » pour « methanesulfonic acid » en terminologie anglo-saxonne) ou encore sans catalyseur, sous irradiation par micro-ondes, ont été décrites.

Ainsi, Delcroix *et al.* [7] présentent une comparaison de la mise en œuvre de l'acide méthane sulfonique et de l'acide trifluorométhane sulfonique (HOTf) pour conduire la polymérisation par ouverture de cycle du triméthylène carbonate, mettant en œuvre comme initiateur de polymérisation de l'eau ou du *n*-pentanol.

L'irradiation par micro-ondes a également été proposée pour conduire différentes réactions de polymérisation telles que des réactions de polycondensation, de polymérisation radicalaire contrôlée et de polymérisation par ouverture de cycle. Liao *et al.* [8] décrivent ainsi la synthèse de poly(triméthylène carbonate) par polymérisation par ouverture de cycle assistée par micro-ondes, en présence de l'éthylène glycol comme initiateur de réaction. L'irradiation par micro-ondes à une puissance de 10 W pendant une durée de 18 minutes permet ainsi d'obtenir un PTMC de masse moléculaire moyenne Mn de 15 200 $g.mol^{-1}$, avec un taux de conversion de 92 %. La mise en œuvre d'une durée et puissance d'irradiation plus élevées conduisent à un taux de conversion supérieur (95-96 %), mais la masse moléculaire Mn des polymères obtenus est alors réduite, due à une dégradation thermique. De fait, les réactions assistées par micro-ondes proposées par Liao *et al.* sont conduites sans contrôle de la température de réaction. Ainsi, à une puissance d'irradiation de 10 W, une température maximale de 154 °C est atteinte au bout de 17 minutes et décroît ensuite pour atteindre un plateau après 24 minutes d'irradiation. A des puissances d'irradiation plus élevées, i.e., 20 W et 30 W, un pic exothermique de 168 et 173 °C est atteint à 8 et 9 minutes respectivement. Ainsi, la polymérisation assistée par micro-ondes dans les conditions décrites dans cette publication ne permet pas de contrôler la masse moléculaire des PTMC obtenus, les masses moléculaires Mn des polycarbonates obtenus étant très différentes et indépendantes des masses moléculaires théoriques calculées sur la base du ratio molaire entre les monomères et l'initiateur.

On peut également citer la publication de Liao *et al.* [9], qui décrit la synthèse de copolymères triblocs poly(triméthylène carbonate)-b-poly(éthylène glycol)-b-poly(triméthylène glycol) (PTMC-PEG-PTMC), par copolymérisation par ouverture de cycle assistée par micro-ondes, en l'absence de catalyseur. En présence du PEG600, un copolymère de masse moléculaire moyenne Mn de 16 600 $g.mol^{-1}$ est obtenu après irradiation aux micro-ondes à 120°C pendant 60 minutes.

Ces travaux ont toutefois uniquement trait à la synthèse de matériaux polymériques pour des applications comme biomatériaux, par exemple dans le domaine biomédical en raison de la biocompatibilité de ces polymères et de l'absence de catalyseur métallique ou toxique.

A la connaissance des inventeurs, il n'a jamais été proposé de tirer profit des polycarbonates aliphatiques et de leurs copolymères, en particulier obtenus dans des conditions de synthèse par ROP spécifiques, en mettant en œuvre le MSA comme catalyseur ou sous irradiation par micro-ondes, pour leur mise en œuvre dans un système électrochimique, par exemple pour une batterie rechargeable au lithium, et encore moins pour leur incorporation au sein d'une électrode composite.

**Résumé de l'invention**

L'invention concerne ainsi, selon un premier de ses aspects, une électrode composite comprenant, voire étant formée de :

- au moins un électrolyte solide constitué

  . d'un ou plusieurs (co)polymères obtenus par (co)polymérisation par ouverture de cycle (ROP) d'au moins un carbonate cyclique de cinq à huit chaînons et, éventuellement, d'au moins une lactone de cinq à huit chaînons ;

    ladite réaction de (co)polymérisation étant catalysée par l'acide méthane sulfonique ou opérée sous irradiation par micro-ondes en l'absence de catalyseur ;
    les fonctions hydroxyles en bout de chaîne du ou desdits (co)polymères étant éventuellement protégées ; et

  . d'au moins un sel de métal alcalin ou alcalino-terreux, en particulier un sel de lithium ;

- au moins un matériau actif d'électrode ; et
- éventuellement, un ou plusieurs additifs conducteurs électroniques et/ou un ou plusieurs liants additionnels.

On désignera plus simplement dans la suite du texte, sous l'appellation « polycarbonate aliphatique » ou encore « polycarbonate », un (co)polymère obtenu par (co)polymérisation par ROP selon l'invention d'au moins un carbonate cyclique de cinq à huit chaînons et, éventuellement, d'au moins une lactone de cinq à huit chaînons.

De manière avantageuse, le ou lesdits (co)polymères sont des poly(triméthylène carbonate) (notés PTMC dans la suite du texte) ou des copolymères poly(triméthylène carbonate)-poly(ε-caprolactone) (notés PTMC-PCL dans la suite du texte), obtenus par polymérisation par ouverture de cycle du triméthylène carbonate (TMC), éventuellement par copolymérisation avec l'ε-caprolactone (CL).

De manière avantageuse, les polycarbonates obtenus à l'issue d'une synthèse conduite dans les conditions de l'une ou l'autre des variantes précitées, à l'aide du MSA comme catalyseur ou sous irradiation par micro-ondes en l'absence de catalyseur, en particulier de type PTMC et PTMC-PCL, présentent une structure chimique contrôlée. Comme confirmé par analyse RMN $^1H$, les polycarbonates synthétisés selon l'invention présentent ainsi avantageusement peu, voire pas de défauts dans leur structure chimique.

En outre, la synthèse conduite dans les conditions selon l'invention permet avantageusement d'accéder à des polycarbonates présentant une pureté élevée.

De fait, dans le cadre de la mise en œuvre du MSA comme catalyseur, à la différence notamment de l'octanoate stanneux (Sn(Oct)2), le MSA peut être aisément éliminé du milieu réactionnel, notamment du fait de sa solubilité très élevée dans le méthanol, solvant le plus utilisé pour la précipitation des polycarbonates synthétisés.

Dans le cadre de la seconde variante, la synthèse des polycarbonates selon l'invention s'affranchit même de la présence de catalyseur.

Ainsi, de manière avantageuse, la pureté des polycarbonates mis en œuvre selon l'invention est avantageusement supérieure ou égale à 90 %, en particulier supérieure ou égale à 95 %, voire supérieure ou égale à 98 %, voire même supérieure ou égale à 99 %. La pureté peut être vérifiée par analyse RMN $^1H$ du produit obtenu.

De préférence, les polycarbonates mis en œuvre selon l'invention sont obtenus par synthèse par ROP selon l'invention, conduite en présence d'un composé, en particulier d'une molécule organique, dit « initiateur » (ou « amorceur »), présentant une ou plusieurs fonctions hydroxyles, ajouté au milieu réactionnel initial, en particulier choisi parmi les alcools, notamment les alcools portant une à quatre fonction(s) hydroxyle(s). Elle permet d'accéder à des polycarbonates de masse et de polydispersité contrôlées.

En particulier, les polycarbonates synthétisés selon l'invention peuvent présenter une masse moléculaire moyenne en nombre, Mn, inférieure ou égale à 200 000 $g.mol^{-1}$, en particulier comprise entre 5 000 et 100 000 $g.mol^{-1}$ et plus particulièrement entre 5 000 et 50 000 $g.mol^{-1}$.

Selon un mode de réalisation particulièrement avantageux, les polycarbonates mis en œuvre selon l'invention présentent des fonctions hydroxyles en bout de chaine protégées. La protection des fonctions hydroxyles des polycarbonates selon l'invention peut être plus particulièrement réalisée par réaction de la ou desdites fonctions hydroxyles en bout de chaine des polycarbonates, avec au moins un composé, dit agent de protection, choisi parmi les chlorures d'acyle, les anhydrides d'acide et les isocyanates. Elle peut être opérée en ajoutant directement le ou lesdits agents de protection dans le milieu réactionnel obtenu à l'issue de la (co)polymérisation, ou ultérieurement à une étape de purification du ou desdits (co)polymères (voie dite de « post-modification »).

Par ailleurs, la synthèse des polycarbonates peut être opérée à température ambiante et s'avère ainsi particulièrement avantageuse en termes de consommation d'énergie. Également, les polycarbonates peuvent être obtenus

avantageusement pour des faibles durées de polymérisation, en particulier pour une durée de polymérisation inférieure à 3 jours, en particulier inférieure ou égale à 72 heures, notamment inférieure ou égale à 48 heures. Les polycarbonates mis en œuvre selon l'invention peuvent ainsi être obtenus par un procédé aisément transposable pour une production à grande échelle.

Une électrode composite selon l'invention peut être préparée directement en surface d'un collecteur de courant à partir d'une dispersion, appelée « encre », comprenant les différents composants de l'électrode composite dispersés dans un milieu solvant.

L'invention concerne ainsi une encre pour la réalisation d'une électrode composite, en particulier telle que définie précédemment, comprenant, dans un ou plusieurs solvants, en particulier choisis parmi l'eau et les solvants organiques :

- un ou plusieurs (co)polymères selon l'invention, obtenus par (co)polymérisation par ouverture de cycle (ROP) d'au moins un carbonate cyclique de cinq à huit chaînons et, éventuellement, d'au moins une lactone de cinq à huit chaînons,

  ladite réaction de (co)polymérisation étant catalysée par l'acide méthane sulfonique ou opérée sous irradiation par micro-ondes en l'absence de catalyseur ;
  les fonctions hydroxyles en bout de chaîne du ou desdits (co)polymères étant éventuellement protégées ;

- au moins un sel de métal alcalin ou alcalino-terreux, en particulier un sel de lithium ;
- au moins un matériau actif d'électrode, et éventuellement au moins un additif conducteur électronique et/ou au moins un liant additionnel.

L'invention concerne encore un procédé de préparation d'une électrode composite, en particulier telle que définie précédemment, comprenant au moins les étapes suivantes :

- préparation d'une dispersion, dite encre, telle que définie précédemment, comprenant, dans un ou plusieurs solvants :

  . un ou plusieurs (co)polymères obtenus par (co)polymérisation par ouverture de cycle (ROP) d'au moins un carbonate cyclique de cinq à huit chaînons et, éventuellement, d'au moins une lactone de cinq à huit chaînons ;

    ladite réaction de (co)polymérisation étant catalysée par l'acide méthane sulfonique ou opérée sous irradiation par micro-ondes en l'absence de catalyseur ;
    les fonctions hydroxyles en bout de chaîne du ou desdits (co)polymères étant éventuellement protégées ;

  . au moins un sel de métal alcalin ou alcalino-terreux, en particulier un sel de lithium,

  . un ou plusieurs matériaux actifs d'électrode et, éventuellement, un ou plusieurs additifs conducteurs électroniques et/ou un ou plusieurs liants additionnels ; et

- formation à partir de ladite encre, en surface d'un collecteur de courant, de ladite électrode composite.

L'électrode composite peut être mise en œuvre pour divers systèmes électrochimiques. Ainsi, l'invention concerne encore l'utilisation d'une électrode composite selon l'invention, dans un système électrochimique, en particulier dans une batterie au lithium.

Elle concerne également un système électrochimique comportant une électrode composite selon l'invention, une deuxième électrode qui est ou non une électrode composite selon l'invention, et un électrolyte, en particulier agissant comme séparateur, localisé entre ladite électrode composite et ladite deuxième électrode.

Le système électrochimique peut être une batterie rechargeable, en particulier une batterie au lithium, notamment une batterie lithium-ion ou lithium-métal.

Dans un mode de réalisation particulier, l'électrolyte entre ladite électrode composite et ladite deuxième électrode du dispositif électrochimique selon l'invention est constitué d'un film d'électrolyte solide, en particulier de type électrolyte polymérique solide ou électrolyte solide hybride, de même nature que celui incorporé au niveau de l'électrode composite, autrement dit à base d'un ou plusieurs polycarbonates selon l'invention, tels que mis en œuvre au niveau de ladite électrode composite.

La mise en œuvre selon l'invention de l'électrolyte solide au niveau de la composition de l'électrode, permet avantageusement d'optimiser l'interface électrolyte solide/électrode du système électrochimique.

L'invention concerne encore un ensemble électrode/membrane électrolytique, dans lequel ladite électrode est une électrode composite selon l'invention, ladite membrane électrolytique étant plus particulièrement un film d'électrolyte solide, notamment de type électrolyte polymérique solide ou électrolyte solide hybride, de préférence à base d'un ou plusieurs polycarbonates tels que mis en œuvre au niveau de ladite électrode composite. L'invention concerne encore un procédé de préparation d'un système électrochimique selon l'invention, dans laquelle un film d'électrolyte solide, de préférence à base de polycarbonates tels que décrits précédemment, est formé en surface d'une électrode composite selon l'invention. Le film d'électrolyte solide mis en œuvre comme électrolyte séparateur au sein d'un système électrochimique selon l'invention peut être notamment de type électrolyte polymérique solide (SPE) ou électrolyte solide hybride (HSE), comme décrit plus précisément dans la suite du texte.

De manière avantageuse, la mise en œuvre d'un électrolyte solide à base d'un ou plusieurs polycarbonates selon l'invention permet d'accéder à une électrode composite présentant d'excellentes performances électrochimiques au niveau du système électrochimique. L'électrolyte solide à base de polycarbonates selon l'invention apporte avantageusement un niveau de conductivité élevé.

En particulier, les inventeurs ont montré que la mise en œuvre de polycarbonates aliphatiques, en particulier de type PTMC et PTMC-PCL, obtenus par synthèse par (co)polymérisation par ouverture de cycle dans les conditions de l'invention, permettent de conduire, en combinaison avec au moins un sel de métal alcalin ou alcalino-terreux, en particulier un sel de lithium, à des électrolytes solides présentant des performances améliorées, en particulier en termes de conductivité ionique et de stabilité électrochimique améliorées, comparativement à des électrolytes préparés à partir de polycarbonates obtenus par d'autres voies de synthèse, telle que par ROP catalysée par le Sn(Oct)2.

Comme illustré dans les exemples qui suivent, les électrolytes solides obtenus à partir des polycarbonates, en particulier de type PTMC ou PTMC-PCL, synthétisés selon l'invention, présentent ainsi d'excellentes performances, en particulier une conductivité ionique élevée, par exemple supérieure ou égale à $10^{-6}$ $S.cm^{-1}$ à 60°C, en particulier supérieure ou égale à $10^{-6}$ $S.cm^{-1}$ pour un PTMC et supérieure ou égale à $10^{-5}$ $S.cm^{-1}$ pour un PTMC-PCL à 60°C ; et un nombre de transport des ions lithium, noté t+, supérieur ou égal à 0,50 à 60°C, en particulier supérieur ou égal à 0,70 pour PTMC et supérieur ou égal à 0,60 pour PTMC-PCL à 60°C.

Les électrolytes solides à base de polycarbonates synthétisés selon l'invention présentent également une stabilité électrochimique améliorée.

En particulier, ils présentent une large fenêtre de stabilité électrochimique, en particulier jusqu'à 4,50 V *versus* $Li/Li^+$. Ainsi, une électrode composite incorporant un électrolyte solide selon l'invention est particulièrement utile pour des batteries de densité énergétique élevée, c'est-à-dire fonctionnant à une différence de potentiel supérieure à 4 V *versus* $Li/Li^+$, en particulier supérieure ou égale à 4,2 V *versus* $Li/Li^+$, telles que des batteries $Li^0$ vs. $LiNi_{0,6}Mn_{0,2}Co_{0,2}O_2$.

Une électrode composite selon l'invention peut également être mise en œuvre pour des systèmes électrochimiques, en particulier des batteries au lithium, fonctionnant sur une large plage de températures, de préférence entre -20°C et 90°C, en particulier entre -10°C et 80°C. L'électrolyte solide mis en œuvre selon l'invention assure ainsi le maintien des contacts électriques, i.e., ionique et électronique, au sein de l'électrode composite, permettant ainsi d'atteindre de bonnes performances du dispositif électrochimique en puissance et en capacité de cyclage.

Par ailleurs, l'électrolyte solide présente avantageusement une bonne souplesse et est peu cassant. L'électrolyte solide agit comme un liant déformable au sein de l'électrode composite. Il est capable avantageusement de s'accommoder des variations volumiques des matériaux actifs d'électrode, se produisant lors des cycles de décharge/charge, sans impacter sur les performances électrochimiques.

L'électrolyte solide permet de conférer à l'électrode composite de bonnes propriétés de conductivité ionique, de flexibilité et d'adhésion au collecteur de courant.

D'autres caractéristiques, variantes et avantages d'une électrode composite selon l'invention, de sa préparation et de sa mise en œuvre dans un système électrochimique, ressortiront mieux à la lecture de la description, des exemples et figures qui vont suivre, donnés à titre illustratif et non limitatif de l'invention.

**Brève description des dessins**

[Fig 1] présente les spectres RMN $^1H$ des polymères PTMC de masse moléculaire moyenne Mn d'environ 10 000 $g.mol^{-1}$ initiés par le 3-phényl-1-propanol (PPA), synthétisés en exemple 1, à l'aide (a) du catalyseur MSA (P10PPA), (b) de l'irradiation par micro-ondes en présence de toluène (MW10PPA-T) et (c) à l'aide du catalyseur Sn(Oct)2 (S10PPA) ;

[Fig 2] présente les spectres RMN $^1H$ des polymères PTMC « protégés » de masse moléculaire moyenne Mn d'environ 10 000 $g.mol^{-1}$, synthétisés en exemple 1, à l'aide de l'agent de protection chlorure de benzoyle (BC) (a), et isocyanate de p-toluènesulfonyle (TSI) (b) ;

[Fig 3] présente les spectres RMN $^1H$ des copolymères PTMC60-PCL40 (10 000 $g.mol^{-1}$), synthétisés en exemple

2, initiés par le PPA à l'aide (a) du catalyseur MSA (G10PPA), (b) de l'irradiation par micro-ondes en présence de toluène (M10PPA-T) et (c) à l'aide du catalyseur Sn(Oct)2 (R10PPA) ;

[Fig 4] présente les spectres RMN $^1$H des copolymères PTMC60-PCL40 (10 000 g.mol$^{-1}$), synthétisés en exemple 2 à l'aide du catalyseur MSA et de l'initiateur PPA, « protégés » par le chlorure de benzoyle (BC) (a), et l'isocyanate de p-toluènesulfonyle (TSI) (b) ;

[Fig 5] présente les courbes de conductivité ionique en fonction de la température, obtenues pour les électrolytes polymériques solides à base de PTMC, synthétisés en exemple 1, à l'aide du catalyseur MSA (P10PPA-TFSI15) et Sn(Oct)2 (S10PPA-TFSI15), et à l'aide de l'irradiation par micro-ondes en présence de toluène (MW10PPA-T-TFSI15), préparés en exemple 3 ;

[Fig 6] présente les courbes de conductivité ionique en fonction de la température, obtenues pour les électrolytes polymériques solides à base de P10PPA contenant différentes concentrations en sel LiTFSI, préparés en exemple 3 ;

[Fig 7] présente les courbes de conductivité ionique en fonction de la température, obtenues pour les électrolytes polymériques solides à base de P10PPA contenant différentes concentrations en sel LiFSI, préparés en exemple 3 ;

[Fig 8] présente les courbes de conductivité ionique en fonction de la température, obtenues pour les électrolytes polymériques solides à base de copolymère PTMC60-PCL40, synthétisés en exemple 2, à l'aide du catalyseur MSA (G10PPA-TFSI15) et Sn(Oct)2 (R10PPA-TFSI15), et à l'aide de l'irradiation par micro-ondes en présence de toluène (M10PPA-T-TFSI15), préparés en exemple 3 ;

[Fig 9] présente les courbes de voltampérométrie cyclique obtenues pour les électrolytes solides P10PPA-TFSI15, MW10PPA-T-TFSI15 et S10PPA-TFSI15 à base des PTMC non-protégés synthétisés en exemple 1 à l'aide de l'initiateur PPA, comme décrit en exemple 3 ; [Fig 10] présente les courbes de voltampérométrie cyclique des électrolytes solides à base du PTMC non-protégé (P10PPA-TFSI15), et PTMC protégé (P10PPA-BC-TFSI15 et P10PPA-TSI-TFSI15), synthétisés en exemple 1, à l'aide du catalyseur MSA et l'initiateur PPA, comme décrit en exemple 3 ;

[Fig 11] présente les courbes de voltampérométrie cyclique obtenues pour les électrolytes solides G10PPA-TFSI15, M10PPA-T-TFSI15 et R10PPA-TFSI15 à base des copolymères PTMC-PCL non-protégés, synthétisés en exemple 2, à l'aide de l'initiateur PPA, comme décrit en exemple 3 ;

[Fig 12] présente les courbes de voltampérométrie cyclique des électrolytes solides à base du copolymère PTMC-PCL non-protégé (G10PPA-TFSI15) et des copolymères PTMC-PCL protégés (P10PPA-BC-TFSI15 et P10PPA-TSI-TFSI15), synthétisés en exemple 2, à l'aide du catalyseur MSA et l'initiateur PPA, comme décrit en exemple 3 ;

[Fig 13] présente les courbes de cyclage galvanostatique d'une batterie complète contenant l'électrolyte polymérique solide (SPE) à base du PTMC protégé (P10PPA-BC-TFSI15), comme décrit en exemple 3, et la cathode composite à base du PTMC protégé (NMC2P10PPA-BC), comme décrit en exemple 4 ;

[Fig 14] présente les courbes de cyclage galvanostatique d'une batterie complète contenant l'électrolyte solide hybride (HSE) à base du PTMC protégé (P10PPA-BC-TFSI15-LATP20), comme décrit en exemple 3, et la cathode composite à base du PTMC protégé (NMC2P10PPA-BC), comme décrit en exemple 4 ;

[Fig 15] présente les courbes de cyclage galvanostatique d'une batterie complète contenant l'électrolyte solide hybride (HSE) à base du copolymère PTMC-PCL protégé (G10PPA-BC-TFSI15-LATP20), comme décrit en exemple 3, et la cathode composite à base du PTMC protégé (NMC2P10PPA-BC), comme décrit en exemple 4 ;

[Fig 16] présente les courbes de cyclage galvanostatique d'une batterie complète contenant l'électrolyte solide hybride (HSE) à base du copolymère PTMC-PCL protégé (G10PPA-BC-TFSI2-LATP20), comme décrit en exemple 3, et la cathode composite à base du PTMC protégé (NMC2P10PPA-BC), comme décrit en exemple 4.

Dans la suite du texte, les expressions « compris entre ... et ... », « allant de ... à ... » et « variant de ... à ... » sont équivalentes et entendent signifier que les bornes sont incluses, sauf mention contraire.

**Description détaillée**

**(CO)POLYMERE DE TYPE POLYCARBONATE**

Comme indiqué précédemment, une électrode composite selon l'invention incorpore un électrolyte solide à base d'un ou plusieurs (co)polymères obtenus par (co)polymérisation par ouverture de cycle (dite encore « ROP » pour « Ring-Opening Polymerization » en terminologie anglosaxonne) d'au moins un carbonate cyclique de cinq à huit chaînons et, éventuellement, d'au moins une lactone de cinq à huit chaînons, rendus conducteurs par la dissolution d'au moins un sel alcalin ou alcalino-terreux, en particulier un sel de lithium. Par « copolymère », on entend un polymère dérivé d'au moins deux espèces différentes de monomères. Dans la suite du texte, en l'absence d'indications contraires, le terme « polymère » ou « polycarbonate » sera utilisé pour désigner, au sens large, aussi bien des homopolymères que des copolymères.

Les monomères carbonates cycliques peuvent être plus particulièrement de formule (I) suivante :

[Chem 1]

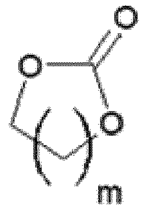

(I)

dans laquelle m est un entier compris entre 1 et 4, notamment entre 1 et 3, en particulier m vaut 1 ou 2 et plus particulièrement m vaut 2 ;
lesdits monomères étant éventuellement substitués, sur un ou plusieurs des atomes de carbone du cycle, par un ou plusieurs substituants, en particulier choisis parmi des groupements alkyles, en particulier en $C_1$ à Cs, linéaires ou ramifiés.

Ainsi, les monomères carbonates cycliques peuvent être de formule (I') suivante

[Chem 2]

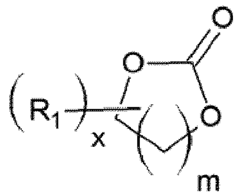

(I')

dans laquelle m est tel que défini précédemment ; x est un entier compris entre 0 et 2m+2 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le monomère carbonate cyclique est choisi parmi le triméthylène carbonate et ses dérivés. En particulier, le monomère carbonate cyclique est le triméthylène carbonate.

Selon une première variante de réalisation, le polycarbonate synthétisé selon l'invention est un (co)polymère obtenu par ROP d'un ou plusieurs monomères carbonate cyclique.

En particulier, il peut s'agir d'un poly(triméthylène carbonate), noté PTMC, obtenu par ROP du triméthylène carbonate (TMC).

Selon une autre variante de réalisation, le polymère synthétisé selon l'invention est un copolymère obtenu par ROP d'au moins un monomère carbonate cyclique, en particulier tel que défini précédemment, et d'au moins un monomère de type lactone.

De préférence, le ratio molaire entre le(s) monomère(s) carbonate cyclique et le(s) monomère(s) de type lactone est compris entre 90/10 et 10/90, notamment entre 80/20 et 20/80, en particulier compris entre 70/30 et 30/70 et plus particulièrement d'environ 60/40. Par lactone, on entend plus particulièrement des monomères répondant à la formule (II) suivante :

[Chem 3]

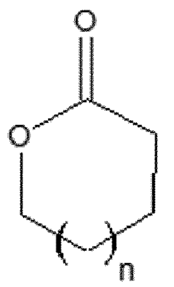

(II)

dans laquelle n vaut 0 ou est un entier allant de 1 à 3 ;
lesdits monomères étant éventuellement substitués, sur un ou plusieurs des atomes de carbone du cycle, par un ou plusieurs substituants, en particulier choisis parmi des groupements alkyles, en particulier en $C_1$ à Cs, linéaires ou ramifiés.

Ainsi, les monomères de type lactone peuvent être de formule (II') suivante :

[Chem 4]

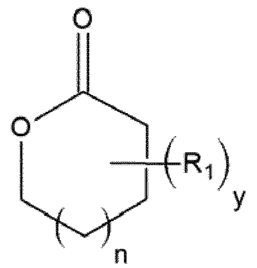

(II')

dans laquelle n est tel que défini précédemment ; y est un entier compris entre 0 et 2n+6 ; et $R_1$, porté(s) par un ou plusieurs atomes de carbone du cycle, représentent, indépendamment les uns des autres, des substituants, en particulier des groupements alkyles, en particulier en $C_1$ à Cs, linéaires ou ramifiés.

Selon un mode de réalisation particulier, le copolymère selon l'invention est formé à partir de l'ε-caprolactone (notée CL).

Les copolymères peuvent être plus particulièrement de type aléatoire ou à gradient.

A titre d'exemple, le copolymère selon l'invention peut être formé à partir du triméthylène carbonate (TMC) et de l'ε-caprolactone (CL). Autrement dit, il peut s'agir d'un copolymère poly(triméthylène carbonate)-poly(ε-caprolactone) (PTMC-PCL), en particulier présentant un rapport molaire entre les unités monomériques dérivées du TMC et les unités monomériques dérivés de la CL compris entre 90/10 et 10/90, notamment entre 80/20 et 20/80, en particulier entre 70/30 et 30/70 et plus particulièrement d'environ 60/40.

Selon un mode de réalisation particulier, les (co)polymères mis en œuvre selon l'invention sont choisis parmi les PTMC, les copolymères PTMC-PCL, en particulier tels que décrits précédemment, et leurs mélanges.

<u>Préparation des polycarbonates</u>

Comme indiqué précédemment, les polycarbonates mis en œuvre selon l'invention pour former l'électrolyte solide incorporé au sein d'une électrode composite selon l'invention sont préparés par (co)polymérisation par ouverture de cycle des monomères tels que décrits précédemment.

De manière avantageuse, la ROP est opérée soit en présence de l'acide méthane sulfonique (noté MSA pour « Methane Sulfonic Acid » dans la suite du texte) comme catalyseur, soit en l'absence de catalyseur, sous irradiation micro-ondes.

Plus particulièrement, selon une première variante de réalisation, les polycarbonates incorporés au niveau d'une électrode composite selon l'invention sont obtenus par (co)polymérisation par ouverture de cycle (ROP) catalysée par l'acide méthane sulfonique (MSA) et initiée, ou non, par au moins un composé comportant une ou plusieurs fonction(s) hydroxyle(s).

Dans le cas d'une synthèse catalysée par le MSA, le ou lesdits monomère(s) et ledit catalyseur MSA peuvent être plus particulièrement mis en œuvre dans un rapport molaire monomère(s)/MSA compris entre 40/1 et 1000/1, en particulier entre 50/1 et 500/1.

Selon un mode de réalisation particulier, les polycarbonates mis en œuvre pour former un électrolyte solide incorporé à une électrode composite selon l'invention peuvent être plus particulièrement préparés *via* au moins les étapes suivantes :

(a1) synthèse, en présence ou non d'un milieu solvant, d'au moins un (co)polymère par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant catalysée par l'acide méthane sulfonique (MSA) et
initiée, ou non, par au moins un composé comportant une ou plusieurs fonction(s) hydroxyle(s), en particulier par un ou plusieurs alcools tels que décrits dans la suite du texte ;
(a2) éventuellement, protection des fonctions hydroxyles en bout de chaîne du ou desdits (co)polymères ; et
(a3) purification, préalablement ou ultérieurement à l'étape (a2) de protection des fonctions hydroxyles, du ou desdits (co)polymères, en particulier par précipitation dans un ou plusieurs solvants polaires.

Selon une autre variante de réalisation les polycarbonates incorporés au niveau d'une électrode composite selon l'invention sont obtenus par (co)polymérisation par ouverture de cycle (ROP) en l'absence de catalyseur, sous irradiation par micro-ondes et initiée par au moins un composé comportant une ou plusieurs fonction(s) hydroxyle(s).

En particulier, les polycarbonates mis en œuvre pour former un électrolyte solide incorporé à une électrode composite selon l'invention peuvent être préparés *via* au moins les étapes suivantes :

(b1) synthèse d'au moins un (co)polymère par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ;
éventuellement (b2) protection des fonctions hydroxyles en bout de chaîne du ou desdits (co)polymères ;
et éventuellement (b3) purification, préalablement ou ultérieurement à l'étape (b2) de protection des fonctions hydroxyles, du ou desdits (co)polymères, en particulier par précipitation dans un ou plusieurs solvants polaires.

Comme indiqué précédemment, les polycarbonates sont obtenus, de préférence, par ROP conduite en présence d'un composé, en particulier d'une molécule organique, comportant une ou plusieurs fonctions hydroxyles, dit « initiateur » (ou « amorceur »).

Le composé initiateur de la ROP peut être de diverses natures, pour autant qu'il présente au moins une fonction hydroxyle permettant d'amorcer la réaction de polymérisation. Il peut être choisi en particulier parmi l'eau et/ou les alcools, en particulier les alcools présentant une à quatre fonctions hydroxyles.

Selon un mode de réalisation particulier, l'initiateur de la ROP peut être de l'eau. Il peut s'agir par exemple de l'eau résiduelle apportée avec au moins l'un des monomères de type carbonate cyclique et/ou lactone mis en œuvre.

Selon un mode de réalisation particulièrement avantageux, l'initiateur est apporté en une quantité déterminée au mélange réactionnel initial.

Ledit initiateur de la ROP peut présenter une masse moléculaire moyenne en nombre allant de 90 à 1 000 $g.mol^{-1}$, en particulier de 90 à 500 $g.mol^{-1}$.

Il peut être plus particulièrement choisi parmi les alcools présentant une ou plusieurs fonctions hydroxyles, en particulier une à quatre fonctions hydroxyles, notamment une ou deux fonctions hydroxyles.

Selon un mode de réalisation particulier, l'initiateur est un monoalcool. Il peut s'agir plus particulièrement d'un composé ROH dans lequel le groupe R représente un groupement « non réactif ».

Par groupement « non réactif », on entend désigner un groupement non réactif dans les conditions de préparation et de mise en œuvre du polycarbonate selon l'invention. Plus particulièrement, le groupement R ne présente pas de fonction réactive vis-à-vis des monomères de type carbonate cyclique et lactone mis en œuvre, ni de fonction réactive vis-à-vis des métaux alcalins ou alcalino-terreux, notamment vis-à-vis du lithium métal, des sels de métaux alcalins ou alcalino-terreux, notamment vis-à-vis des sels de lithium.

Le groupement R peut être plus particulièrement :

- un groupe alkyle, linéaire ou ramifié, pouvant être substitué par des groupements mono- ou polycycliques ou mono- ou polyhétérocycliques, condensés ou non, saturés ou insaturés, aromatiques ou non ; ou
- un groupe mono- ou polycyclique ou mono- ou polyhétérocyclique, condensé ou non, saturé ou insaturé, aromatique ou non ;

le groupe alkyle et/ou le ou lesdits groupements mono- ou poly(hétéro)cycliques pouvant éventuellement être substitués par un ou plusieurs atomes de fluor.

Dans le cadre de l'invention, on entend par :

- « alkyle », un groupe aliphatique saturé, linéaire ou ramifié ; par exemple un groupe $C_{1-4}$-alkyle représente une chaîne carbonée de 1 à 4 atomes de carbone, linéaire ou ramifiée, plus particulièrement un méthyle, éthyle, propyle, isopropyle, butyle, isobutyle, tert-butyle ;
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

En particulier, un groupement polycyclique selon l'invention est formé de deux à six cycles, les cycles comprenant, indépendamment les uns des autres, de 4 à 6 chaînons. Le groupement polycyclique peut inclure un ou plusieurs hétéroatomes. On parle alors de « groupement polyhétérocyclique ».

L'initiateur mis en œuvre pour la synthèse des polycarbonates par ROP selon l'invention peut être par exemple choisi parmi les molécules suivantes.

[Chem 5]

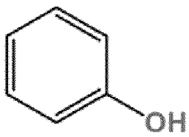
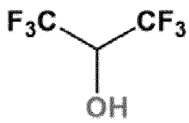
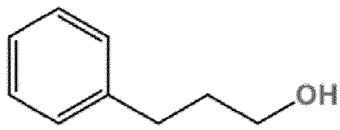
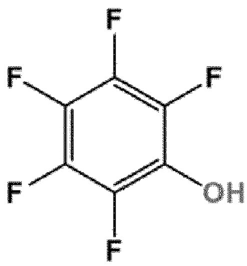
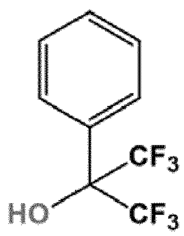
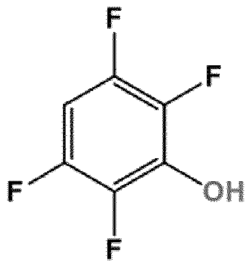
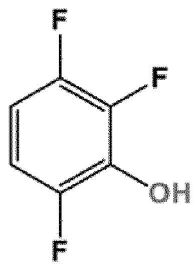
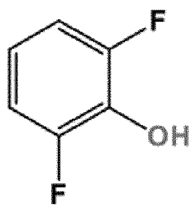
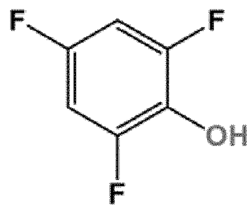
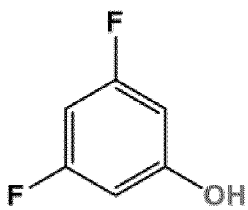
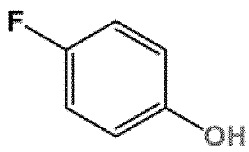
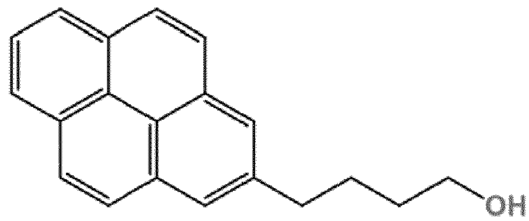

Selon un autre mode de réalisation particulier, l'initiateur est un composé présentant au moins deux fonctions hydroxyle, en particulier de deux à quatre fonctions hydroxyles, par exemple deux fonctions hydroxyles.

En particulier, il peut s'agir d'un composé de formule R'(-OH)$_x$, dans laquelle x représente un entier allant de 2 à 4 ; et R' représente un groupe non réactif divalent, trivalent ou tétravalent, en particulier un groupe alkylène, notamment en $C_1$ à $C_6$, en particulier en $C_1$ à C3, linéaire ou ramifié, tel que l'éthylène glycol (également noté « EG ») ou le glycérol. L'initiateur peut encore être de type macroamorceur. Par « macroamorceur » au sens de l'invention, on entend un polymère comportant à au moins l'une de ses extrémités, une fonction hydroxyle capable d'amorcer la réaction de ROP selon l'invention. Il permet de conduire à la formation d'un copolymère à blocs. Ledit macroamorceur peut être par exemple un polydiméthylsiloxane, porteur d'une fonction terminale hydroxyle.

La nature de l'initiateur mis en œuvre pour amorcer la réaction de ROP pour la synthèse des polycarbonates selon l'invention n'est nullement limitée aux composés précités, et d'autres initiateurs peuvent être envisagés.

De manière avantageuse, dans le cas d'un initiateur présentant plusieurs fonctions hydroxyles, les valeurs de pKa des différentes fonctions hydroxyles sont sensiblement identiques. Il permet ainsi d'accéder à des polycarbonates à structure ramifiée, ou dendrimères, à ramifications symétriques.

Selon un mode de réalisation particulier, l'initiateur est choisi parmi le 3-phényl-1-propanol (également noté « PPA ») et l'éthylène glycol.

Dans le cas de la mise en œuvre d'un initiateur, celui-ci va être intégré en bout de chaîne du (co)polymère synthétisé.

La mise en œuvre d'un initiateur de la ROP, en particulier apporté en une quantité déterminée, dans le mélange réactionnel initial, permet avantageusement de contrôler la masse molaire et la polydispersité des polycarbonates synthétisés selon l'invention.

Selon un mode de réalisation particulier, le ou lesdits monomères et le ou lesdits initiateurs sont mis en œuvre dans un rapport molaire monomère(s)/initiateur(s) compris entre 40/1 et 1000/1, en particulier entre 50/1 et 500/1.

Selon un mode de réalisation particulier, dans le cas de la synthèse par ROP catalysée par le MSA, le ratio molaire initiateur(s)/catalyseur MSA est compris entre 1/1 et 10/1, en particulier est d'environ 1/1.

Selon encore une autre variante de réalisation, dans le cas de la synthèse du (co)polymère par ROP catalysée par le MSA, celle-ci peut être opérée en l'absence d'initiateur, en particulier en l'absence d'eau et de composé alcool.

Dans ce cas, la polymérisation par ouverture de cycle des monomères peut être initiée par un des monomères de type carbonate cyclique, par exemple par le triméthylène carbonate, activé suivant un mécanisme dit de « active chain-end » (ACEM).

Comme évoqué précédemment, la réaction de ROP, selon l'une ou l'autre des variantes précitées, est avantageusement opérée à basse température, en particulier à une température inférieure ou égale à 200°C, en particulier inférieure ou égale à 160°C et plus particulièrement inférieure ou égale à 140 °C.

La durée de polymérisation peut être ajustée pour obtenir une conversion élevée des monomères. En particulier, la durée de polymérisation est avantageusement courte ; elle peut être inférieure ou égale à 72 heures, en particulier inférieure ou égale à 48 heures.

En particulier, dans le cas d'une synthèse par ROP catalysée par le MSA, la réaction de ROP peut être avantageusement opérée à une température inférieure ou égale à 40 °C, notamment comprise entre 20 et 40 °C et plus particulièrement à température ambiante. Par température ambiante, on entend une température de 25 $\pm$ 5°C.

La durée de polymérisation peut être inférieure ou égale à 72 heures, en particulier inférieure ou égale à 48 heures et plus particulièrement comprise entre 24 et 48 heures.

Dans le cas d'une synthèse par ROP assistée par micro-ondes, la (co)polymérisation par ROP peut être opérée en soumettant le milieu réactionnel à une irradiation par micro-ondes. Le rayonnement dans le domaine des micro-ondes peut inclure des longueurs d'ondes autorisés, soit 915 MHz, soit 2,45 GHz, en particulier 2,45 GHz.

L'irradiation par des micro-ondes peut être mise en œuvre en utilisant un four à micro-ondes tel que par exemple un four à micro-ondes CEM MARS, ou un générateur à micro-ondes.

L'irradiation par micro-ondes est avantageusement opérée en contrôlant la température du milieu réactionnel. En particulier, la température peut être maintenue à une valeur, de préférence constante, comprise entre 100 et 200 °C et plus particulièrement comprise entre 120°C et 160°C, notamment entre 120°C et 140°C. La température souhaitée peut être atteinte en imposant une montée en température à une vitesse de l'ordre de 10°C/minute à 50°C/minute.

Avantageusement, la puissance mise en œuvre lors de cette irradiation ne dépasse pas 300 W, en particulier est comprise entre 30 et 300 W et plus particulièrement entre 40 et 100 W. L'irradiation par micro-ondes peut être conduite pendant une durée très courte, en particulier comprise entre 30 minutes et 300 minutes, en particulier entre 60 et 180 minutes et plus particulièrement entre 60 et 120 minutes.

Selon un mode de réalisation particulier, la (co)polymérisation par ROP assistée par micro-ondes est opérée en soumettant le mélange réactionnel comprenant le ou lesdits monomères tel que décrit précédemment et le ou lesdits initiateurs, en particulier présentant un rapport molaire monomère(s)/initiateur(s) compris entre 40/1 et 1000/1, à une irradiation par micro-ondes à une puissance inférieure ou égale à 300 W, en particulier comprise entre 30 et 300 W, notamment entre 40 et 100 W, pendant une durée d'irradiation comprise entre 30 et 300 minutes, notamment entre 60 et 180 minutes, en particulier entre 60 et 120 minutes et plus particulièrement d'environ 60 minutes, et à une température

contrôlée comprise entre 100°C et 200 °C, notamment entre 120°C et 160 °C, en particulier entre 120°C et 140°C.

Le taux de conversion en monomères à l'issue de la synthèse du polycarbonate selon l'une ou l'autre des variantes précitées est avantageusement supérieur à 90 %, en particulier supérieur à 95 %. Le taux ou rendement de conversion peut être déterminé à partir de la masse des (co)polymères obtenus et des masses en monomère(s) et, éventuellement, en initiateur de départ.

La réaction de ROP peut être conduite en masse (en l'absence de solvant) ou en milieu solvant.

Dans le cas d'une synthèse par ROP catalysée par le MSA, la réaction peut avantageusement être conduite en milieu solvant, en particulier sous agitation. Le milieu solvant peut être plus particulièrement formé d'un ou plusieurs solvant(s) apolaire(s) et aprotique(s). Le ou lesdits solvants apolaires et aprotiques peuvent être plus particulièrement choisis parmi le toluène, le dichlorométhane, le tétrahydrofurane, le diméthyle sulfoxide, le diméthyle acétamide et leurs mélanges. En particulier, la synthèse par ROP catalysée par le MSA peut être opérée dans le dichlorométhane.

Selon un mode de réalisation particulier, la concentration en monomères dans le milieu réactionnel initial est supérieure ou égale à 3 $mol.L^{-1}$ (M) en particulier supérieure ou égale à 5 $mol.L^{-1}$. Elle peut être compris entre 3 et 15 $mol.L^{-1}$, en particulier entre 5 et 10 $mol.L^{-1}$. Dans le cas d'une synthèse par ROP assistée par micro-ondes, la réaction peut être avantageusement opérée à partir d'un mélange réactionnel comprenant une faible quantité de solvant voire étant exempt de solvant (polymérisation en masse).

Ainsi, la réaction de (co)polymérisation peut être opérée en présence d'un ou plusieurs solvant(s) organique(s), en particulier mis en œuvre en une teneur inférieure ou égale à 0,3 mL/g de monomère(s), en particulier inférieure ou égale à 0,1 mL/g de monomère(s), voire être exempt de solvant (polymérisation en masse). Le ou lesdits solvants peuvent être plus particulièrement choisis parmi des solvants apolaires et aprotiques tels que cités précédemment.

Selon un mode de réalisation particulier, le milieu réactionnel de départ est formé du ou desdits monomères, du ou desdits initiateurs, et éventuellement d'un ou plusieurs solvants, en particulier dans une faible teneur telle qu'indiquée précédemment.

Selon un autre mode de réalisation particulier, la réaction de (co)polymérisation est opérée en l'absence de solvant. Le milieu réactionnel de départ peut ainsi être uniquement formé du mélange du ou desdits monomères et du ou desdits initiateurs, en l'absence de solvant.

La réaction de ROP pour la synthèse de polycarbonates selon l'invention peut être mise en œuvre en mode continu, semi-continu ou discontinu.

Selon un mode de réalisation particulier, elle est opérée de manière discontinue (« batch » en anglais), l'ensemble des monomères étant introduits en une seule fois dans le réacteur, le (co)polymère étant récupéré en une fois à la fin de réaction.

Selon un autre mode de réalisation, la réaction de ROP peut être mise en œuvre de manière semi-continue ou continue, en particulier dans le cas de la synthèse de copolymères de type aléatoire ou gradient. Elle peut plus particulièrement comprendre une phase d'introduction progressive du ou desdits monomères dans le réacteur. L'introduction progressive des monomères peut être opérée par ajout au cours de la polymérisation de fractions successives de monomère(s), ou en continu.

A l'issue de la (co)polymérisation, éventuellement après protection des fonctions hydroxyles en bout de chaines comme décrit plus précisément dans la suite du texte, les polycarbonates peuvent être soumis à une ou plusieurs étapes de purification, par exemple par précipitation dans un ou plusieurs solvants polaires, typiquement du méthanol ou de l'éthanol, et récupérés par filtration et séchage.

C'est notamment le cas pour la synthèse des polycarbonates par ROP catalysée par le MSA, à des fins d'élimination du catalyseur. De manière avantageuse, le catalyseur MSA peut être aisément éliminé, en totalité, du milieu réactionnel, ce qui permet de conduire à des polycarbonates présentant une très grande pureté.

Avantageusement, la synthèse des polycarbonates par ROP assistée par micro-ondes, sans catalyseur, permet de s'affranchir des étapes de purification. Les polycarbonates obtenus à l'issue de la réaction de ROP assistée par micro-ondes, en particulier réalisée en masse, peuvent être directement mis en œuvre pour la préparation d'une encre pour la réalisation d'une électrode composite selon l'invention, sans étape de purification intermédiaire.

Les polycarbonates obtenus selon l'invention à l'issue de la synthèse par ROP selon l'une ou l'autre des variantes précitées présentent avantageusement une pureté élevée. En particulier, la pureté des polycarbonates obtenus est avantageusement supérieure ou égale à 90 %, en particulier supérieure ou égale à 95 %, voire supérieure ou égale à 98 %, voire même supérieure ou égale à 99 %. La pureté peut être vérifiée par analyse RMN $^1H$ du produit obtenu.

Par ailleurs, les polycarbonates synthétisés selon l'invention présentent avantageusement peu, voire pas de défauts dans leur structure chimique. L'absence de défauts structurels peut être confirmée par analyse RMN $^1H$ des (co)polymères.

Comme illustré dans les exemples, le spectre RMN $^1H$ d'un polycarbonate synthétisé selon l'invention présente ainsi un pic à 3,43 ppm, représentatif de liaisons éther, de très faible intensité, voire ne présente aucun pic indentifiable à 3,43 ppm. En revanche, contrairement à des polycarbonates synthétisés selon l'invention, le spectre des polycarbonates synthétisés selon d'autres voies de synthèse, en particulier à l'aide du catalyseur Sn(Oct)2, laisse apparaître un

pic d'intensité plus élevée à 3,43 ppm, ce qui témoigne de la présence de défauts structurels (liaisons éther) au niveau de la structure des polycarbonates, à cause de réactions indésirables de décarboxylation.

De manière avantageuse, les polycarbonates obtenus selon l'invention par ROP dans les conditions de l'une ou l'autre des variantes décrites précédemment, avantageusement en présence d'un initiateur tel que décrit précédemment, ajouté en quantité déterminée au milieu réactionnel initial, présentent une masse molaire contrôlée et, de préférence, une polydispersité contrôlée.

En particulier, les polycarbonates synthétisés selon l'invention présentent avantageusement une masse molaire moyenne en nombre, notée Mn, inférieure ou égale à 200 000 $g.mol^{-1}$, en particulier comprise entre 5 000 et 100 000 $g.mol^{-1}$, et plus particulièrement entre 5 000 et 50 000 $g.mol^{-1}$. La masse molaire moyenne en nombre peut être mesurée par chromatographie d'exclusion stérique (ou SEC). Elle peut encore être obtenue à partir de l'analyse RMN $^1H$ du (co)polymère obtenu.

Elle peut être avantageusement contrôlée selon la méthode de synthèse mise en œuvre selon l'invention par le rapport molaire du ou desdits monomère(s) à l'initiateur dans le mélange réactionnel initial.

Les (co)polymères synthétisés selon l'invention peuvent présenter un indice de polydispersité inférieur ou égal à 3,5, en particulier inférieur ou égal à 2,5.

L'indice de polydispersité, noté PDI, est égal au rapport de la masse molaire moyenne en poids Mw sur la masse molaire moyenne en nombre Mn. La masse molaire moyenne en poids peut être déterminée par chromatographie d'exclusion stérique, éventuellement couplée avec la diffusion de lumière statique.

Selon un mode de réalisation particulier, les polycarbonates mis en œuvre selon l'invention, en particulier obtenus par ROP catalysée par MSA, peuvent présenter un indice de polydispersité inférieur ou égal à 1,5, en particulier inférieur ou égal à 1,3.

Les polycarbonates synthétisés selon l'invention de type PTMC peuvent présenter une température de transition vitreuse, notée Tg, comprise entre -10 °C et -50 °C, en particulier entre -20 °C et -40 °C. Les copolymères de type PTMC-PCL peuvent présenter une Tg comprise entre -20°C et -70°C, en particulier entre -30°C et -60°C. La température de transition vitreuse peut être déterminée par analyse par calorimétrie différentielle à balayage (DSC pour « Differential Scanning Calorimetry » en terminologie anglo-saxonne).

Les polycarbonates obtenus à l'issue de la synthèse par ROP conduite selon l'invention, en présence d'un initiateur de type mono-alcool R-OH, peuvent être par exemple de formule (III) suivante :

[Chem 6]

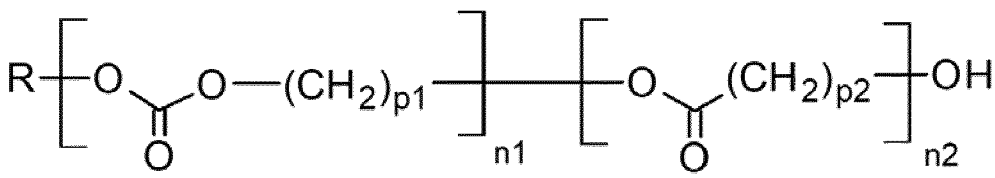

(III)

dans laquelle :

- R représente le groupement issu de l'initiateur de type monoalcool ROH, tel que défini précédemment, par exemple un groupe phénylpropyle issu de l'initiateur PPA ;
- p1 est un nombre entier allant de 2 à 4, en particulier p1 vaut 3 ;
- p2 est un nombre entier allant de 4 à 7, en particulier p2 vaut 5 ;
- n1 est un nombre entier positif, correspondant au nombre moyen d'unités monomériques dérivées des monomères carbonates cycliques, en particulier n1 est compris entre 30 et 500 ; n2 vaut 0 ou est un nombre entier positif, correspondant au nombre moyen d'unités monomériques dérivées des monomères lactones, en particulier n2 est compris entre 20 et 500 ;
- l'enchaînement des unités monomériques dans la formule (III) pouvant être aléatoire ou gradient.

De préférence, comme décrit précédemment, le rapport molaire des unités monomériques dérivées des carbonates cycliques sur les unités monomériques dérivées des lactones, n1/n2, est compris entre 90/10 et 10/90, en particulier entre 80/20 et 20/80, notamment entre 70/30 et 30/70 et plus particulièrement vaut environ 60/40.

A titre d'exemple, les polycarbonates synthétisés selon l'invention peuvent présenter la structure de formule (III') suivante :

[Chem 7]

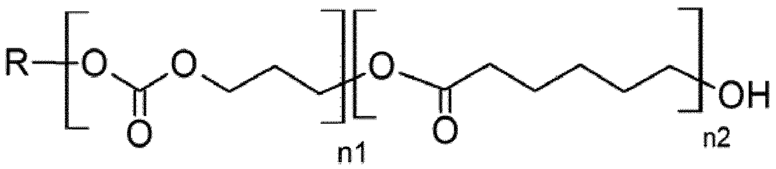

(III')

dans laquelle R, n1 et n2 sont tels que définis précédemment.

Bien entendu, des structures polymériques plus complexes, par exemple de type dendrimères, peuvent être obtenues à partir d'un initiateur mettant en œuvre plusieurs fonctions hydroxyles.

Comme évoqué précédemment, selon un mode de réalisation particulier, la ou les fonctions hydroxyles en bout de chaines, dites encore « fonctions terminales », des polycarbonates mis en œuvre selon l'invention sont protégées (ou coiffées) avant leur mise en œuvre pour former une électrode composite selon l'invention.

Un polycarbonate synthétisé selon l'invention peut comprendre une unique fonction hydroxyle terminale ou deux, voire plus de deux fonctions hydroxyles terminales, en fonction notamment de la mise en œuvre, ou non, d'un initiateur de la réaction de ROP, ainsi que de la nature de l'initiateur (par exemple, mono-alcool ou diol).

La formation d'extrémités hydroxyle coiffées (plus généralement désignées sous l'appellation « end-capped » en terminologie anglo-saxonne) permet avantageusement d'accroître la stabilité électrochimique de l'électrolyte solide formé à partir du ou desdits polycarbonates, et donc de l'électrode composite incorporant ledit électrolyte solide, les fonctions terminales hydroxyle étant sensibles à la réduction et à l'oxydation, et susceptibles de se dégrader au contact des sels de lithium.

Une fonction hydroxyle est plus particulièrement protégée en formant une fonction plus stable chimiquement et électrochimiquement. Par exemple, la ou lesdites fonctions hydroxyles protégées en bout de chaîne du ou desdits polycarbonates peuvent résulter de la réaction de la ou desdites fonctions hydroxyles avec au moins un composé, appelé « agent de protection », en particulier choisi parmi les chlorures d'acyle, par exemple le chlorure de benzoyle, le chlorure d'acétyle, etc. ; les anhydrides d'acide par exemple l'anhydride acétique comme décrit dans la publication [10], etc., et les isocyanates comme l'isocyanate de p-toluènesulfonyle, etc.

La protection des fonctions hydroxyles peut être réalisée en ajoutant directement le ou lesdits agents de protection dans le milieu réactionnel obtenu à l'issue de la (co)polymérisation, avant la purification du polycarbonate dans le cas d'une synthèse par ROP catalysée par le MSA. Elle peut encore être réalisée après purification du polycarbonate obtenu à l'issue de la synthèse par ROP (variante dite de « post-modification » du polycarbonate).

L'homme du métier est à même d'ajuster les conditions opératoires pour accéder à la protection de la ou des fonctions hydroxyles terminales des polycarbonates selon l'invention. Des exemples de modes opératoires pour la protection des fonctions hydroxyles à l'aide du chlorure de benzoyle et de l'isocyanate de p-toluènesulfonyle, sont par exemple illustrés dans la partie exemple qui suit.

**PREPARATION DE L'ELECTRODE COMPOSITE**

Comme évoqué précédemment, les polycarbonates synthétisés selon l'invention, après purification et éventuellement après protection des fonctions hydroxyles en bout de chaîne, sont mis en œuvre pour la préparation d'une électrode composite.

Une électrode composite selon l'invention peut être plus particulièrement préparée à partir d'une dispersion, plus couramment appelée « encre », comprenant, dans un ou plusieurs solvants :

- au moins un polycarbonate tel que décrit précédemment ;
- au moins un sel de métal alcalin ou alcalino-terreux, en particulier un sel de lithium ;
- au moins un matériau actif d'électrode, et éventuellement au moins un additif conducteur électronique et/ou au moins un liant additionnel.

<u>Sel de métal alcalin ou alcalino-terreux</u>

L'électrolyte polymère solide incorporé au niveau d'une électrode composite selon l'invention comporte au moins un sel de métal alcalin ou alcalino-terreux pour le rendre conducteur.

Dans le cadre de l'invention, on entend par :

- « métaux alcalins », les éléments chimiques de la première colonne du tableau périodique des éléments, et plus

particulièrement choisis parmi le lithium, le sodium, le potassium, le rubidium, le césium. De préférence, le métal alcalin est le lithium, le sodium ou le potassium, et plus préférentiellement le lithium ;

- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium. En particulier, le sel mis en œuvre est un sel de lithium.

A titre d'exemples de sel de lithium, on peut citer le $LiPF_6$, $LiClO_4$, LiBF4, $LiAsF_6$, $LiCF_3SO_3$, le bis(trifluorométhylsulfonyl)imide de lithium $LiN[SO_2CF_3]_2$ (connu sous l'abréviation LiTFSI), le bis(fluorosulfonyl)amidure de lithium (connu sous l'abréviation LiFSI) $LiN[SO_2F]_2$, le lithium 4,5-dicyano-2-(trifluoromethyl)imidazole (connu sous l'abréviation LiTDI), le lithium bispentafluoroéthylsulfonylimide ($LiN(C_2F_5SO_2)_2$, connu sous l'abréviation LiBETI), le lithium bis(oxalato)borate (connu sous l'abréviation LiBOB), le lithium difluoro(oxalato)borate (connu sous l'abréviation LiFOB), le difluorophosphate de lithium ($LiPO_2F_2$) et les mélanges de ceux-ci.

De préférence, le sel de lithium est du LiTFSI, LiTDI ou LiFSI, de préférence du LiTFSI ou LiFSI et plus préférentiellement du LiTFSI.

Il appartient à l'homme du métier d'ajuster la quantité en sels de métal alcalin ou alcalino-terreux, notamment au regard de la nature du polycarbonate mis en œuvre.

Selon un mode de réalisation particulier, les quantités en polycarbonate(s) et en sel(s) de lithium sont ajustées de sorte que le ratio molaire entre les groupes carbonyle du polycarbonate par rapport au lithium, noté $[CO]/[Li^+]$, soit compris entre 0,1 et 30, en particulier entre 5 et 15.

<u>Autres composants de l'électrode composite</u>

Les matériaux actifs pour une électrode composite positive peuvent être par exemple choisis parmi des matériaux d'intercalation du lithium comme des phosphates du lithium, par exemple des composés de formule $Li_xFe_{1-y}M_yPO_4$ où M est choisi dans le groupe consistant en B, Mg, Al, Si, Ca, Ti, V, Cr, Mn, Co, Ni, Cu, Zn, Y, Zr, Nb et Mo; et $0,8 \leq x \leq 1,2$ ; $0 \leq y \leq 0,6$ ; des composés de formule $Li_xMn_{1-y-z}M'_yM''_zPO_4$ (LMP) où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec $0,8 \leq x \leq 1,2$ ; $0 \leq y \leq 0,6$ et $0 \leq z \leq 0,2$ ; tels que $LiFePO_4$ (LFP), $LiMnPO_4$, $LiMn_yFe_{1-y}PO_4$ avec $0,8 \leq x \leq 1,2$ ; $0 \leq y \leq 0,6$ ; des composés lamellaires, comme l'oxyde de cobalt lithié $LiCoO_2$, l'oxyde de manganèse lithié $LiMn_2O_4$, ou des matériaux à base de lithium-nickel-cobalt-manganèse $LiNi_xMn_yCo_zO_2$ avec x+y+z=1 (aussi appelé NMC), tel que $LiNi_{0,33}Mn_{0,33}Co_{0,33}O_2$ ou $LiNi_{0,6}Mn_{0,2}Co_{0,2}O_2$, ou un matériau à base de $LiNi_xCo_yAl_zO_2$ avec x+y+z=1 (aussi appelé NCA), ou encore des spinelles (par exemple le spinelle $LiNi_{0,5}Mn_{1,5}O_4$). De manière avantageuse, les matériaux actifs pour une électrode positive sont choisis parmi du $LiNi_{0,6}Mn_{0,2}Co_{0,2}O_2$ (cathodes NCM) ou du $LiCoO_2$, de préférence du $LiNi_{0,6}Mn_{0,2}Co_{0,2}O_2$.

Les matériaux actifs pour une électrode composite négative peuvent être par exemple du carbone, du graphite, de l'oxyde de titane lithié ($Li_4Ti_5O_{12}$) ou de l'oxyde de titane et de niobium ($TiNb_2O_7$). Il peut également s'agir de matériaux à base de silicium ou à base de lithium ou de sodium, ou à base d'étain et de leurs alliages.

Les additifs conducteurs électroniques sont mis en œuvre pour améliorer la conductivité électronique de l'électrode. Ils peuvent être choisis par exemple parmi des fibres de carbone, du noir de carbone, des nanotubes de carbone et leurs mélanges.

Un ou plusieurs liants additionnels, distincts du ou desdits polycarbonates mis en œuvre selon l'invention, peuvent être ajoutés pour améliorer la cohésion des différents composants de l'électrode composite, sa tenue mécanique sur le collecteur de courant ou encore ses propriétés de flexibilité. Les liants additionnels peuvent être choisis parmi des liants fluorés, par exemple le polytétrafluoroéthylène (PTFE), le polyfluorure de vinylidène (PVDF), les polysaccharides ou les latex notamment de type caoutchouc styrène-butadiène (SBR ou en langue anglaise « styrene-butadiene rubber »).

L'encre selon l'invention peut être obtenue par mélange, dans un ou plusieurs solvants, du ou desdits polycarbonates préalablement synthétisés comme décrit précédemment, du ou desdits sels de métal alcalin ou alcalino-terreux, du ou desdits matériaux actifs d'électrode, et éventuellement du ou desdits additifs conducteurs et/ou du ou desdits liants additionnels. L'invention concerne ainsi, selon un autre de ses aspects, un procédé de préparation d'une encre selon l'invention comprenant au moins les étapes consistant en :

(i) préparation d'un ou plusieurs polycarbonates selon l'invention, dont les fonctions hydroxyles en bout de chaine sont éventuellement protégées, en particulier selon l'une ou l'autre des variantes de synthèse par ROP décrites précédemment.

En particulier, la préparation du ou desdits polycarbonates peut être opérée suivant au moins les étapes (a1)

à (a3) telle que décrites précédemment faisant intervenir une synthèse par ROP catalysée par le MSA.
En alternative, la préparation du ou desdits polycarbonates peut être opérée suivant au moins les étapes (b1) à (b3) telles que décrites précédemment, faisant intervenir une synthèse par ROP sous irradiation par micro-ondes.

(ii) mélange, dans un ou plusieurs solvants, du ou desdits polycarbonates, du ou desdits sels de métal alcalin ou alcalino-terreux, du ou desdits matériaux actifs d'électrode, et éventuellement du ou desdits additifs conducteurs et/ou du ou desdits liants additionnels. Le ou lesdits solvants peuvent être choisis parmi des solvants organiques ou aqueux, en particulier parmi la N-méthyl-2-pyrrolidone (NMP), l'acétonitrile (ACN), l'eau et leurs mélanges.

La dispersion ainsi formée, également appelée « encre », peut être homogénéisée, avant sa mise en œuvre pour former l'électrode composite, par exemple à l'aide d'une défloculeuse à une vitesse comprise entre 2 et 5 000 rpm avec une géométrie à disque de défloculation. La valeur du gradient de cisaillement peut varier entre 10 et 2 000 $s^{-1}$.

Electrode composite

L'électrode composite selon l'invention peut être formée en surface d'un collecteur de courant *via* au moins les étapes suivantes :

- préparation d'une encre telle que définie précédemment ; et
- formation à partir de ladite encre, en surface d'un collecteur de courant, de ladite électrode composite.

La préparation de l'encre comprend plus particulièrement les étapes intermédiaires, décrites précédemment, (i) de préparation d'un ou plusieurs polycarbonates selon l'invention, suivie (ii) du mélange, dans un ou plusieurs solvants, du ou desdits polycarbonates, du ou desdits sels de métal alcalin ou alcalino-terreux, du ou desdits matériaux actifs d'électrode, et éventuellement du ou desdits additifs conducteurs et/ou du ou desdits liants additionnels.

L'électrode composite est plus particulièrement formée en surface d'un collecteur de courant sous la forme d'une couche ou d'un film d'électrode.

Le collecteur de courant peut être notamment en aluminium, cuivre, nickel ou fer. Il permet la circulation des électrons, et donc la conduction électronique, dans le circuit extérieur. Il peut s'agir par exemple d'une feuille d'aluminium éventuellement revêtue de carbone.

La formation du film d'électrode procède plus particulièrement *via* les étapes suivantes :

- dépôt de l'encre à la surface du collecteur de courant, en particulier par enduction, notamment par enduction à la racle ; et
- évaporation du ou desdits solvant(s) de l'encre pour former le film d'électrode.

Le dépôt de l'encre peut être réalisé par un procédé d'enduction classique, par exemple, avec une racle, éventuellement avec un système de transfert à épaisseur contrôlée, ou par un système d'enduction par filière en forme de fente.

L'évaporation peut être opérée par séchage, par exemple à l'étuve, à une température comprise entre 50 °C et 120 °C, en particulier d'environ 60 °C, pendant une durée comprise entre 8 heures et 24 heures, suivi par un séchage sous vide à une température comprise entre 60 °C et 120 °C, en particulier d'environ 80 °C, pendant une durée comprise entre 24 heures et 72 heures pour éliminer complètement le ou lesdits solvants.

La couche d'électrode composite ainsi obtenue à l'issue de l'élimination du ou des solvants adhère au collecteur de courant.

L'électrode composite peut plus particulièrement comprendre de 5 à 30 % en poids de (co)polycarbonate(s) selon l'invention, en particulier entre 10 et 25 % en poids et plus particulièrement de 12 à 20 % en poids, par rapport au poids de l'électrode.

Le poids de l'électrode composite s'entend du poids des différents composants de l'électrode (polycarbonate(s), matériau(x) actif(s) d'électrode, éventuellement additif(s) conducteur(s) électronique(s) et liant(s) additionnel(s)), hors conducteur de courant, et une fois le ou lesdits solvants de l'encre évaporé(s). On parle également de poids sec.

Ainsi, le reste de l'électrode composite peut être plus particulièrement formé d'un ou plusieurs matériau(x) actif(s), de préférence d'au moins un additif conducteur électronique et éventuellement d'un ou plusieurs liants additionnels.

Le ou lesdits matériaux actifs peuvent représenter de 60 à 95 % en poids, en particulier de 70 à 90 % en poids, du poids total de l'électrode.

Le ou lesdits additifs conducteurs, lorsqu'ils sont présents, peuvent être mis en œuvre de préférence en une

teneur allant de 1 à 10 % en poids, en particulier de 2 à 8 % en poids, par rapport au poids de l'électrode.

Le ou lesdits liants additionnels, lorsqu'ils sont présents, peuvent être mis en œuvre en une teneur allant de 2 à 7 % en poids, en particulier de 3 à 5 % en poids, par rapport au poids total de l'électrode.

L'électrode composite selon l'invention, formée en surface du collecteur de courant, peut présenter une épaisseur comprise entre 10 $\mu$m et 400 $\mu$m, en particulier entre 20 $\mu$m et 250 $\mu$m.

En particulier, l'électrode composite comprend moins de 1% en poids, par exemple moins de 0,5% en poids, notamment moins de 0,1% en poids, d'électrolyte(s) inorganique(s) par rapport au poids total de l'électrode, voire est dénuée d'électrolyte inorganique. Plus particulièrement, l'électrode composite comprend moins de 1% en poids, par exemple moins de 0,5% en poids, notamment moins de 0,1% en poids, d'électrolyte(s) distinct(s) de l'électrolyte solide à base de (co)polycarbonate(s) mis en œuvre selon l'invention par rapport au poids total de l'électrode.

De préférence, l'électrode composite selon l'invention ne comprend pas d'électrolyte distinct dudit électrolyte solide à base de (co)polycarbonate(s) selon l'invention.

## SYSTEME ELECTROCHIMIQUE

Une électrode composite préparée selon l'invention peut être intégrée dans un système électrochimique.

Le système électrochimique peut être un système générateur, convertisseur ou de stockage électrochimique. Il peut s'agir plus particulièrement d'une batterie primaire ou secondaire, par exemple une batterie au lithium, sodium, magnésium, potassium ou calcium, d'une batterie à flux (« redox-flow battery » en terminologie anglo-saxonne) ; un accumulateur lithium-air, lithium-soufre, etc.

Selon un mode de réalisation particulier, l'électrode composite selon l'invention est mise en œuvre dans une batterie rechargeable, en particulier dans une batterie au lithium, notamment une batterie lithium-ion ou lithium-métal.

Un système électrochimique selon l'invention comporte, d'une manière générale, au moins une électrode positive et une électrode négative entre lesquelles se trouve un électrolyte agissant comme conducteur ionique entre les électrodes positive et négative.

L'électrode composite selon l'invention peut former l'électrode positive et/ou l'électrode négative du système électrochimique. Elle peut former par exemple l'électrode positive. Dans le cas particulier d'une batterie lithium métal, l'électrode composite est l'électrode positive, l'électrode négative étant en lithium métallique.

Dans les autres cas de batteries, l'électrode positive et l'électrode négative peuvent de préférence être toutes deux des électrodes composites selon l'invention.

L'électrode différente d'une électrode composite, éventuellement mise en œuvre conjointement à une électrode composite selon l'invention dans un système électrochimique, peut être de nature conventionnelle.

L'électrolyte entre ladite électrode composite et ladite deuxième électrode d'un système électrochimique selon l'invention peut être de diverses natures. Il s'agit de préférence d'un film d'électrolyte solide.

On désignera plus simplement, dans la suite du texte, par l'expression « électrolyte séparateur », la couche ou film d'électrolyte solide, destinée à faire office de séparateur entre les électrodes positive et négative d'un système électrochimique.

De préférence, l'électrolyte séparateur solide est de même nature que l'électrolyte solide incorporé au niveau de l'électrode composite selon l'invention mise en œuvre pour le système électrochimique.

Autrement dit, l'électrolyte séparateur dans un système électrochimique selon l'invention peut être un film (encore appelé membrane) d'électrolyte solide à base d'un ou plusieurs polycarbonates tels que mis en œuvre pour la préparation de ladite électrode composite. L'électrolyte séparateur peut être un électrolyte polymérique solide (dit encore SPE pour « Solid Polymeric Electrolyte » en terminologie anglo-saxonne) ou un électrolyte solide hybride (HSE pour « Hybrid Solid Electrolyte » en terminologie anglo-saxonne).

Le film d'électrolyte solide, notamment de type électrolyte polymérique solide (SPE) ou électrolyte solide hybride (HSE), faisant office d'électrolyte séparateur dans un système électrochimique selon l'invention, peut ainsi comprendre, voire être formée de :

- au moins un (co)polymère obtenu par ROP d'au moins un carbonate cyclique de cinq à huit chaînons ;

  ladite réaction de (co)polymérisation étant catalysée par l'acide méthane sulfonique ou opérée sous irradiation par micro-ondes en l'absence de catalyseur, en particulier selon les conditions décrites précédemment pour la préparation d'une électrode composite selon l'invention ;
  et dont les fonctions hydroxyles en bout de chaîne sont éventuellement protégées ;

- au moins un sel de métal alcalin ou alcalino-terreux, en particulier tel que décrit précédemment, notamment un sel de lithium ; et
- éventuellement au moins une charge inorganique conductrice du ou des cations alcalins ou alcalino-terreux, en

particulier une charge inorganique conductrice des ions lithium. L'électrolyte séparateur à base du ou desdits polycarbonates peut être préparé à partir du ou desdits polycarbonates selon l'invention, obtenus selon les conditions décrites précédemment, *via* au moins les étapes suivantes :

- mélange, en présence ou non d'un milieu solvant, du ou desdits polycarbonates synthétisés selon l'invention, avec au moins un sel de métal alcalin ou alcalino-terreux, en particulier un sel de lithium et, éventuellement, au moins une charge inorganique conductrice du ou des cations alcalin ou alcalino-terreux, en particulier une charge inorganique conductrice des ions lithium ; et
- formation, en particulier en surface d'un substrat, d'un électrolyte solide, notamment sous la forme d'un film, à partir dudit mélange.

Selon un premier mode de réalisation particulier, l'électrolyte séparateur est un électrolyte polymérique solide (SPE), la préparation dudit électrolyte séparateur comprenant le mélange d'au moins un polycarbonate synthétisé selon l'invention et d'au moins un sel de métal alcalin ou alcalino-terreux, tel que décrit précédemment, par exemple d'un sel de lithium. Selon un autre mode de réalisation particulier, le ou lesdits polycarbonates selon l'invention sont mis en œuvre pour former un électrolyte solide hybride (HSE), la préparation dudit électrolyte séparateur comprenant alors le mélange d'au moins un polycarbonate synthétisé selon l'invention, d'au moins un sel de métal alcalin ou alcalino-terreux, par exemple d'un sel de lithium et, en outre, d'au moins une charge inorganique conductrice du ou des cations alcalin ou alcalino-terreux, en particulier conductrice d'ions lithium.

Les charges conductrices d'ions lithium peuvent être par exemple choisies parmi les oxydes lithiés, tels que $Li_7La_3Zr_2O_{12}$ (LLZO) et $Li_{0.33}La_{0.56}TiO_3$ (LLTO), $Li_{1.3}Al_{0.3}Ti_{1.7}(PO_4)_3$ (LATP), etc.

Il peut encore s'agir de charges choisies parmi :

- les grenats, par exemple choisis parmi le $Li_7La_3Zr_2O_{12}$, le $Li_6La_2BaTa_2O_{12}$, etc. ;
- les phosphates lithiés, par exemple choisi parmi le $Li_3PO_4$, le $LiPO_3$, etc. :
- les borates lithiés, par exemple choisi parmi le $Li_3BO_3$, etc. ;
- les oxynitrures, par exemple choisis parmi $Li_3PO_{4-x}N_{2x/3}$, $Li_4SiO_{4-x}N_{2x/3}$, $Li_4GeO_{4-x}N_{2x/3}$ avec $0<x<4$ ou $Li_3BO_{3-x}N_{2x/3}$ avec $0<x<3$ ;
- les composés lithiés à base d'oxynitrure de lithium et de phosphore (appelés LiPON) ;
- les silicates, par exemple $Li_2Si_2O_5$.

La ou lesdites charges inorganiques conductrices d'ions peuvent être mises en œuvre dans un rapport volumique charge(s) conductrice(s)/polycarbonate(s) compris entre 10/90 et 90/10, en particulier entre 20/80 et 60/40.

Le mélange du ou desdits polycarbonates, du ou desdits sels de métal alcalin ou alcalino-terreux et, éventuellement, de la ou desdits charges inorganiques conductrices, est plus particulièrement opéré dans des conditions permettant une bonne dispersion desdits sels de métal alcalin ou alcalino-terreux et, éventuellement, de la ou desdits charges inorganiques conductrices, au niveau des polycarbonates selon l'invention.

Selon une première variante de réalisation, l'électrolyte séparateur est préparé par voie « solvant ». Dans le cadre de cette variante, le mélange du ou desdits polycarbonates selon l'invention, du ou desdits sels de métal alcalin ou alcalino-terreux et, éventuellement, de la ou desdits charges inorganiques conductrices, est plus particulièrement réalisé dans un milieu solvant. Le milieu solvant peut être formé d'un ou plusieurs solvants organiques polaires. A titre d'exemples, ils peuvent être choisis parmi l'acétone, l'acétonitrile (ACN), le tétrahydrofurane (THF) et leurs mélanges, en particulier l'acétone ou l'acétonitrile. L'électrolyte solide peut être formé par dépôt dudit mélange en surface d'un substrat, par exemple par enduction, suivi de l'évaporation du ou desdits solvants, en particulier pour obtenir un électrolyte ou film « sec ».

Par « sec », on entend signifier que l'électrolyte séparateur ou film d'électrolyte séparateur comprend moins de 1,0 % massique de solvant, en particulier moins de 0,5 % massique et plus particulièrement moins de 0,2 % massique de solvant.

L'évaporation du ou desdits solvants peut être par exemple opérée par séchage à l'étuve à une température comprise entre 50 °C et 120 °C, en particulier d'environ 60 °C, pendant une durée comprise entre 8 heure et 24 heures, suivi par un séchage sous vide à une température comprise entre 60 °C et 120 °C, en particulier entre 80 °C et 100 °C, pendant une durée d'au moins 24 heures, en particulier comprise entre 24 heure et 72 heures, pour éliminer complètement le solvant.

Selon une autre variante de réalisation, l'électrolyte séparateur est préparé en l'absence de solvant, par voie « fondue », notamment par extrusion.

Dans le cadre de cette variante de réalisation, le mélange à l'état fondu peut être plus particulièrement opéré par chauffage à une température supérieure à Tg + 30°C, où Tg est la température de transition vitreuse du (co)polymère. En particulier, le mélange est opéré à une température supérieure ou égale à 30°C, en particulier comprise entre 40°C et 100°C. Le mélange à l'état fondu peut ensuite être mis sous la forme d'un film, supporté par un substrat ou autosupporté,

par toute technique d'extrusion par voie fondue connue de l'homme du métier. Ainsi, selon un mode de réalisation particulièrement avantageux, la préparation de l'électrolyte séparateur s'affranchit totalement de l'usage de solvant. Comme évoqué précédemment, l'électrolyte solide, destiné à faire office d'électrolyte séparateur dans un système électrochimique selon l'invention, peut être préparé en surface d'un substrat adapté.

Selon une première variante de réalisation, le substrat à la surface duquel est formé un film d'électrolyte solide selon l'invention peut être un substrat inerte.

Le substrat peut être de diverses natures. Il peut être en verre, en alumine, en silicone, en polyimide, en polytétrafluoroéthylène (PTFE), en polytéréphtalate d'éthylène (PET), en silicone ou encore en polypropylène.

Le film d'électrolyte solide peut être éventuellement désolidarisé du substrat pour être mis en œuvre au niveau du système électrochimique auquel il est destiné, en particulier transféré à la surface d'au moins une électrode composite selon l'invention.

Selon une autre variante de réalisation, le film d'électrolyte solide peut être formé directement en surface de l'une des électrodes du système électrochimique, par exemple à la surface d'une électrode composite selon l'invention ou de l'électrode en lithium métallique. En particulier, le film d'électrolyte solide peut être formé par la voie solvant telle que décrite précédemment, notamment par enduction du mélange tel que décrit précédemment en surface de l'une des électrodes, par exemple en surface de l'électrode composite, suivie de l'évaporation du ou desdits solvants.

Le film d'électrolyte séparateur peut présenter par exemple une épaisseur comprise entre 20 et 500 $\mu$m, en particulier entre 20 et 250 $\mu$m.

L'invention concerne encore, selon un autre de ses aspects, un ensemble électrode/membrane électrolytique, dans lequel ladite électrode est une électrode composite selon l'invention, telle que définie précédemment ou préparée selon le procédé décrit précédemment, ladite membrane électrolytique étant plus particulièrement un film d'électrolyte solide, notamment de type électrolyte polymérique solide ou électrolyte solide hybride, de préférence à base d'un ou plusieurs (co)polymère(s) tels que mis en œuvre au niveau de ladite électrode composite.

Comme décrit précédemment, selon un mode de réalisation particulier, un ensemble électrode/ membrane électrolytique peut être obtenu en formant un film d'électrolyte solide selon l'invention, comme décrit précédemment, directement en surface de ladite électrode composite selon l'invention.

L'invention va maintenant être décrite au moyen des exemples suivants, donnés bien entendu à titre illustratif et non limitatif de l'invention.

## Exemple

Dans les exemples qui suivent, les produits suivants sont utilisés.

Pour la synthèse des (co)polymères :

Le triméthylène carbonate (TMC, 99,5 %, Actu-All Chemicals) séché sous vide à 40 °C avant son utilisation ; l'$\varepsilon$-caprolactone (CL, 97 %) ; le 3-phénylpropanol (PPA, 98 %) ;

l'éthylène glycol (EG, 99,8%) ; l'octanoate stanneux (Sn(Oct)2, 92,5-100%) ; l'acide méthane sulfonique (MSA, 99,5 %) ; le chlorure de benzoyle (BC, 99%) ; l'isocyanate de p-toluènesulfonyle (TSI, >98%), commercialisés par Sigma Aldrich, sont utilisés tels quels; la triéthylamine (TEA, >99%, Alfa Aesar) est utilisée telle quelle ; le dichlorométhane (DCM,

HPLC grade, Sigma Aldrich) est distillé avec l'hydrure de calcium ($CaH_2$) avant usage ; le méthanol (MeOH, HPLC grade) ; le toluène anhydre, commercialisés par Sigma Aldrich, sont utilisés tels quels.

Pour la préparation des électrolytes :

Les sels de lithium, bis(trifluorométhanesulonyl)imide de lithium (LiTFSI, 99,9 %, Sigma Aldrich) ; bis(fluorosulfonyl)imide de lithium (LiFSI, 99,9 %, Arkema) ; 4,5-dicyano-2-(trifluorométhyl)imidazole (LiTDI, 95 %, Alfa Aesar), sont séchés sous vide pendant 72 heures et stockés dans une boîte à gants remplie avec de l'argon. L'acétone anhydre ($\geq$ 99,8 %) et l'acétonitrile (HPCL grade, $\geq$ 99,9 %), commercialisés par Sigma Aldrich, sont utilisés tels quels. Le céramique conducteur type NASICON $Li_{1.3}Al_{0.3}Ti_{1.7}P_3O_{12}$ (LATP), commercialisé par SCHOTT AG, est utilisé tel quel sauf indication contraire.

Pour la préparation des électrodes :

L'oxyde de lithium-nickel-cobalt-manganèse $LiNi_{0,6}Mn_{0,2}Co_{0,2}O_2$ (NMC622) est séché à 120 °C sous vide pendant 12 heures et stocké dans une boîte à gants remplie avec de l'argon.

Le noir de carbone C65 (Super P), commercialisé par MTI Corporation, est utilisé tel quel.

Le polyfluorure de vinylidène PVdF (Solef® 5130), commercialisé par Solvay, est séché à 60 °C sous vide avant l'utilisation. La N-méthyl-2-pyrrolidone (NMP), commercialisée par Sigma Aldrich, est utilisée telle quelle.

**Exemple 1**

**Synthèse des homopolymères PTCM par ROP en utilisant différentes méthodes de synthèse**

**1.1. Synthèse du PTMC mettant en œuvre l'acide méthane sulfonique comme catalyseur et initiée par un mono-alcool**

Le protocole suivant est suivi pour la synthèse par ROP, mettant en œuvre le catalyseur MSA et initiée par un mono-alcool (le 3-phénylpropanol, PPA), de PTMC, de masse moléculaire théorique de 10 000 g.mol$^{-1}$.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Du DCM (20 mL) est ensuite ajouté pour dissoudre le TMC. La concentration en monomère est d'environ 5 M. Une fois le TMC complément dissous, l'initiateur PPA (136,7 μL, 1,01 mmol, 1 équiv.) et le catalyseur MSA (65,8 μL, 1,01 mmol, 1 équiv.) sont introduits directement dans le milieu réactionnel. Le ratio molaire initiateur/catalyseur est [PPA]/[MSA] de 1/1. Le mélange réactionnel est mélangé pendant 24-48 heures à température ambiante.

Le mélange réactionnel est ensuite versé dans 300 mL de méthanol froid sous forte agitation pour précipiter le polymère et retirer le DMC et le catalyseur MSA. Après deux heures sous agitation, le PTMC, obtenu sous la forme d'une gomme blanche, noté « P10PPA », est lavé plusieurs fois avec du méthanol jusqu'à pH neutre. Le polymère est ensuite séché dans un four à 60 °C pendant 24 heures, puis sous vide à 80 °C pendant 48 heures. La pureté du produit final est vérifiée avec $^1$H RMN ; aucune trace du catalyseur et des produits secondaires n'est visible sur le spectre obtenu.

Le même protocole de synthèse ci-dessus est utilisé pour la synthèse d'un polymère PTMC de masse moléculaire théorique d'environ 50 000 g.mol$^{-1}$, noté « P50PPA », en mettant en œuvre les quantités suivantes de réactifs : TMC (10,000 g, 97,95 mmol ; 488,43 équivalents), PPA (27,0 μL, 0,20 mmol, 1 équiv.) et MSA (13,0 μL, 0,2 mmol, 1 équiv.). Le temps de réaction est augmenté à 48 heures pour atteindre une conversion des monomères élevée.

Le schéma réactionnel pour la synthèse du PTMC catalysée par MSA et initiée par le PPA est représenté ci-dessous.

[Chem 8]

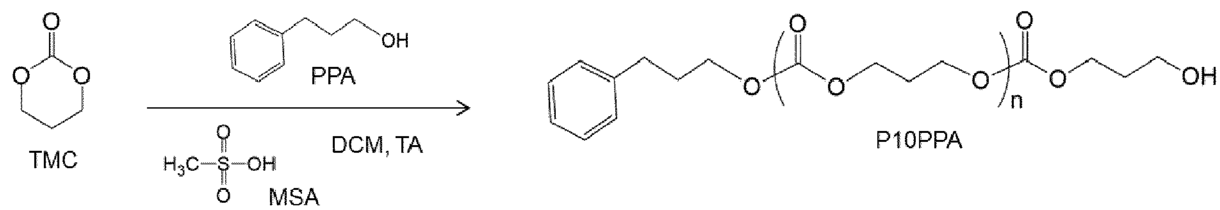


**1.2. Synthèse du PTMC mettant en œuvre l'acide méthane sulfonique comme catalyseur et initié par un diol**

Le protocole suivant est suivi pour la synthèse par ROP, mettant en œuvre le catalyseur MSA et initiée par un diol (l'éthylène glycol, EG), de PTMC, de masse moléculaire théorique de 10 000 g.mol$^{-1}$.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Du DCM (20 mL) est ensuite ajouté pour dissoudre le TMC. La concentration en monomères est d'environ 5 M.

Une fois le TMC complément dissous, l'éthylène glycol (EG, 56,1 μL, 1,01 mmol, 1 équiv.), le catalyseur MSA (65,8 μL, 1,01 mmol, 1 équiv.) sont introduits dans le milieu réactionnel. Le mélange réactionnel est mélangé pendant 48 heures à température ambiante. Ensuite, la même procédure que celle décrite précédemment en 1.1. pour la synthèse du P10PPA est appliquée pour obtenir le polymère noté « P10EG ».

Le même protocole de synthèse est utilisé pour la synthèse de PTMC de masse moléculaire théorique d'environ 50 000 g.mol$^{-1}$, initiée par l'éthylène glycol (noté « P50EG »).

Le schéma réactionnel pour la synthèse du PTMC catalysée par MSA et initiée par l'éthylène glycol est représenté ci-dessous.

[Chem 9]

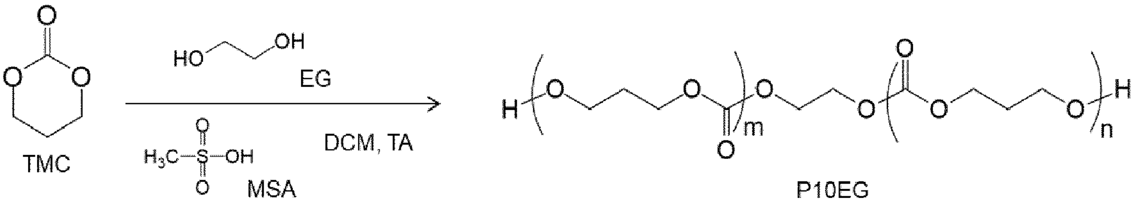


**1.3. Synthèse du PTMC mettant en œuvre l'acide méthane sulfonique comme catalyseur, et en l'absence d'initiateur**

Le protocole suivant est suivi pour la synthèse par ROP, mettant en œuvre le catalyseur MSA et sans initiateur, de PTMC, de masse moléculaire théorique de 10 000 $g.mol^{-1}$.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Du DCM (20 mL) est ensuite ajouté pour dissoudre le TMC. La concentration en monomère est d'environ 5 M.

Une fois le TMC complément dissous, le catalyseur MSA (65,8 μL, 1,01 mmol, 1 équiv.) est introduit directement dans le milieu réactionnel. Le mélange réactionnel est mélangé pendant 48 heures à température ambiante. Ensuite, le même protocole que celui décrit précédemment au point 1.2. pour la synthèse du P10EG est appliquée pour obtenir le polymère, noté « PxMSA ». Dans cette voie de synthèse, la masse molaire du polymère est incontrôlable.

Le schéma réactionnel pour la synthèse du PTMC catalysée par MSA et sans amorceur est représenté ci-dessous.

[Chem 10]

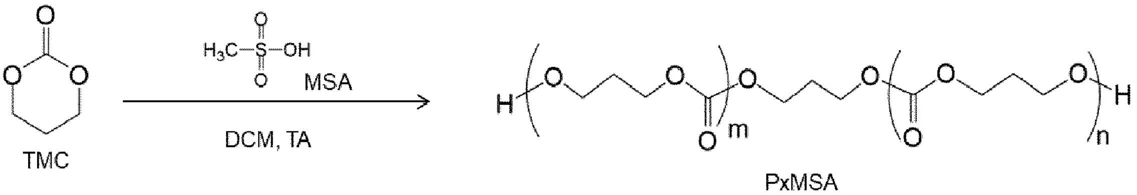


**1.4. Synthèse du PTMC par ROP sous irradiation micro-ondes, initiée par le PPA, sans catalyseur, en présence d'un milieu solvant**

Le protocole suivant est suivi pour la synthèse par ROP, en milieu solvant, sous irradiation micro-ondes, sans catalyseur, et initiée par un mono-alcool (le PPA), de PTMC, de masse moléculaire théorique de 10 000 $g.mol^{-1}$.

Le monomère TMC (10,000 g ; 97,95 mmol, 96,62 équivalents) et l'initiateur PPA (136,7 μL, 1,01 mmol, 1 équiv.) sont introduits dans un réacteur XP1500 PTFE dans une boîte à gants remplie avec de l'argon. Une petite quantité de toluène anhydre (1 mL/10 g TMC) est ajoutée au mélange réactionnel avant application de l'irradiation micro-onde. Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 60 minutes, avec une contrainte de puissance limité à $P_{max}$ = 60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation. Après 4 heures, le PTMC, obtenu sous la forme d'une gomme blanche, noté « MW10PPA-T », est séché sous vide à 80 °C pendant 48 heures.

Le même protocole de synthèse est suivi pour la synthèse d'un polymère PTMC de masse moléculaire théorique d'environ 50 000 $g.mol^{-1}$, noté « MW50PPA-T », en mettant en œuvre les quantités suivantes de réactifs : TMC (10,000 g, 97,95 mmol ; 488,43 équivalents) et PPA (27,0 μL, 0,20 mmol, 1 équiv.).

Le schéma réactionnel pour la synthèse du MW10PPA-T est représenté ci-dessous.

[Chem 11]

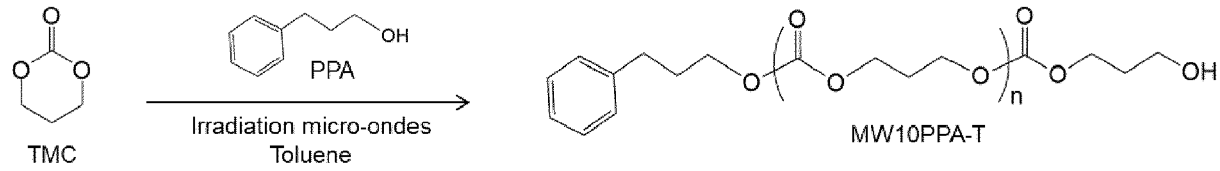


**1.5. Synthèse du PTMC par ROP sous irradiation micro-ondes, initiée par le PPA, sans catalyseur, et en l'absence de solvant**

Le protocole suivant est suivi pour la synthèse en masse (sans milieu solvant) par ROP, sous irradiation micro-ondes, sans catalyseur, et initiée par un mono-alcool (le PPA), de PTMC, de masse moléculaire théorique de 10 000 $g.mol^{-1}$.

Le monomère TMC (10,000 g ; 97,95 mmol, 96,62 équivalents) et l'initiateur PPA (136,7 $\mu$L, 1,01 mmol, 1 équiv.) sont introduits dans un réacteur XP1500 PTFE dans une boîte à gants remplie avec de l'argon. Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 60 minutes, avec une contrainte de puissance limité à $P_{max}$ = 60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation. Après 4 heures, le PTMC, obtenu sous la forme d'une gomme blanche, noté « MW10PPA », est séché sous vide à 80 °C pendant 48 heures.

Le même protocole de synthèse est suivi pour la synthèse d'un polymère PTMC de masse moléculaire théorique d'environ 50 000 $g.mol^{-1}$, noté « MW50PPA », en mettant en œuvre les quantités suivantes de réactifs : TMC (10,000 g, 97,95 mmol ; 488,43 équivalents) et PPA (27,0 $\mu$L, 0,20 mmol, 1 équiv.).

Le schéma réactionnel pour la synthèse du MW10PPA est représenté ci-dessous.

[Chem 12]

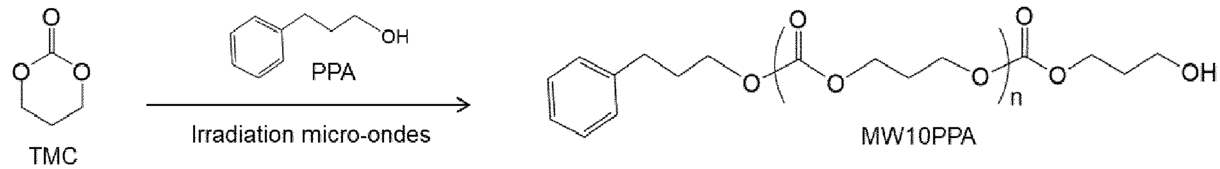


**1.6. Synthèse du PTMC par ROP sous irradiation micro-ondes, sans ajout d'initiateur, sans catalyseur, sans solvant**

Le protocole suivant est suivi pour la synthèse en masse (sans milieu solvant) par ROP, sous irradiation micro-ondes, sans catalyseur, de PTMC, de masse moléculaire théorique de 10 000 $g.mol^{-1}$. Aucun initiateur n'est ajouté au milieu réactionnel de départ. La ROP est initié par l'eau résiduelle apportée par le monomère.

Le monomère TMC (10,000 g ; 97,95 mmol) est introduit dans un réacteur XP1500 PTFE dans une boîte à gants remplie avec de l'argon. Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 60 ou 120 minutes, avec une contrainte de puissance limitée à $P_{max}$ = 60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation. Après 4 heures, le PTMC, obtenu sous la forme d'une gomme blanche, noté « MWx », est séché sous vide à 80 °C pendant 48 heures.

Le schéma réactionnel pour la synthèse du MWx est représenté ci-dessous.

[Chem 13]

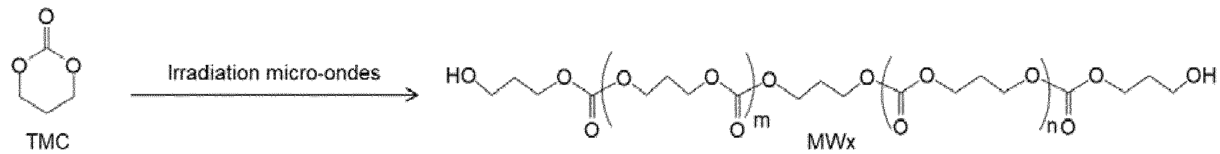


**1.7. Protection du PTMC portant une fonction hydroxyle en bout de chaîne à l'aide de différents agents de protection**

Dans une procédure typique, P10PPA (10,00 g, 0,001 mol, 1 équiv.) a été introduit dans un ballon à fond rond à un col de 100 ml, équipé d'un agitateur magnétique dans une boîte à gants remplie d'argon. Ensuite, le DCM distillé (20 ml) a été ajouté pour dissoudre le polymère. Pour la protection avec le chlorure de benzoyle (BC), TEA (1,395 ml, 0,01 mol, 10 équiv.) et BC (1,162 ml, 0,01 mol, 10 équiv.) ont été introduits et la réaction a été laissée se dérouler à température ambiante pendant 48 heures. Pour la protection avec l'isocyanate de p-toluènesulfonyle (TSI), le TSI (1,528 ml, 0,01 mol, 10 équiv.) a été introduit et la réaction a été laissée se dérouler à température ambiante pendant 48 heures.

Ensuite, le mélange réactionnel a été introduit goutte à goutte dans 300 ml de méthanol pour précipiter le polymère et réagir avec l'agent protecteur résiduel. Le polymère obtenu a été lavé avec du méthanol jusqu'à ce qu'aucune trace des produits secondaires (benzoate de méthyle, uréthane, etc.) ne soit détectée par RMN $^1$H. Les produits finaux, notés P10PPA-BC et P10PPA-TSI, dont les fonctions hydroxyles sont respectivement protégées avec le chlorure de benzoyle ou l'isocyanate de p-toluènesulfonyle, ont été séchés sous vide à 80 °C pendant 48 heures et stockés dans une boîte à gants.

Le même protocole avec le même rapport molaire en agent de protection mis en œuvre est utilisé pour la protection des autres PTMCs (P50PPA, MW10PPA-T, MW50PPA-T, MW10PPA, MW50PPA) portant une fonction OH en bout de chaîne.

Le schéma réactionnel pour la protection du P10PPA est représenté ci-dessous.

[Chem 14]

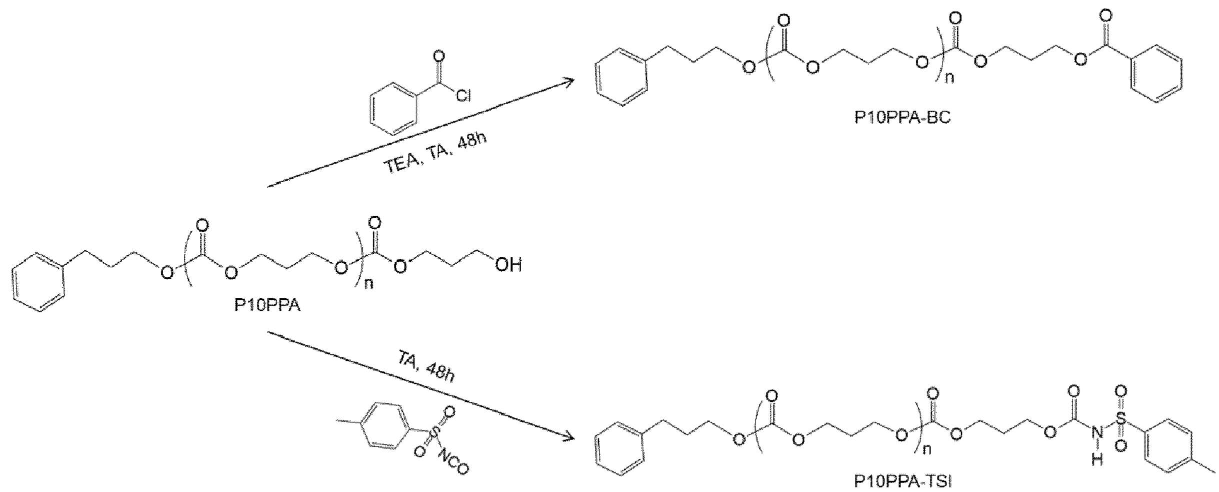


**1.8. Protection du PTMC portant deux fonctions OH en bout de chaîne à l'aide de différents agents de protection**

Dans une procédure typique, P10EG (10,00 g, 0,001 mol, 1 équiv.) a été introduit dans un ballon à fond rond à un col de 100 ml équipé d'un agitateur magnétique dans une boîte à gants remplie d'argon. Ensuite, le DCM distillé (20 ml) a été ajouté pour dissoudre le polymère. Pour la protection avec le chlorure de benzoyle (BC), TEA (2,790 ml, 0,02 mol 20 équiv.) et BC (2,324 ml, 0,02 mol, 20 équiv.) ont été introduits et la réaction a été laissée se dérouler à température ambiante pendant 48 heures. Pour la protection avec l'isocyanate de p-toluènesulfonyle (TSI), le TSI (3,056 ml, 0,02 mol, 20 équiv.) a été introduit et la réaction a été laissée se dérouler à température ambiante pendant 48 heures.

Ensuite, le mélange réactionnel a été introduit goutte à goutte dans 300 ml de méthanol pour précipiter le polymère et réagir avec l'agent protecteur résiduel. Le polymère obtenu a été lavé avec du méthanol jusqu'à ce qu'aucune trace des produits secondaires (benzoate de méthyle, uréthane, etc.) ne soit détectée par RMN $^1$H. Les produits finaux,

notés P10EG-BC et P10EG-TSI, dont les fonctions hydroxyles sont respectivement protégées avec le chlorure de benzoyle ou l'isocyanate de p-toluènesulfonyle, ont été séchés sous vide à 80 °C pendant 48 heures et stockés dans une boîte à gants.

Le même protocole avec le même rapport molaire en agent de protection mis en œuvre est utilisé pour la protection des autres PTMCs (P50EG, MWx) portant deux fonctions hydroxyles en bout de chaîne.

Le schéma réactionnel pour la protection du P10EG est représenté ci-dessous.

[Chem 15]

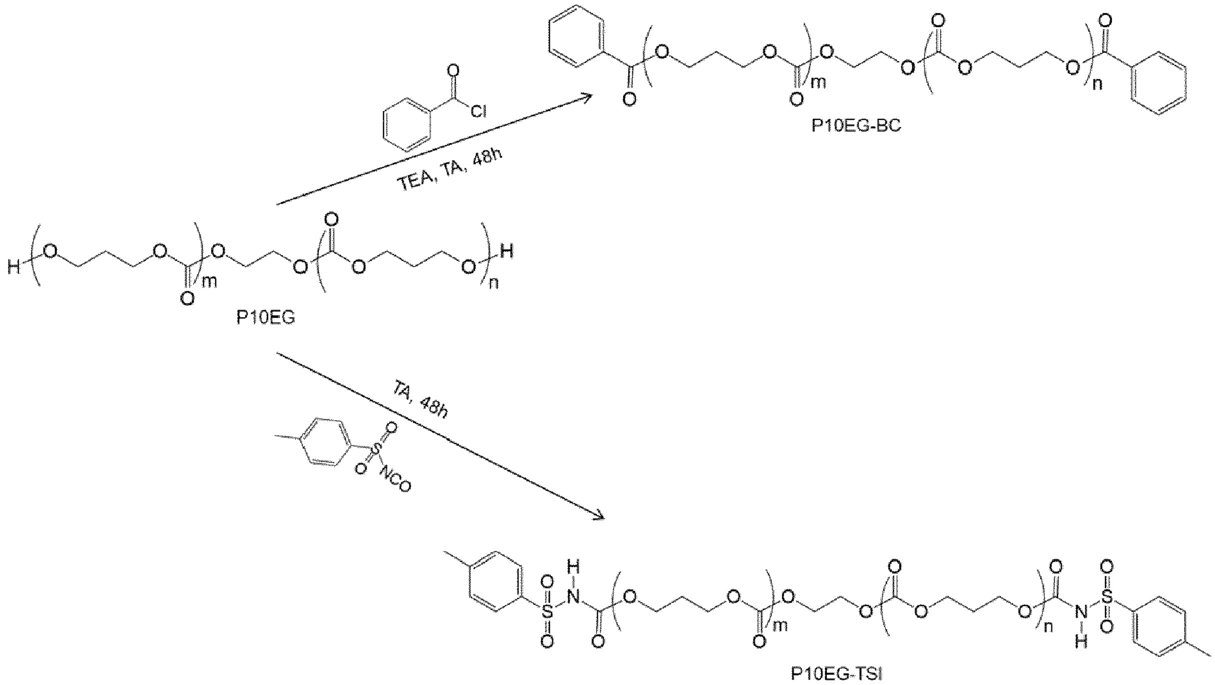


## 1.9. Synthèse du PTMC mettant en œuvre $Sn(Oct)_2$ comme catalyseur (*comparatif*)

Le protocole suivant est suivi pour la synthèse par ROP, mettant en œuvre le catalyseur Sn(Oct)2 et initiée par un mono-alcool (le PPA), de PTMC, de masse moléculaire théorique de 10 000 $g.mol^{-1}$.

Le monomère TMC (10,000 g, 97,95 mmol, 96,62 équivalents), l'initiateur PPA (136,7 μL, 1,01 mmol, 1 équiv.) et 1 M de solution de catalyseur Sn(Oct)2 dissous dans du toluène anhydre (20,0 μL, 2,0 x $10^{-2}$ mmol ; 0,02 équiv.) sont introduits dans un ballon à fond rond à col unique de 100 mL, en opérant dans une boîte à gants remplie avec de l'argon. Le ratio molaire monomère/catalyseur [TMC]/[Sn(Oct)2] est d'environ 5000/1. Le ballon est fermé, sorti à l'extérieur et chauffé à 130°C à l'aide d'un bain d'huile sous forte agitation. La température du bain est maintenue à 130°C pendant 24 heures.

Puis le mélange réactionnel est refroidi à température ambiante et une quantité minimale de DCM est ajoutée pour dissoudre le polymère PTMC. La solution de polymère est ensuite versée dans 300 mL de méthanol froid sous forte agitation pour précipiter le polymère.

La masse de polymère, se présentant sous la forme d'une gomme blanche, est lavée plusieurs fois avec du méthanol, puis séchée dans un four à 60°C suivi d'un séchage sous vide à 80°C pendant 48 heures pour obtenir le produit final, noté « S10PPA ».

Le même protocole de synthèse est suivi pour la synthèse d'un polymère PTMC de masse moléculaire théorique d'environ 50 000 $g.mol^{-1}$, noté « S50PPA », en mettant en œuvre les quantités suivantes de réactifs : TMC (10,000 g, 97,95 mmol ; 488,43 équivalents), PPA (27,0 μL, 0,20 mmol, 1 équiv.) et une solution 1 M de catalyseur Sn(Oct)2 dissous dans du toluène anhydre (20,0 μL, 2,0 x $10^{-2}$ mmol, 0,1 équiv.). Le ratio molaire monomère/catalyseur est d'environ 5000/1. Le temps de réaction est augmenté à 48 heures pour atteindre une conversion de monomères élevée.

Le schéma réactionnel pour la synthèse du PTMC est représenté ci-dessous.

[Chem 16]

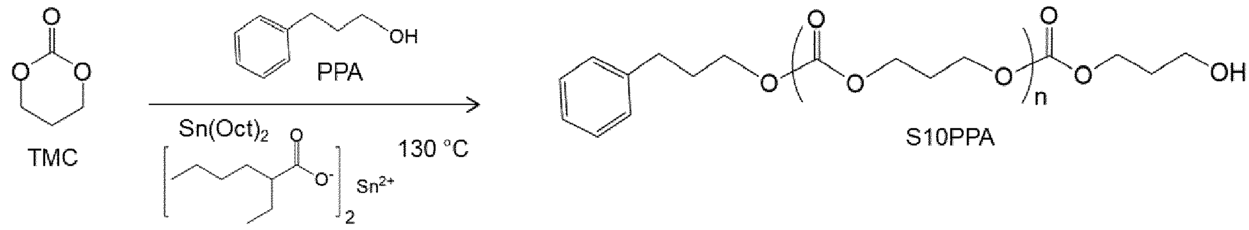


Résultats

*Méthodes de caractérisation des polymères*

Spectroscopie RMN : La structure chimique des monomères et polymères est confirmée par spectroscopie RMN sur un spectromètre RMN Bruker Ascend™ 400.

Mesure du poids moléculaire (Mw) : Les analyses par SEC-MALS (combinaison des techniques de chromatographie d'exclusion stérique et de diffusion de lumière statique) sont conduites sur un appareillage Viscotek GPCmax (VE 2001 Module) et les données sont traitées par le logiciel OmniSEC, commercialisé par Malvern Panalytical. Les mesures sont opérées à température ambiante et le tétrahydrofurane (THF) est utilisé comme solvant avec une vitesse de flux de 1 $mL.min^{-1}$. Les solutions de polymères (à environ 1 $mg.mL^{-1}$) sont filtrées à travers un filtre à base de PTFE Millipore de 0,20 μm. La calibration est effectuée en utilisant des étalons de polystyrène.

Propriétés thermiques : Les mesures DSC (« Differential Scanning Calorimetry ») sont réalisées sur des films secs de ionomères en utilisant un système Chip-DSC 100 (Linseis) sous flux d'argon de 50 mL/min avec une vitesse de chauffe de $10°C.min^{-1}$ de -100 à 100°C. La température de transition vitreuse (Tg) est déterminée comme la valeur du point médian au deuxième balayage.

Résultats

Les résultats des analyses des polymères PTMC obtenus par différentes méthodes de synthèse sont présentés dans le tableau 1 suivant.

[Tableau 1]

| Echantillon | Rendement %)[a] | $M_{n-RMN}$ (Da)[b] | $M_{n-SEC}$ (Da)[c] | $M_{w-SEC}$ (Da)[c] | PDI[d] |
|---|---|---|---|---|---|
| S10PPA (*hors invention*) | 95±3 | 9700±1000 | 8700±500 | 21500±3000 | 2,45±0,05 |
| S50PPA (*hors invention*) | 95±3 | 24600±2000 | 24000±1500 | 55000±2000 | 2,31±0,05 |
| P10PPA | 97±2 | 8400±500 | 8900±1000 | 10700±1400 | 1,19±0,02 |
| P50PPA | 97±2 | 24900±2000 | 19900±1700 | 24600±1600 | 1,24±0,02 |
| P10EG | 99±2 | 8000±500 | 11101±1000 | 12626±1500 | 1,14±0,02 |
| PxMSA | 93±2 | // | 1940±2000 | 20800±2000 | 1,07±0,02 |
| MW10PPA-T | 95±3 | 8900±1000 | 8100±1000 | 15500±3000 | 1,91±0,05 |
| MW50PPA-T | 95±3 | 21300±3000 | 22800±3000 | 50400±3000 | 2,21±0,05 |
| MW10PPA | 88±3 | 9500±1000 | 8700±1000 | 21800±2000 | 2,50±0,05 |
| MW50PPA | 90±3 | 26600±3000 | 24000±3000 | 46900±3000 | 1,96±0,05 |
| MWx | 90±3 | 10100±2000 | 13000±1500 | 23300±2000 | 1,79±0,03 |

[a]Le rendement de conversion est calculé à partir de la masse de polymère PTMC obtenu ($m_{PTMC}$) et des masses en monomère TMC et, éventuellement en initiateur PPA ou EG de départ, selon la formule

[Math 1]

$$\text{yield}(\%) = m_{PTMC} \times 100/(m_{TMC} + m_{PPA \text{ ou } EG})$$

[b]La masse moléculaire moyenne en nombre est calculée à partir de l'analyse RMN $^1H$ ;
[c]La masse moléculaire moyenne est mesurée par SEC ;
[d]Indice de polydispersité PDI=$M_w/M_n$

Les analyses RMN $^1H$ des polymères PTMC synthétisés par ROP et initiés par PPA en utilisant le catalyseur MSA (P10PPA), le catalyseur Sn(Oct)2 (S10PPA), ou sans catalyseur à l'aide de l'irradiation par micro-ondes en présence de toluène (MW10PPA-T), sont représentées en figure 1.

L'ensemble des spectres RMN $^1H$ des polymères synthétisés présentent deux pics principaux à 4,20 et 2,03 ppm correspondant au proton des groupes $-CH_2-O-$ et -CH2-, respectivement, de l'unité TMC.

Le spectre RMN $^1H$ du PTMC synthétisé à l'aide du catalyseur Sn(Oct)2 laisse apparaître un pic à 3,43 ppm. Ce pic témoigne de la présence de liaisons éther ($-CH_2-O-CH_2-$) à cause de réactions indésirables de décarboxylation à haute température en présence du Sn(Oct)2 ([11], [12]).

En revanche, ce pic n'est pas détecté dans le spectre RMN $^1H$ du PTMC synthétisé par ROP avec le catalyseur MSA selon l'invention. A titre de comparaison, le rapport d'intégration du pic à 3,43 ppm pour celui du pic à 4,20 ppm dans S10PPA est de 16,9/1000 alors qu'aucune trace du pic à 3,43 ppm n'a été détectée dans les spectres de P10PPA (0/1000). Si l'on considère qu'une liaison éther dérive de la décarboxylation d'une unité TMC, la concentration molaire de liaison éther dans S10PPA est d'environ 1,67 % tandis que celle de P10PPA est de 0,00 %.

Le pic à 3,43 ppm apparaît aussi dans le spectre RMN $^1H$ du PTMC synthétisé à l'aide de l'irradiation par micro-ondes. Cependant, l'intensité de ce pic est très faible. A titre de comparaison, le rapport d'intégration du pic à 3,43 ppm pour celui du pic à 4,20 ppm dans MW10PPA-T est de 5,7/1000, qui correspondant à une concentration molaire de liaison éther de 0,57 %.

La polymérisation à l'aide d'un catalyseur MSA montre une contrôlabilité plus élevée (PDI plus proche de 1, moins de défaut dans la structure chimique), une purification plus facile, une consommation d'énergie inférieure et est plus aisément transposable pour une production à grande échelle par rapport à la synthèse conventionnelle utilisant le catalyseur Sn(Oct)2.

Les analyses RMN $^1H$ des polymères PTMC « protégés » de masse moléculaire moyenne Mn d'environ 10 000 $g.mol^{-1}$ à l'aide de l'agent de protection chlorure de benzoyle (P10PPA-BC) et isocyanate de p-toluènesulfonyle (P10PPA-TSI), sont représentées en figure 2.

L'apparition de nouveaux pics correspondant aux agents protecteurs dans les spectres RMN $^1H$ des PTMC protégées révèle que les protections ont été réalisées avec succès en utilisant du chlorure de benzoyle et de l'isocyanate de p-toluènesulfonyle. En particulier, trois nouveaux pics, qui apparaissent à 8,03, 7,56 et 7,43 ppm (pics 11, 12 et 13) sur la figure 2(a), sont attribués aux trois protons sur le cycle aromatique du chlorure de benzoyle. De plus, en raison de l'effet de retrait d'électrons du groupe benzoate attaché à la chaîne polymère, trois protons à la fin de la chaîne polymère se déplacent vers des ppm plus élevés (pics 8, 9 et 10 sur la figure 2(a)).

De même, deux nouveaux pics apparaissant à 7,89 et 7,34 ppm (pic 12 et 13 sur la figure 2(b)) correspondent aux deux protons sur le cycle aromatique du p-toluènesulfonylisocyanate. De plus, un très petit pic apparaissant à 8,16 ppm (pic 11 sur la figure 2(b)) dérive du proton du groupe uréthane du produit de couplage. Enfin, un singulet apparaissant à 2,44 ppm dérive du groupe méthyle fixé sur le cycle aromatique de l'agent TSI. Les spectres RMN $^1H$ révèlent que les réactions de couplage ont été réalisées avec succès.

## Exemple 2

**Synthèse des copolymères PTCM-PCL par ROP en utilisant différente méthodes de synthèse**

### 2.1. Synthèse du copolymère PTMC-PCL mettant en œuvre l'acide méthane sulfonique comme catalyseur et initié par un mono-alcool

Le protocole suivant est suivi pour la synthèse par ROP, mettant en œuvre le catalyseur MSA et initiée par un mono-alcool (le 3-phénylpropanol, PPA), de PTMC-PLC, de masse moléculaire théorique de 10 000 $g.mol^{-1}$.

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon. Ensuite, du DCM (20 mL) est ajouté pour dissoudre le TMC. La concentration en monomères est d'environ 5 M. Une fois le TMC complément dissous, l'initiateur PPA (136,0 μL, 1,01 mmol, 1 équiv.) et le

catalyseur MSA (65,5 µL, 1,01 mmol, 1 équiv.) sont introduits directement dans le milieu réactionnel. Le ratio molaire initiateur/catalyseur est [PPA]/[MSA] de 1/1. Le mélange réactionnel est mélangé pendant 24-48 heures à température ambiante.

Le mélange réactionnel est ensuite versé dans 300 mL de méthanol froid sous forte agitation pour précipiter le copolymère et retirer le DCM et le catalyseur MSA. Après deux heures sous agitation, le copolymère obtenu, sous la forme d'une gomme blanche, noté « G10PPA », est lavé plusieurs fois avec du méthanol jusqu'à pH neutre. Le copolymère est ensuite séché dans un four à 60 °C pendant 24 heures, puis sous vide à 80 °C pendant 48 heures.

Le même protocole de synthèse ci-dessus est utilisé pour la synthèse d'un copolymère PTMC-PCL « non-protégé » de masse moléculaire théorique d'environ 50 000 $g.mol^{-1}$, noté « G50PPA », en mettant en œuvre les quantités suivantes de réactifs : TMC (5,702 g ; 55,85 mmol, 279,85 équivalents), CL (4,250 g, 37,23 mmol, 186,56 équiv.), PPA (26,9 µL, 0,20 mmol, 1 équiv.) et MSA (13,0 µL, 0,20 mmol, 1 équiv.). Le temps de réaction est augmenté à 48 heures pour atteindre une conversion de monomères élevée.

Le schéma réactionnel pour la synthèse des copolymères PTMC-PCL initiée par le PPA est représenté ci-dessous.

[Chem 17]

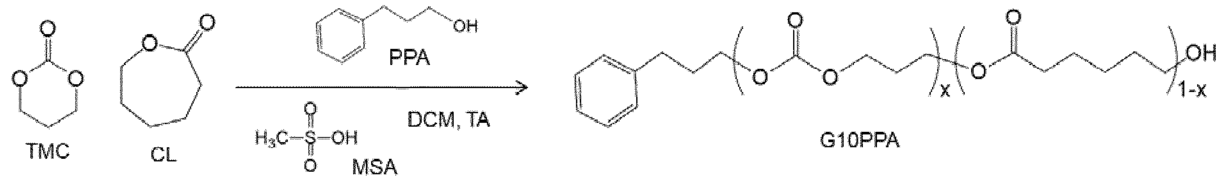


2.2. Synthèse du copolymère PTMC-PCL par **ROP** sous irradiation micro-ondes, initiée par le PPA, sans catalyseur, en présence **d'un** milieu solvant

Le protocole suivant est suivi pour la synthèse par ROP, en milieu solvant, sous irradiation micro-ondes, sans catalyseur, et initiée par un mono-alcool (le PPA), de PTMC-PCL, de masse moléculaire théorique de 10 000 $g.mol^{-1}$.

Les monomères TMC (6,037 g ; 59,14 mmol, 55,36 équivalents) et CL (4,500 g, 39,43 mmol, 36,91 équiv.) et l'initiateur PPA (144,0 µL, 1,07 mmol, 1 équiv.) sont introduits dans un réacteur XP1500 PTFE dans une boîte à gants remplie avec de l'argon. Une petite quantité de toluène anhydre (1 mL/10 g TMC) est ajoutée au mélange réactionnel avant application de l'irradiation micro-onde. Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 120 minutes, avec une contrainte de puissance limité à $P_{max}$=60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation. Après 4 heures, le copolymère PTMC-PCL, obtenu sous la forme d'une gomme blanche, noté « M10PPA-T », est séché sous vide à 80 °C pendant 48 heures.

Le même protocole de synthèse est suivi pour la synthèse d'un polymère PTMC60-PCL40 de masse moléculaire théorique d'environ 50 000 $g.mol^{-1}$, noté « M50PPA-T », en mettant en œuvre les quantités suivantes de réactifs : TMC (6,037 g, 59,14 mmol ; 279,85 équivalents), CL (4,500 g, 39,43 mmol, 186,56 equiv.) et PPA (28,5 µL, 0,21 mmol, 1 équiv.).

Le schéma réactionnel pour la synthèse des copolymères M10PPA-T est représenté ci-dessous.

[Chem 18]

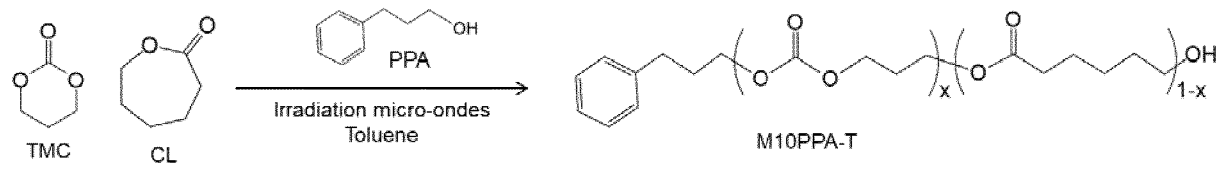


**2.3. Synthèse du copolymère PTMC-PCL par ROP sous irradiation micro-ondes, initiée par PPA, sans catalyseur, en l'absence de solvant**

Le protocole suivant est suivi pour la synthèse en masse (sans milieu solvant) par ROP, sous irradiation micro-ondes, sans catalyseur, et initiée par un mono-alcool (le PPA), de PTMC-PCL, de masse moléculaire théorique de 10

000 g.mol-1.

Les monomères TMC (6,037 g ; 59,14 mmol, 55,36 équivalents) et CL (4,500 g, 39,43 mmol, 36,91 équiv.) et l'initiateur PPA (144,0 µL, 1,07 mmol, 1 équiv.) sont introduits dans un réacteur XP1500 PTFE dans une boîte à gants remplie avec de l'argon. Le réacteur est fermé, sorti et soumis à une irradiation par micro-ondes en utilisant un four à micro-ondes CEM MARS (2,45 GHz).

Un programme de température contrôlée permet d'atteindre une température spécifique de 140 °C avec une rampe de 10 minutes et de conserver cette température pendant 120 minutes, avec une contrainte de puissance limité à $P_{max}$=60 W. Ensuite, la température de réaction est réduite à température ambiante et le polymère dissous dans une quantité minimale de DCM, puis précipité dans 300 mL de méthanol sous forte agitation pour retirer les monomères n'ayant pas réagi. Le méthanol est renouvelé après 2 heures sous agitation.

Après 4 heures, le copolymère PTMC-PCL, obtenu sous la forme d'une gomme blanche, noté « M10PPA », est séché sous vide à 80 °C pendant 48 heures.

Le même protocole de synthèse est suivi pour la synthèse d'un copolymère PTMC60-PCL40 de masse moléculaire théorique d'environ 50 000 g.mol-1, noté « M50PPA », en mettant en œuvre les quantités suivantes de réactifs : TMC (6,037 g, 59,14 mmol ; 279,85 équivalents), CL (4,500 g, 39,43 mmol, 186,56 equiv.) et PPA (28,5 µL, 0,21 mmol, 1 équiv.).

Le schéma réactionnel pour la synthèse des copolymères M10PPA est représenté ci-dessous.

[Chem 19]

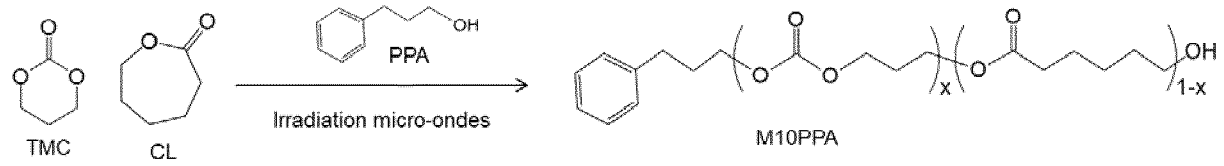


## 2.4. Protection du copolymère PTMC-PCL à l'aide de différents agents de protection

Dans une procédure typique, G10PPA (10,00 g, 0,001 mol, 1 équiv.) a été introduits dans un ballon à fond ronde à un col de 100 ml équipé d'un agitateur magnétique dans une boîte à gants remplie d'argon. Ensuite, le DCM distillé (20 ml) a été ajouté pour dissoudre le polymère. Pour la protection avec le chlorure de benzoyle (BC), TEA (1,395 ml, 0,01 mol, 10 équiv.) et BC (1,162 ml, 0,01 mol, 10 équiv.) ont été introduits et la réaction a été laissée se dérouler à température ambiante pendant 48 heures. Pour la protection avec l'isocyanate de p-toluènesulfonyle (TSI), le TSI (1,528 ml, 0,01 mol, 10 équiv.) a été introduit et la réaction a été laissée se dérouler à température ambiante pendant 48 heures.

Ensuite, le mélange réactionnel a été introduit goutte à goutte dans 300 ml de méthanol pour précipiter le polymère et réagir avec l'agent protecteur résiduel. Le polymère obtenu a été lavé avec du méthanol jusqu'à ce qu'aucune trace des produits secondaires (benzoate de méthyle, uréthane, etc.) ne soit détectée par RMN $^1$H. Les produits finaux, notés G10PPA-BC et G10PPA-TSI, dont les fonctions hydroxyles sont respectivement protégées avec le chlorure de benzoyle ou l'isocyanate de p-toluènesulfonyle, ont été séchés sous vide à 80 °C pendant 48 heures et stockés dans une boîte à gants.

Le même protocole avec le même rapport molaire en agent de protection mis en œuvre est utilisé pour la protection des autres copolymères (G50PPA, M10PPA-T, M50PPA-T, M10PPA, M50PPA).

Le schéma réactionnel pour la protection du P10PPA est représenté ci-dessous.

[Chem 20]

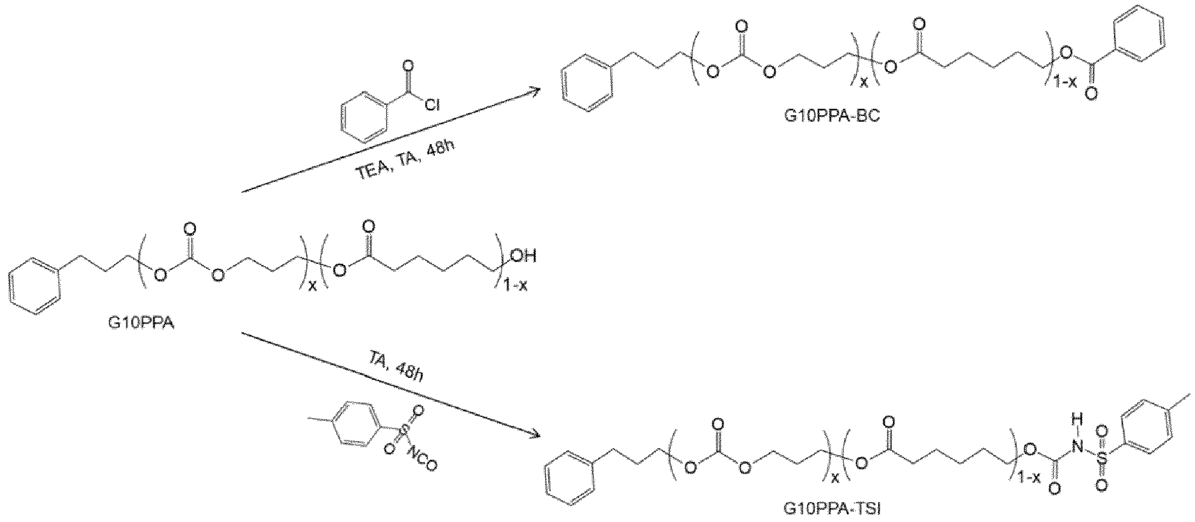


**2.5. Synthèse du copolymère PTMC-PCL mettant en œuvre $Sn(Oct)_2$ comme catalyseur *(comparatif)***

Le protocole suivant est suivi pour la synthèse par ROP, mettant en œuvre le catalyseur Sn(Oct)2 et initiée par un mono-alcool (le PPA), du copolymère PTMC-PCL, de masse moléculaire théorique de 10 000 g.mol$^{-1}$.

Les monomères TMC (6,037 g, 59,14 mmol, 55,36 équivalent) et CL (CL, 4,500 g, 39, 43 mmol, 36,91 équiv.), l'initiateur PPA (144,0 µL, 1,07 mmol, 1 équiv.) et 1 M de solution de catalyseur Sn(Oct)2 dissous dans du toluène anhydre (19,7 µL, 2,0 $\times$ 10$^{-2}$ mmol, 0,02 équiv.) sont introduits dans un ballon à fond rond à col unique de 100 mL dans une boîte à gants remplie avec de l'argon. Le ratio molaire monomères/catalyseur est [TMC + CL]/[Sn(Oct)2] est d'environ 5000/1. Le ballon est fermé, sorti à l'extérieur et chauffé à 130 °C à l'aide d'un bain d'huile sous forte agitation pendant 24 heures.

Puis le mélange réactionnel est refroidi à température ambiante et une quantité minimale de DCM est ajoutée pour dissoudre le polymère PTMC. Ensuite, la solution de copolymère est versée dans 300 mL de méthanol froid sous forte agitation pour précipiter le polymère.

La masse de polymère, se présentant sous la forme d'une gomme blanche, est lavé plusieurs fois avec du méthanol, puis séchée dans un four à 60°C suivi d'un séchage sous vide à 80°C pendant 48 heures pour obtenir le produit final, noté « R10-PPA ».

Le même protocole de synthèse est suivi pour la synthèse du copolymère PTMC60-PCL40 de masse moléculaire théorique de 50 000 g.mol$^{-1}$, noté « R50-PPA », en mettant en œuvre les quantités suivantes de réactifs : TMC (6,037 g, 59,14 mmol ; 279,85 équivalents), CL (4,500 g, 39,43 mmol, 186,56 équiv.), PPA (28,5 µL, 0,21 mmol, 1 équiv.) et une solution 1 M de catalyseur Sn(Oct)2 (19,7 µL, 2,0 $\times$ 10$^{-2}$ mmol, 0,093 équiv.). Le ratio molaire monomères/catalyseur [TMC + CL]/[Sn(Oct)2] est d'environ 5000/1. Le temps de réaction est augmenté à 48 heures pour atteindre une conversion de monomères élevée.

Le schéma réactionnel pour la synthèse du copolymère PTMC-PCL en utilisant le catalyseur Sn(Oct)2 initié par PPA est représenté ci-dessous.

[Chem 21]

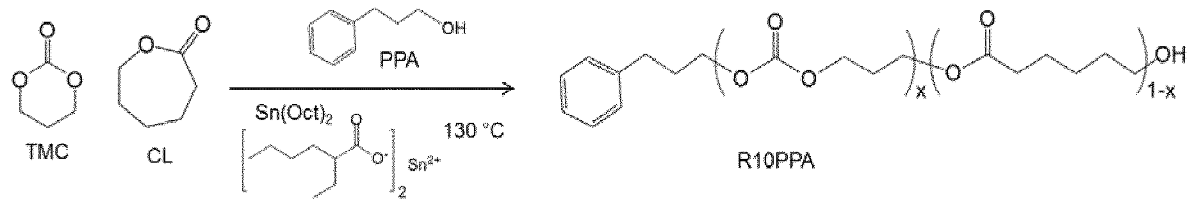


Résultats Les résultats des analyses des copolymères PTMC-PCL obtenus sont présentés dans le tableau 2 suivant.

[Tableau 2]

| Echantillon | Rendement (%)[a] | [TMC]/[CL][b] | $M_{n\text{-}SEC}$ (Da)[c] | $M_{w\text{-}SEC}$ (Da)[c] | PDI[d] |
|---|---|---|---|---|---|
| R10-PPA *(hors invention)* | 92±2 | 1,4 | I5600±1500 | 23800±2000 | 1,53±0,03 |
| R50-PPA *(hors invention)* | 92±2 | 1,4 | 31300±2500 | 49200±2500 | 1,57±0,03 |
| G10-PPA | 92±2 | 1,5 | 15500±1000 | 20400±1500 | 1,30±0,02 |
| G50-PPA | 92±2 | 1,4 | 24200±1500 | 30600±2500 | 1,27±0,02 |
| M10PPA-T | 94±3 | 1,4 | 8700±500 | 17700±1000 | 2,03±0,03 |
| M50PPA-T | 94±3 | 1,5 | 18500±1000 | 39600±1500 | 2,14±0,03 |

[a]Le rendement de conversion est calculé à partir de la masse du copolymère PTMC-PCL obtenu ($m_{PTMC\text{-}PCL}$) et des masses en monomères et en initiateur PPA de départ, selon la formule

$$\text{yield (\%)} = m_{PTMC\text{-}PCL} \times 100/(m_{TMC} + m_{CL} + m_{PPA});$$

[b]Le ratio molaire expérimental entre les monomères TMC et CL, [TMC]/[CL], est évalué par intégration des pics numérotés 7 et 11 sur les spectres d'analyse RMN $^1$H représentés en figure 3, comme exposé dans la publication [8] ;
[c]La masse moléculaire moyenne est mesurée par SEC ;
[d]Indice de polydispersité PDI=$M_w/M_n$.

Les analyses RMN $^1$H des copolymères PTMC60-PCL40 (d'environ 10 000 g.mol$^{-1}$) synthétisés par ROP et initiés par PPA en utilisant le catalyseur MSA (G10PPA, graphe a), le catalyseur Sn(Oct)2 (R10PPA, graphe c) ou sans catalyseur à l'aide de l'irradiation par micro-ondes en présence de toluène (M10PPA-T, graphe b) sont représentés en figure 3. Un petit pic à 3,43 ppm (figure 3(c)) peut également être observé sur le spectre RMN $^1$H de l'échantillon R10PPA, pouvant être attribué à la formation de liaison éther $-CH_2-O-CH_2-$ du fait de la dégradation thermique du polymère à haute température, comme décrit en exemple 1. Aucune trace de liaison éther n'est en revanche observée sur le spectre RMN $^1$H des copolymères G10PPA et M10PPA selon l'invention (figure 3(a) et figure 3(b), respectivement).

Les résultats RMN montrent ainsi que la polymérisation, mettant en œuvre le catalyseur MSA ou sans catalyseur à l'aide de l'irradiation par micro-ondes, conduit à des copolymères présentant moins de défauts dans leur structure chimique que ceux résultant d'une synthèse avec le catalyseur Sn(Oct)2.

La voie de synthèse mettant en œuvre le catalyseur MSA a permis d'obtenir des copolymères PTMC-PCL linéaires de deux poids moléculaires distincts avec une conversion des monomères élevée et un grand contrôle de la polymérisation (indice de polydispersité le plus proche de 1).

Les analyses des spectres RMN $^1$H des copolymères PTMC60-PCL40 (10 000 g.mol$^{-1}$), synthétisés à l'aide du catalyseur MSA et de l'initiateur PPA, « protégés » par le chlorure de benzoyle (G10PPA-BC) ou l'isocyanate de p-toluènesulfonyle (G10PPA-TSI) sont représentés en figure 4.

L'apparition de nouveaux pics correspondant aux agents protecteurs dans les spectres RMN $^1$H des PTMC protégées révèle que les protections ont été réalisées avec succès en utilisant du chlorure de benzoyle et de l'isocyanate de p-toluènesulfonyle. En particulier, trois nouveaux pics, qui apparaissent à 8,03, 7,56 et 7,43 ppm (pics 11, 12 et 13) sur la figure 4(a), sont attribués aux trois protons sur le cycle aromatique du chlorure de benzoyle. De plus, en raison de l'effet de retrait d'électrons du groupe benzoate attaché à la chaîne polymère, trois protons à la fin de la chaîne polymère se déplacent vers des ppm plus élevés (pics 8, 9 et 10 sur la figure 4(a)).

De même, deux nouveaux pics apparaissant à 7,89 et 7,34 ppm (pics 12 et 13 sur la figure 4(b)) correspondent aux deux protons sur le cycle aromatique du p-toluènesulfonylisocyanate. De plus, un très petit pic apparaissant à 8,16 ppm (pic 11 sur la figure 4(b)) dérive du proton du groupe uréthane du produit de couplage. Enfin, un singulet apparaissant à 2,44 ppm dérive du groupe méthyle fixé sur le cycle aromatique de l'agent TSI. Les spectres RMN $^1$H révèlent que les réactions de couplage ont été réalisées avec succès.

**Exemple 3**

**Préparation et évaluation des propriétés électrochimiques des électrolytes solides à base des polymères PTMC et copolymères PTMC-PCL**

Les propriétés de conductivité ionique et de stabilité électrochimique des électrolytes solides à base des polymères PTMC et copolymères PTMC-PCL sont évaluées comme suit.

**3.1. Préparation des électrolytes polymériques solides (SPEs) à base des polymères PTMC et copolymères PTMC-PCL**

Protocole de préparation des électrolytes à base de P10PPA avec [CO]/[$Li^+$] de 15

Dans une boîte à gants remplie d'argon, 2,000 g de PTMC, le P10PPA synthétisé comme décrit en exemple 1, sont introduits dans un récipient en verre équipé avec un barreau magnétique et 0,370 g de LiTFSI est ajouté. Ensuite, 4 mL d'acétone anhydre sont ajoutés, et le mélange est agité pendant au moins 4 heures pour obtenir une solution homogène. La solution est dégazée, enduite sur les substrats, et séchée à l'étuve à 60 °C pendant 8 heures, suivi par un séchage sous vide à 100 °C pendant au moins 72 heures pour obtenir l'électrolyte polymérique, noté P10PPA-TFSI15. Le ratio molaire entre les groupes carbonyle du polymère par rapport au sel de lithium, noté [CO]/[$Li^+$], est de 15.

D'autres électrolytes à base de P10PPA sont préparés avec des ratios [CO]/[$Li^+$] de 0,1 ; 0,5 ; 1 ; 2 ; 5 ; 10 et 30.

Le même protocole est suivi pour la préparation de tous les électrolytes à base de PTMC « non-protégé » et « protégé ».

Pour étudier l'effet du contre anion sur les propriétés des électrolytes, d'autres électrolytes polymériques solides sont également préparés avec des ratios [CO]/[$Li^+$] de 10 et 15, *via* le même protocole, en mettant en œuvre comme sels de lithium, LiFSI et LiTDI.

Protocole de préparation des électrolytes à base du copolymère G10PPA avec [CO]/[$Li^+$] de 15

Dans une boîte à gants remplie d'argon, 2,000 g de copolymère G10PPA, synthétisé en exemple 2, sont introduits dans un récipient en verre équipé d'un barreau magnétique et 0,353 g de LiTFSI est ajouté. Ensuite, 4 mL d'acétone anhydre sont ajoutés, et le mélange est agité pendant au moins 4 heures pour obtenir une solution homogène. La solution est dégazée, enduite sur les substrats, et séchée à l'étuve à 60 °C pendant 8 heures, suivi par un séchage sous vide à 80 °C pendant au moins 72 heures pour obtenir l'électrolyte polymérique, noté G10PPA-TFSI15.

D'autres électrolytes à base du copolymère G10PPA sont préparés avec des ratios [CO]/[$Li^+$] de 0,1 ; 0,5 ; 1 ; 2 ; 5 ; 10 et 30.

Le même protocole est suivi pour la préparation d'électrolytes à base des autres copolymères « non-protégés » et « protégés ».

3.2. Préparation des électrolytes solides hybrides (HSEs) à base des polymères PTMC **et copolymères PTMC-PCL**

Protocole de préparation des électrolytes solides hybrides à base de P10PPA avec [CO]/[$Li^+$] de 15

Dans une boîte à gants remplie d'argon, 2,000 g de PTMC, le P10PPA synthétisé comme décrit en exemple 1, sont introduits dans un récipient en PTFE équipé avec un barreau magnétique et 0,370 g de LiTFSI est ajouté. Ensuite, 4,8 mL d'acétonitrile anhydre sont ajoutés, et le mélange est agité pendant au moins 12 heures pour obtenir une solution homogène. Ensuite, le céramique conducteur $Li_{1,3}Al_{0,3}Ti_{1,7}P_3O_{12}$ (LATP) (1,429 g, environ 20 % volumique de céramique par rapport au volume total de l'électrolyte) est ajouté et le mélange est mélangé en utilisant un mélangeur tubulaire pendant 4 heures pour obtenir une suspension homogène. La suspension est dégazée, enduit sur les substrats, et séchée à l'étuve à 60 °C pendant 8 heures, suivi par un séchage sous vide à 80 °C pendant au moins 72 heures pour obtenir les électrolytes solides hybrides, noté P10PPA-TFSI15-LATP20. Le ratio molaire entre les groupes carbonyle du polymère par rapport au sel de lithium, noté [CO]/[$Li^+$] est de 15.

D'autres électrolytes solides hybrides à base de P10PPA avec des ratios [CO]/[$Li^+$] de 0,5 ; 1 ; 2 ; 5 et 10 contenant 20 % volumique de céramique sont préparés en utilisant le même protocole, notés P10PPA-TFSI0,5-LATP20, P10PPA-TFSI1-LATP20, P10PPA-TFSI2-LATP20, P10PPA-TFSI5-LATP20 et P10PPA-TFSI10-LATP20, respectivement.

D'autres électrolytes solides hybrides à base de P10PPA avec des ratios [CO]/[$Li^+$] de 0,5 ; 1 ; 2 ; 5 ; 10 et 15 contenant 60 % volumique de céramique sont préparés en utilisant le même protocole, notés P10PPA-TFSI0,5-LATP60, P10PPA-TFSI1-LATP60, P10PPA-TFSI2-LATP60, P10PPA-TFSI5 -LATP60, P10PPA-TFSI10-LATP60 et P10PPA-TFSI15-LATP60, respectivement.

Le même protocole est suivi pour la préparation de tous les électrolytes solides hybrides à base de PTMC « non-protégé » et « protégé ».

Protocole de préparation des électrolytes solides hybrides à base du copolymère G10PPA avec [CO]/[$Li^+$] de 15

Dans une boîte à gants remplie d'argon, 2,000 g de copolymère G10PPA, synthétisé en exemple 2, sont introduits dans un récipient en PTFE équipé d'un barreau magnétique et 0,353 g de LiTFSI est ajouté. Ensuite, 4 mL d'acétone anhydre sont ajoutés, et le mélange est agité pendant au moins 12 heures pour obtenir une solution homogène. Ensuite, le céramique conducteur $Li_{1,3}Al_{0,3}Ti_{1,7}P_3O_{12}$ (LATP) (1,420 g, 20 % volumique de céramique par rapport au volume total de l'électrolyte) est ajouté et le mélange est mélangé en utilisant un mélangeur tubulaire pendant 4 heures pour obtenir une suspension homogène. La suspension est dégazée, enduit sur les substrats, et séchée à l'étuve à 60 °C pendant 8 heures, suivi par un séchage sous vide à 80 °C pendant au moins 72 heures pour obtenir électrolytes solides hybrides, noté G10PPA-TFSI15-LATP20.

D'autres électrolytes solides hybrides à base de G10PPA avec des ratios [CO]/[$Li^+$] de 0,5 ; 1 ; 2 ; 5 et 10 contenant 20 % volumique de céramique sont préparés en utilisant le même protocole, notés G10PPA-TFSI0,5-LATP20, G10PPA-TFSI1-LATP20, G10PPA-TFSI2-LATP20, G10PPA-TFSI5-LATP20 et G10PPA-TFSI10-LATP20, respectivement.

D'autres électrolytes solides hybrides à base de P10PPA avec des ratios [CO]/[$Li^+$] de 0,5 ; 1 ; 2 ; 5 ; 10 et 15 contenant 60 % volumique de céramique sont préparés en utilisant le même protocole, notés G10PPA-TFSI0,5-LATP60, G10PPA-TFSI1-LATP60, G10PPA-TFSI2-LATP60, G10PPA-TFSI5-LATP60, G10PPA-TFSI10-LATP60 et G10PPA-TFSI15-LATP60, respectivement.

Le même protocole est suivi pour la préparation de tous les électrolytes solides hybrides à base de copolymère PTMC-PCL « non-protégé » et « protégé ».

### 3.3. Evaluation des électrolytes polymériques solides

*Méthodes de caractérisation des électrolytes*

Conductivité ionique : La conductivité ionique est déterminée par spectroscopie d'impédance électrochimique (EIS pour « Electrochemical Impedance Spectroscopy » en terminologie anglo-saxonne), en mettant en œuvre un analyseur d'impédance VMP3 (BioLogic) pour une plage de températures allant de -10°C à 80°C par paliers de 10°C. Les électrolytes sont montés dans des piles bouton sous une boite à gants remplie d'argon, entre deux électrodes de blocage en acier inoxydable. Un séparateur en PTFE (16 mm de diamètre et 60 µm d'épaisseur) comprenant un trou de 6 mm de diamètre est utilisé pour fixer la taille et la forme de l'électrolyte. Les cellules, préconditionnées à 55 °C dans un four pendant 16 heures, sont stabilisées à une température donnée pendant 2 heures avant chaque mesure, et la température est contrôlée à l'aide d'une chambre climatique (Vötsch VC4018). Les mesures en chauffage et en refroidissement sont effectuées. Les spectres d'impédance sont enregistrés dans une plage de fréquences allant de 1 Hz à 1 MHz. Les deux modes PEIS (« Potentio Electrochemical Impedance Spectroscopy », à tension appliquée contrôlée) et GEIS (« Galvano Electrochemical Impedance Spectroscopy », à courant appliqué contrôlé) sont utilisés avec une amplitude en tension ou en courant appliqué de 0,02 V ou 30 nA respectivement.

La résistance de la membrane d'électrolyte ($R_{bulk}$) est déterminée *via* l'analyse et l'interprétation du tracé de Nyquist à partir des données obtenues avec le logiciel EC-Lab. La conductivité est calculée en utilisant l'équation suivante :

[Math 2]

$$\sigma = \frac{L}{R \times S} \quad \text{(équation 1)}$$

avec L représentant l'épaisseur de la membrane d'électrolyte (cm), S est la superficie de l'électrode ($cm^2$) et R est la résistance de volume (« bulk résistance ») de la membrane (ohm).

Energie d'activation : L'énergie d'activation ($E_a$) est déterminée par analyse des courbes de conductivité avec l'équation VTF (Volger-Tammann-Fulcher) [9] en utilisation un outil Solver.

[Math 3]

$$\sigma = Ae^{\frac{-E_a}{R(T-T_0)}}$$

avec $\sigma$ représentant la conductivité ionique ($S.cm^{-1}$), A= $\sigma_0 T^{-0,5}$ est le facteur pré-exponentiel dépendant de la température ($S.cm^{-1}$), $E_a$ est l'énergie d'activation ($J.mol^{-1}$), R=8,314 $J. mol^{-1}.K^{-1}$ est la constante universelle des gaz parfaits ; $T_0$=$T_g$-50 et T est la température en Kelvin (K).

L'extrapolation des courbes suivant l'équation VTF a été réalisé seulement sur les courbes de refroidissement, et les températures de transition vitreuse (Tg) du PTMC et du copolymère fixées à -27°C ([10], [11]) et à -35°C ([2]) respectivement.

Nombre de transport des ions $Li^+$ : Le nombre de transport des ions $Li^+$ (t+) est mesuré à 60°C par EIS *via* un analyseur d'impédance VMP3 (BioLogic) sur des cellules boutons Li/électrolyte/Li symétriques en utilisant la méthode connue de Bruce et Vincent [16]. En particulier, t+ est calculé en utilisation l'équation 3 suivante.

[Math 4]

$$t_+ = \frac{I_{ss}(\Delta V - I_0 R_0)}{I_0(\Delta V - I_{ss} R_{ss})}$$

avec $\Delta$V représentant le potentiel appliqué à travers la cellule, $I_0$ et Iss sont les courants initial et de repos tandis que Ro et Rss sont les résistances initiale et de repos des couches de stabilisation.

Stabilité électrochimique : La stabilité électrochimique des membranes d'électrolyte est évaluée par voltampérométrie cyclique (CV) dans une pile bouton comprenant l'électrolyte intercalé entre une feuille de lithium métallique comme contre-électrode et une feuille de cuivre (Cu) ou d'aluminium revêtue de carbone (Al@C) comme électrode de travail. Un séparateur PTFE comme décrit précédemment est utilisé pour fixer la taille et la forme de l'électrolyte.

Pour déterminer la stabilité anodique, des cellules Li/SPE/Al@C ont été utilisées. Les cellules ont été montées dans une boite à gants remplie d'argon, et soumises à des mesures en voltampérométrie cyclique en utilisant un VMP3 (BioLogic) avec une vitesse de balayage de 0,1 $mV.s^{-1}$ de 2,8 à 4,5 V et répéter jusqu'à 10 cycles. Pour déterminer la stabilité cathodique, des cellules Li/SPE/Cu ont été soumises à des mesures CV en appliquant une vitesse de balayage de 0,1 $mV.s^{-1}$ de 2,0 jusqu'à -0,5 V et répéter jusqu'à 10 cycles.

Résultats

Les performances, en termes de conductivité ionique ($\sigma$), de nombre de transport des ions $Li^+$ (t+), de conductivité de l'ion $Li^+$ et d'énergie d'activation ($E_a$), des différents électrolytes polymériques à base de PTMC et PTMC-PCL synthétisés en utilisant différents catalyseurs et différents sels de lithium, sont rassemblées dans le tableau 3 suivant.

[Tableau 3]

| Echantillon | $\sigma^{a,b}$ ($S\ cm^{-1}$) | $t_+^{b}$ | $Li^+$ $\sigma^{c}$ ($S\ cm^{-1}$) | $E_a$ ($kJ\ mol^{-1}$) |
|---|---|---|---|---|
| S10PPA-TFSI15 *(hors invention)* | $1,81 \times 10^{-5}$ | $0,70 \pm 0,02$ | $1,27 \times 10^{-5}$ | 11,25 |
| P10PPA-TFS115 | $6,23 \times 10^{-6}$ | $0,74 \pm 0,02$ | $4,61 \times 10^{-6}$ | 12,83 |
| P10PPA-FSI15 | $4,93 \times 10^{-6}$ | $0.70 \pm 0,03$ | $3,45 \times 10^{-6}$ | 12,96 |
| P10PPA-TDI15 | $3,54 \times 10^{-6}$ | $0,59 \pm 0,06$ | $2,09 \times 10^{-6}$ | 12,31 |
| P10PPA-TFSI0.5 | $1,71 \times 10^{-5}$ | $0,71 \pm 0,03$ | $1,21 \times 10^{-5}$ | 10,44 |
| P10PPA-TFSI1 | $1,39 x 10^{-5}$ | $0,66 \pm 0,03$ | $9,19 \times 10^{-6}$ | 11,92 |
| P10PPA-TFSI5 | $6,67 \times 10^{-6}$ | $0,65 \pm 0,03$ | $4,34 \times 10^{-6}$ | 12,93 |
| P10PPA-TFSI10 | $8,04 \times 10^{-6}$ | $0,70 \pm 0,03$ | $5,63 \times 10^{-6}$ | 12,31 |

(suite)

| Echantillon | $\sigma^{a,b}$ (S $cm^{-1}$) | $t_+^b$ | $Li^+$ $\sigma^c$ (S $cm^{-1}$) | $E_a$ (kJ $mol^{-1}$) |
|---|---|---|---|---|
| P10PPA-TFSI30 | $3,83 \times 10^{-6}$ | $0,73 \pm 0,03$ | $2,79 \times 10^{-6}$ | 11,19 |
| P50PPA-TFSI15 | $4,50 \times 10^{-6}$ | $0,74 \pm 0,03$ | $3,33 \times 10^{-6}$ | 12,94 |
| | | | | |
| R10PPA-TFSI15 *(hors invention)* | $2,55 \times 10^{-5}$ | $0,67 \pm 0,03$ | $1,71 \times 10^{-5}$ | 9,12 |
| R50PPA-TFSI15 *(hors invention)* | $1,85 \times 10^{-5}$ | $0,68 \pm 0.03$ | $1,26 \times 10^{-5}$ | 9,66 |
| G10PPA-TFSI15 | $3,73 \times 10^{-5}$ | $0,66 \pm 0,02$ | $2,46 \times 10^{-5}$ | 9,40 |
| G50PPA-TFSI15 | $2,90 \times 10^{-5}$ | $0,67 \pm 0,03$ | $1,95 \times 10^{-5}$ | 8,42 |
| | | | | |
| MW10PPA-T-TFSI15 | $2,37 \times 10^{-5}$ | $0,70 \pm 0.02$ | $1,66 \times 10^{-5}$ | 10,55 |
| MW50PPA-T-TFSI15 | $3,52 \times 10^{-6}$ | $0,71 \pm 0.02$ | $2,50 \times 10^{-6}$ | 12,95 |
| M10PPA-T-TFSI15 | $4,72 \times 10^{-5}$ | $0,50 \pm 0.03$ | $2,36 \times 10^{-5}$ | 9,18 |
| M50PPA-T-TFSI15 | $1,68 \times 10^{-5}$ | $0,68 \pm 0.03$ | $1,14 \times 10^{-5}$ | 10,51 |
| [a]valeurs ajustées. [b]mesuré à 60 °C. [c]conductivité des ions $Li^+$ obtenue en normalisant la conductivité ionique totale avec le nombre de transport, t+, des ions $Li^+$ | | | | |

La figure 5 représente l'évolution de la conductivité ionique en fonction de la température, obtenue pour les électrolytes polymériques solides à base de PTMC, synthétisés en exemple 1, à l'aide du catalyseur MSA (P10PPA-TFSI15) ou du catalyseur Sn(Oct)2 (S10PPA-TFSI15), ou sans catalyseur à l'aide de l'irradiation par micro-ondes en présence de toluène (MW10PPA-T-TFSI15). Aucune chute de température n'est observées pour les électrolytes polymériques solides à base de PTMC à température réduite à la différence des élecrolytes à base de PEO, ce qui est probablement lié à la morphologie hautement amorphe des premiers ([13]). Ainsi, toutes les courbes de conductivité suivent le comportement de Vogel-Tamman-Fulcher (VTF) [14] même jusqu'à -10°C.

Concernant l'effet de la méthode de synthèse sur les propriétés de transport du polymère obtenu, les SPEs basés sur le PTMC synthétisé par irradiation micro-ondes (MW10PPA-T-TFSI15) montrent une conductivité plus élevée à basses températures que celle du SPE basé sur le PTMC synthétisé utilisant un catalyseur $Sn(Oct)_2$ (S10PPA-TFSI15), et le dernier montre une conductivité plus élevée que celle du SPE basé sur le PTMC synthétisé utilisant le catalyseur MSA (P10PPA-TFSI15) bien que trois d'entre eux aient un nombre t+ similaire. Ce comportement dériverait du PDI beaucoup plus faible du polymère P10PPA. La valeur PDI plus élevée signifie la plus faible homogénéité du Mn, ce qui signifie qu'il y a plus de molécules de polymère avec un Mn beaucoup plus petit (également appelé oligomère) dans le polymère S 10PPA. Ces molécules de polymère de faible poids moléculaire jouent le rôle de plastifiant, ce qui augmente la mobilité segmentaire des chaînes PTMC. Ainsi, la conductivité des électrolytes S10PPA-TFSI15 est moins dépendante de la température, qui a également été révélée par une énergie d'activation plus faible.

La figure 6 représente l'évolution de la conductivité ionique en fonction de la température pour les électrolytes basés sur le PTMC synthétisé à l'aide du catalyseur MSA contenant différentes teneurs en LiTFSI, exprimées en rapport molaire [CO]/[$Li^+$]. A haute température supérieure à 30 °C, il semble que la conductivité ionique augmente avec la teneur en sel. La conductivité ionique augmente de manière significative lorsque le rapport [CO]/[$Li^+$] diminue à 1 et 0,5, ce qui correspond à la concentration en sel de 73,50 et 84,53 % en poids.

La figure 7 représente l'évolution de la conductivité ionique en fonction de la température pour les électrolytes basés sur le PTMC synthétisé à l'aide du catalyseur MSA contenant différentes teneurs en LiFSI, exprimées en rapport molaire [CO]/[$Li^+$].

La figure 8 représente les courbes de conductivité ionique en fonction de la température, obtenues pour les électrolytes polymériques solides à base de copolymère PTMC60-PCL40, synthétisés en exemple 2, à l'aide du catalyseur MSA (G10PPA-TFSI15) et Sn(Oct)2 (R10PPA-TFSI15), et à l'aide de l'irradiation par micro-ondes en présence de toluène (M10PPA-T-TFSI15).

En comparaison avec les électrolytes PTMC-TFSI avec une masse moléculaire et une concentration en sel similaires, la conductivité ionique des électrolytes polymériques à base du copolymère PTMC-PCL (G10PPA) et du sel LiTFSI est significativement supérieure dans toute la gamme de températures (tableau 3, figure 5 et figure 8). L'écart des conductivités augmente lorsque la température diminue.

Ce comportement peut s'expliquer par la flexibilité des segments de chaînes polymériques plus élevée à basse

température liée à la température de transition vitreuse Tg inférieure et à l'effet plastifiant plus élevé pour le copolymère PTMC-PCL en comparaison à l'homopolymère PTMC. Les courbes de conductivité de G10PPA-TFSI15 montrent un comportement VTF jusqu'à -10°C sans chute comme cela peut être visualisé sur les courbes de conductivité des électrolytes à base d'homopolymère PCL [15].

De plus, la conductivité de G10PPA-TFSI15 est moins dépendante de la température que celle de l'électrolyte P10PPA-TFSI15, comme cela ressort d'ailleurs de l'énergie d'activation beaucoup plus faible du premier (9,40 *versus* 12,83 $kJ.mol^{-1}$). Toutefois, le nombre de transport des ions $Li^+$, t+, de l'électrolyte P10PPA-TFSI15 est légèrement inférieur à celui du G10PPA-TFSI15, i.e. 0,66 *versus* 0,74 respectivement.

Les SPEs basés sur le PTMC-PCL copolymère synthétisé par irradiation micro-ondes (M10PPA-T-TFSI15) montrent une conductivité le plus élevée que celle du SPE basé sur le copolymère synthétisé utilisant un catalyseur MSA (G10PPA-TFSI15) ou Sn(Oct)2 (R10PPA-TFSI15).

Les fenêtres de stabilité électrochimique des membranes d'électrolyte sont déterminées à partir du premier balayage anodique et cathodique des mesures de voltampérométrie cyclique (CV). La figure 9 représente les courbes de voltampérométrie cyclique obtenues pour les électrolytes solides P10PPA-TFSI15, MW10PPA-T-TFSI15 et S10PPA-TFSI15 à base du PTMC non-protégé synthétisés en exemple 1 à l'aide de l'initiateur PPA.

Les résultats obtenus révèlent que la stabilité anodique du PTMC dépend fortement de la méthode de synthèse. En particulier, le PTMC synthétisé à l'aide d'un four à micro-ondes sans catalyseur (MW10PPA-T) est beaucoup plus stable que le PTMC synthétisé à l'aide d'un catalyseur (P10PPA et S10PPA). En plus, le PTMC synthétisé à l'aide du catalyseur MSA est plus stable que le PTMC synthétisé à l'aide d'un catalyseur Sn(Oct)2. La faible stabilité à l'oxydation du S10PPA est due au fait que le catalyseur Sn(Oct)2 reste dans l'échantillon et par des défauts importants dans la structure chimique.

La figure 10 représente les courbes de voltampérométrie cyclique des électrolytes solides à base du PTMC non-protégé (P10PPA-TFSI15), et PTMC protégé (P10PPA-BC-TFSI15 et P10PPA-TSI-TFSI15), synthétisés en exemple 1, à l'aide du catalyseur MSA et l'initiateur PPA.

Le résultat obtenu montre qu'une grande amélioration de la stabilité électrochimique a été obtenue dans les électrolytes utilisant des PTMC dont les fonctions hydroxyles sont protégées par rapport à celle obtenue avec l'électrolyte à pas de PTMC non protégé. Les premiers balayages des mesures CV révèlent la plus grande stabilité des polymères protégés vis-à-vis de la réduction et de l'oxydation. Concernant l'effet de l'agent protecteur, les premiers scans anodiques réalisés sur les cellules Li/SPE/Al@C montrent que le polymère protégé par le chlorure de benzoyle (P10PPA-BC) est moins stable à l'oxydation que celui protégé par le p-toluènesulfonyl isocyanate (P10PPA-TSI). En revanche, les premiers balayages cathodiques réalisés sur des cellules Li/SPE/Cu montrent une stabilité bien plus élevée au contact de l'anode lithium métal de P10PPA-BC et P10PPA-TSI comme le révèle l'apparition du pic de stripping du lithium à environ 0,25 V contre $Li/Li^+$. Ainsi, l'efficacité coulombique enregistrée à partir du premier balayage cathodique de P10PPA-BC (27,33%) et P10PPA-TSI (20,38%) est significativement plus élevée que celle de P10PPA vierge (8,83%).

La figure 11 représente les courbes de voltampérométrie cyclique obtenues pour les électrolytes solides G10PPA-TFSI15, M10PPA-T-TFSI15 et R10PPA-TFSI15 à base du copolymère PTMC-PCL non-protégé, synthétisés en exemple 2, à l'aide de l'initiateur PPA. De même, la méthode de synthèse joue également un rôle important dans les propriétés de transport des électrolytes copolymères. Les résultats CV révèlent une stabilité à l'oxydation plus élevée du copolymère synthétisé en utilisant un four à micro-ondes que celui obtenu en utilisant un catalyseur Sn(Oct)2. De même, la faible stabilité à l'oxydation du R10PPA serait due au fait que le catalyseur Sn(Oct)2 reste dans l'échantillon et par des défauts dans la structure chimique.

La figure 12 représente les courbes de voltampérométrie cyclique des électrolytes solides à base du copolymère PTMC-PCL non-protégé (G10PPA-TFSI15), et copolymère PTMC-PCL protégé (P10PPA-BC-TFSI15 et P10PPA-TSI-TFSI15), synthétisés en exemple 2, à l'aide du catalyseur MSA et l'initiateur PPA. Les résultats révèlent une amélioration de la stabilité électrochimique du polymère protégé. En particulier, le copolymère protégé est plus stable au contact de l'anode de lithium.

### Exemple 4

### Préparation d'une électrode composite à base de (co)polycarbonate et essais au sein d'une batterie complète

La préparation d'une électrode composite à base des polymères PTMC et copolymères PTMC-PCL et les essais au sein d'une batterie complète sont réalisés comme suit.

#### 4.1. Préparation d'une électrode composite à base de PTMC et copolymère PTMC-PCL

Des électrodes à base de $Li[Ni_{0,6}Mn_{0,2}Co_{0,2}]O_2$ (NMC622) ont été préparées en mélangeant NMC, PTMC ou copolymère PTMC-PCL (synthétisé comme décrit en exemple 1 et 2), LiTFSI, PVdF et noir de carbone Super P dans

un rapport massique résumé dans le tableau 4 dans une suspension NMP, qui a ensuite été coulée sur une feuille d'aluminium ou une feuille d'aluminium revêtue de carbone. Les feuilles d'électrodes ont ensuite été pré-séchées pendant 24 heures à 60 °C dans une étuve. Les électrodes pré-séchées ont été découpées en disques de 14 mm de diamètre et pressées à 1 tonne pendant 5 secondes pour augmenter la densité des électrodes. Les électrodes pressées sont finalement séchées à 80 °C pendant 2 jours sous vide. La charge massique de matière active était d'environ 2,0 à 2,5 $mg.cm^{-2}$. La procédure a été effectuée dans une salle anhydride.

La composition des électrodes composites à base des polymères PTMC et copolymères PTMC-PCL (protégés et non protégés) est résumé dans le tableau 4 suivant.

[Tableau 4]

| Code | NMC (wt%) | PTMC ou PTMC-PCL [a] (wt%) | LiTFSI (wt%) | PVdF (wt%) | Super P (wt%) |
|---|---|---|---|---|---|
| NMCIP10PPA | 71 | 19 | 4 | 4 | 2 |
| NMC2P10PPA | 77 | 12 | 3 | 4 | 4 |
| NMCIP10PPA-BC | 71 | 19 | 4 | 4 | 2 |
| NMC2P10PPA-BC | 77 | 12 | 3 | 4 | 4 |
| NMC1G10PPA | 71 | 19 | 4 | 4 | 2 |
| NMC2G10PPA | 77 | 12 | 3 | 4 | 4 |
| NMC1G10PPA-BC | 71 | 19 | 4 | 4 | 2 |
| NMC2G10PPA-BC | 77 | 12 | 3 | 4 | 4 |
| [a]PTMC non-protégé, PTMC protégé, copolymère PTMC-PCL non-protégé, ou copolymère PTMC-PCL protégé | | | | | |

**4.2. Préparation d'une batterie complète contenant un électrolyte solide et une cathode composite selon l'invention à base de PTMC ou de copolymère PTMC-PCL**

Des batteries lithium métal, mettant en œuvre comme électrolyte séparateur un électrolyte solide, de type SPE ou HSE comme préparé dans l'exemple 3 précédent, une électrode composite selon l'invention comme préparé en exemple 4.1. comme électrode positive, et une électrode en lithium métallique comme électrode négative, sont préparées suivant le protocole suivant.

Un séparateur en polypropylène de 16 mm de diamètre et d'épaisseur de 60 µm contenant un trou de 8 mm de diamètre a été placé sur l'électrode composite NCM (pré-placée sur une cale inox de 16 mm de diamètre) et une pastille d'électrolyte d'environ 8 mm de diamètre, préparée comme décrit en exemple 3, a été fixée dans le trou de séparateur. Ensuite, une feuille de lithium de 14 mm de diamètre (collée sur une cale inox de 16 mm de diamètre) a été placée au-dessus de l'électrolyte. La combinaison a été pressée à 1 tonne pendant 5 secondes et empilée dans une pile bouton.

**4.3. Préparation d'une batterie complète contenant un électrolyte solide et une cathode composite selon l'invention à base de PTMC ou de copolymère PTMC-PCL par enduction directe**

Les batteries peuvent alternativement être préparées en formant un film d'électrolyte solide selon l'invention directement en surface de l'électrode positive ou de l'électrode négative, suivant le protocole suivant.

Une solution ou suspension homogène, obtenue comme décrit en exemple 3, par mélange en milieu solvant du PTMC ou copolymère PTMC-PCL, d'un sel de lithium et éventuellement du LATP, est enduite directement sur une électrode composite, préparée comme décrit en exemple 4.1., et sur une électrode en lithium métallique pour former l'ensemble cathode/électrolyte solide et l'ensemble anode/électrolyte solide.

Les ensembles sont pré-séchés pendant 4 heures à température ambiante, suivi par un séchage sous vide à 80 °C pendant au moins 72 heures pour obtenir l'assemblage cathode/électrolyte solide et l'assemblage anode de lithium/électrolyte solide. L'assemblage cathode/électrolyte solide est ensuite mis en œuvre dans une pile bouton en combinaison avec la contre-électrode, soit l'assemblage anode de lithium/électrolyte solide, soit l'anode de lithium seule.

### 4.4. Evaluation d'une batterie complète contenant un électrolyte solide et une cathode composite selon l'invention à base de PTMC ou de copolymère PTMC-PCL

*Méthodes de caractérisation des batteries*

Le cyclage galvanostatique des cellules de type Li/NMC622 a été réalisé en utilisant un testeur de batterie Arbin utilisant des cellules boutons. Un taux de décharge/charge de 1C correspond à un courant spécifique de 180 mA $g^{-1}$. Les limites de potentiel ont été fixées entre 2,8 et 4,2 V vs. $Li/Li^+$ et les cellules ont été maintenues à une température constante de 80 °C.

Résultats

La figure 13 représente les courbes de cyclage galvanostatique d'une batterie complète comprenant l'électrolyte polymérique solide (SPE) à base du PTMC protégé (P10PPA-BC-TFSI15), préparé en exemple 3, et la cathode composite à base du PTMC protégé (NMC2P10PPA-BC), préparée en exemple 4.1. La batterie a été mise en forme suivant le protocole décrit en exemple 4.2. Les cellules ont fourni une capacité de décharge réversible de 174 mAh $g^{-1}$ dans les quatre premiers cycles à C/20 accompagnée d'une efficacité coulombique initiale d'environ 85,7%, qui a ensuite augmenté à 95 % après 4 cycles.

L'efficacité coulombique augmente lors du cyclage sans déperdition significative de la capacité.

La figure 14 représente les courbes de cyclage galvanostatique d'une batterie complète comprenant l'électrolyte solide hybride (HSE) à base du PTMC protégé (P10PPA-BC-TFSI15-LATP20), comme préparé en exemple 3, et la cathode composite à base du PTMC protégé (NMC2P10PPA-BC) préparée en exemple 4.2. La batterie a été mise en forme par enduction directe de l'électrolyte sur l'anode de lithium et sur la cathode composite, comme décrit en exemple 4.3. Les cellules ont fourni une capacité de décharge réversible de 174 mAh $g^{-1}$ dans le premier cycle à C/20 accompagnée d'une efficacité coulombique initiale d'environ 85,9%, qui a ensuite augmenté à 92% après 4 cycles. L'efficacité coulombique augmente lors du cyclage sans déperdition significative de la capacité. La capacité de décharge réversible est 168 mAh $g^{-1}$ dans le premier cycles à C/10 accompagnée d'une efficacité coulombique initiale d'environ 93 %.

La figure 15 représente les courbes de cyclage galvanostatique d'une batterie complète comprenant l'électrolyte solide hybride (HSE) à base du copolymère PTMC-PCL protégé (G10PPA-BC-TFSI15-LATP20), comme préparé en exemple 3, et la cathode composite à base du PTMC protégé (NMC2P10PPA-BC) préparée en exemple 4.2. La batterie a été mise en forme par enduction directe de l'électrolyte sur l'anode de lithium et la cathode composite, comme décrit en exemple 4.3. Les cellules ont fourni une capacité de décharge réversible de 178 mAh $g^{-1}$ dans le premier cycles à C/20 accompagnée d'une efficacité coulombique initiale d'environ 78,4%, qui a ensuite augmenté à 91% après 4 cycles. L'efficacité coulombique augmente lors du cyclage sans déperdition significative de la capacité. La capacité de décharge réversible est 174 mAh $g^{-1}$ dans le premier cycle à C/10 accompagnée d'une efficacité coulombique initiale d'environ 92%.

La figure 16 représente les courbes de cyclage galvanostatique d'une batterie complète comprenant l'électrolyte solide hybride (HSE) à base du copolymère PTMC-PCL protégé (G10PPA-BC-TFSI2-LATP20), comme préparé en exemple 3, et la cathode composite à base du PTMC protégé (NMC2P10PPA-BC) préparée en exemple 4.2. La baterrie a été mise en forme par l'enduction directe de l'électrolyte sur l'anode de lithium et la cathode composite, comme décrit en exemple 4.3. Les cellules ont fourni une capacité de décharge réversible de 181 mAh $g^{-1}$ dans le premier cycle à C/20 accompagnée d'une efficacité coulombique initiale d'environ 79,7%, qui a ensuite augmenté à 92 % après 4 cycles. L'efficacité coulombique augmente lors du cyclage sans déperdition significative de la capacité. La capacité de décharge réversible est 170 mAh $g^{-1}$ dans le premier cycle à C/10 accompagnée d'une efficacité coulombique initiale d'environ 93%.

Liste des documents cités

[1] Lestriez et al., Comptes Rendus Chim. 13, 1341-1350 (2010) ;
[2] Zhang et al., J. Power Sources 247, 1-8 (2014) ;
[3] Shi et al., Acc. Chem. Res. 50, 2642-2652 (2017) ;
[4] Pieczonka et al., Adv. Energy Mater. 5, 1501008 (2015) ;
[5] Sun et al., Solid State Ionics 262, 738-742 (2014);
[6] Mindemark et al., Polymer (Guildfà. 63, 91-98 (2015) ;
[7] Delcroix et al., Macromolecules 43, 8828-8835 (2010) ;
[8] Liao et al., Eur. Polym. J. 43, 4289-4296 (2007) ;
[9] Liao et al., React. Funct. Polym. 68, 751-758 (2008);
[10] Tominaga et al., Electrochim. Acta 302, 286-290 (2019);

[11] Zhu et al., Polym. Degrad. Stab. 97, 1589-1595 (2012);
[12] Tundo et al., Green Chem. 10, 1182-1189 (2008);
[13] Mindemark et al., Prog. Polym. Sci. 81, 114-143 (2018);
[14] Armand et al., Solid State Ionics 69, 309-319 (1994);
[15] Lin et al., Polymer (Guildf). 52, 4106-4113 (2011);
[16] Evans, Polymer, 1987, 28 (13), 2324-2328.

**Revendications**

1. Electrode composite comprenant, voire étant formée de :

   - au moins un électrolyte solide constitué :

     . d'un ou plusieurs (co)polymères obtenus par (co)polymérisation par ouverture de cycle (ROP) d'au moins un carbonate cyclique de cinq à huit chaînons et, éventuellement, d'au moins une lactone de cinq à huit chaînons ;

       ladite réaction de (co)polymérisation étant catalysée par l'acide méthane sulfonique ou opérée sous irradiation par micro-ondes en l'absence de catalyseur ;
       les fonctions hydroxyles en bout de chaîne du ou desdits (co)polymères étant éventuellement protégées ; et

     . d'au moins un sel de métal alcalin ou alcalino-terreux, en particulier un sel de lithium ;

   - au moins un matériau actif d'électrode ; et
   - éventuellement, un ou plusieurs additifs conducteurs électroniques et/ou un ou plusieurs liants additionnels.

2. Electrode composite selon la revendication précédente, dans laquelle le ou lesdits (co)polymères présentent une masse molaire moyenne en nombre, Mn, inférieure ou égale à 200 000 $g.mol^{-1}$, en particulier comprise entre 5 000 et 100 000 $g.mol^{-1}$, et plus particulièrement entre 5 000 et 50 000 $g.mol^{-1}$, et/ou présentent un indice de polydispersité inférieur ou égal à 3,5, en particulier inférieur ou égal à 2,5.

3. Electrode composite selon l'une quelconque des revendications précédentes, dans laquelle le ou lesdits (co)polymères sont choisis parmi les polytriméthylène carbonate (PTMC) et les copolymères polytriméthylène carbonate-poly($\varepsilon$-caprolactone) (PTMC-PCL), en particulier présentant un rapport molaire entre les unités monomériques dérivées du triméthylène carbonate et les unités monomériques dérivés de la caprolactone compris entre 90/10 et 10/90, notamment entre 80/20 et 20/80, en particulier entre 70/30 et 30/70 et plus particulièrement d'environ 60/40.

4. Electrode composite selon l'une quelconque des revendications précédentes, dans laquelle le ou lesdits copolymères sont obtenus par ROP initiée par au moins un composé, dit initiateur, comportant une ou plusieurs fonction(s) hydroxyle(s), ledit initiateur étant plus particulièrement choisi parmi l'eau et/ou les alcools, en particulier les alcools présentant une à quatre fonction(s) hydroxyle(s) et plus particulièrement une ou deux fonctions hydroxyles, par exemple le 3-phényl-1-propanol ou l'éthylène glycol.

5. Electrode composite selon l'une quelconque des revendications précédentes, dans laquelle la ou les fonctions hydroxyles protégées en bout de chaîne du ou desdits (co)polymères résultent de la réaction de la ou desdites fonctions hydroxyles avec au moins un composé, dit agent de protection, en particulier choisi parmi les chlorures d'acyle, par exemple le chlorure de benzoyle, le chlorure d'acétyle ; les anhydrides d'acide par exemple l'anhydride acétique et les isocyanates comme l'isocyanate de p-toluènesulfonyle.

6. Electrode composite selon l'une quelconque des revendications précédentes, dans laquelle le ou lesdits (co)polymères représentent de 5 à 30 % en poids, en particulier de 10 à 25 % en poids et plus particulièrement de 12 à 20 % en poids, du poids de l'électrode.

7. Electrode composite selon l'une quelconque des revendications précédentes, dans laquelle ledit sel conducteur ionique est un sel de lithium, en particulier choisi parmi $LiPF_6$, $LiClO_4$, $LiBF_4$, $LiAsF_6$, $LiCF_3SO_3$, $LiN[SO_2CF_3]_2$ (LiTFSI), $LiN[SO_2F]_2$ (LiFSI) ; le lithium 4,5-dicyano-2-(trifluoromethyl)imidazole (LiTDI), $LiN(C_2F_5SO_2)_2$ (LiBETI),

le lithium bis(oxalato)borate (LiBOB), le lithium difluoro(oxalato)borate (LiFOB), $LiPO_2F_2$ et les mélanges de ceux-ci ; et plus particulièrement choisi parmi du LiTFSI, LiTDI ou LiFSI, de préférence du LiTFSI ou LiFSI.

**8.** Electrode composite selon l'une quelconque des revendications précédentes, dans laquelle le ou lesdits matériaux actifs sont choisis :

- pour une électrode composite positive, parmi des matériaux d'intercalation du lithium comme des phosphates du lithium, par exemple des composés de formule $Li_xFe_{1-y}M_yPO_4$ où M est choisi dans le groupe consistant en B, Mg, Al, Si, Ca, Ti, V, Cr, Mn, Co, Ni, Cu, Zn, Y, Zr, Nb et Mo; et $0,8 \leq x \leq 1,2$ ; $0 \leq y \leq 0,6$ ; des composés de formule $Li_xMn_{1-y-z}M'_yM''_zPO_4$ où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec $0,8 \leq x \leq 1,2$ ; $0 \leq y \leq 0,6$ et $0 \leq z \leq 0,2$ ; tels que $LiFePO_4$, $LiMnPO_4$, $LiMn_yFe_{1-y}PO_4$ avec $0,8 \leq x \leq 1,2$ et $0 \leq y \leq 0,6$ ; des composés lamellaires, comme l'oxyde de cobalt lithié $LiCoO_2$, l'oxyde de manganèse lithié $LiMn_2O_4$, ou des matériaux à base de lithium-nickel-cobalt-manganèse $LiNi_xMn_yCo_zO_2$ avec x+y+z=1, tel que $LiNi_{0,6}Mn_{0,2}Co_{0,2}O_2$ ou un matériau à base de $LiNi_xCo_yAl_zO_2$ avec x+y+z=1, ou encore des spinelles, par exemple le spinelle $LiNi_{0,5}Mn_{1,5}O_4$ ;
- pour une électrode composite négative, parmi du carbone, du graphite, de l'oxyde de titane lithié ($Li_4Ti_5O_{12}$) ou de l'oxyde de titane et de niobium ($TiNb_2O_7$), des matériaux à base de silicium ou à base de lithium ou de sodium, ou à base d'étain et de leurs alliages.

**9.** Electrode composite selon l'une quelconque des revendications précédentes, dans laquelle le ou lesdits additifs conducteurs électroniques sont choisis parmi des fibres de carbone, du noir de carbone, des nanotubes de carbone et leurs mélanges ; et/ou le ou lesdits liants additionnels sont choisis parmi des liants fluorés, par exemple le polytétrafluoroéthylène, le polyfluorure de vinylidène, les polysaccharides ou les latex notamment de type caoutchouc styrène-butadiène.

**10.** Electrode composite selon l'une quelconque des revendications précédentes, dans laquelle :

le ou lesdits matériaux actifs représentent de 60 à 95 %, en particulier de 70 à 90 % du poids de l'électrode ; et/ou
le ou lesdits additifs conducteurs électroniques représentent de 1 à 10 %, en particulier de 2 à 8 % du poids de l'électrode ; et/ou
le ou lesdits liants additionnels représentent de 2 à 7 %, en particulier de 3 à 5 % du poids de l'électrode.

**11.** Encre pour la réalisation d'une électrode composite selon l'une quelconque des revendications 1 à 10, comprenant, dans un ou plusieurs solvants, en particulier choisis parmi l'eau et les solvants organiques :

- au moins un (co)polymère tel que défini selon l'une quelconque des revendications 1 à 5 ;
- au moins un sel de métal alcalin ou alcalino-terreux, en particulier un sel de lithium, en particulier tel que défini en revendication 7 ;
- au moins un matériau actif d'électrode, en particulier tel que défini en revendication 8, et éventuellement au moins un additif conducteur électronique et/ou au moins un liant additionnel, en particulier tels que définis en revendication 9.

**12.** Procédé de préparation d'une électrode composite telle que définie selon l'une quelconque des revendications 1 à 10, comprenant au moins les étapes suivantes :

- préparation d'une encre telle que définie en revendication 11 ; et
- formation à partir de ladite encre, en surface d'un collecteur de courant, de ladite électrode composite.

**13.** Procédé selon la revendication précédente, dans lequel la préparation de ladite encre comprend plus particulièrement les étapes suivantes :

(i) préparation d'un ou plusieurs (co)polymères tels que défini selon l'une quelconque des revendications 1 à 5 ; et
(ii) mélange, dans un ou plusieurs solvants, du ou desdits (co)polymères, du ou desdits sels de métal alcalin ou alcalino-terreux, du ou desdits matériaux actifs d'électrode, et éventuellement du ou desdits additifs conducteurs électroniques et/ou liants additionnels.

**14.** Procédé selon la revendication 13, dans lequel la préparation en étape (i) du ou desdits (co)polymères est réalisée *via* au moins les étapes suivantes :

(a1) synthèse, en présence ou non d'un milieu solvant, d'un ou plusieurs (co)polymères par (co)polymérisation par ouverture de cycle d'au moins un carbonate cyclique de cinq à huit chaînons et, éventuellement, d'au moins une lactone de cinq à huit chaînons, ladite réaction de (co)polymérisation étant catalysée par l'acide méthane sulfonique et initiée, ou non, par au moins un composé comportant une ou plusieurs fonction(s) hydroxyle(s), en particulier par un ou plusieurs alcools présentant une à quatre fonction(s) hydroxyle(s) et plus particulièrement une ou deux fonctions hydroxyles, par exemple le 3-phényl-1-propanol ou l'éthylène glycol ;
(a2) éventuellement, protection des fonctions hydroxyles en bout de chaîne du ou desdits (co)polymères ; et
(a3) purification, préalablement ou ultérieurement à l'étape (a2) de protection des fonctions hydroxyles, du ou desdits (co)polymères, en particulier par précipitation dans un ou plusieurs solvants polaires ; ou
la préparation en étape (i) du ou desdits (co)polymères est réalisée *via* au moins les étapes suivantes :
(b1) synthèse d'un ou plusieurs (co)polymères par (co)polymérisation par ouverture de cycle d'au moins un carbonate cyclique de cinq à huit chaînons et, éventuellement, d'au moins une lactone de cinq à huit chaînons, ladite réaction de (co)polymérisation étant opérée en l'absence de catalyseur, sous irradiation par micro-ondes et initiée par au moins un composé comportant une ou plusieurs fonction(s) hydroxyle(s) ;
éventuellement (b2) protection des fonctions hydroxyles en bout de chaîne du ou desdits (co)polymères ; et
éventuellement (b3) purification, préalablement ou ultérieurement à l'étape (b2) de protection des fonctions hydroxyles, du ou desdits (co)polymères, en particulier par précipitation dans un ou plusieurs solvants polaires.

**15.** Ensemble électrode/membrane électrolytique, dans lequel ladite électrode est une électrode composite telle que définie selon l'une quelconque des revendications 1 à 10 ou préparée selon l'une quelconque des revendications 12 à 14, ladite membrane électrolytique étant plus particulièrement un film d'électrolyte solide, notamment de type électrolyte polymérique solide ou électrolyte solide hybride, de préférence à base d'un ou plusieurs (co)polymère(s) tels que mis en œuvre au niveau de ladite électrode composite.

**16.** Système électrochimique comportant une électrode composite telle que définie selon l'une quelconque des revendications 1 à 10 ou préparée selon l'une quelconque des revendications 12 à 14, une deuxième électrode qui est ou non une électrode composite selon l'invention, et un électrolyte localisé entre ladite électrode composite et ladite deuxième électrode,
ledit système étant en particulier une batterie rechargeable, plus particulièrement une batterie au lithium, notamment une batterie lithium-ion ou lithium-métal.

**17.** Système électrochimique selon la revendication 16, dans lequel l'électrolyte entre ladite électrode composite et ladite deuxième électrode est un film d'électrolyte solide, en particulier de type électrolyte polymérique solide ou électrolyte solide hybride, à base d'un ou plusieurs (co)polymère(s) tels que mis en œuvre au niveau de ladite électrode composite.

[Fig 1]

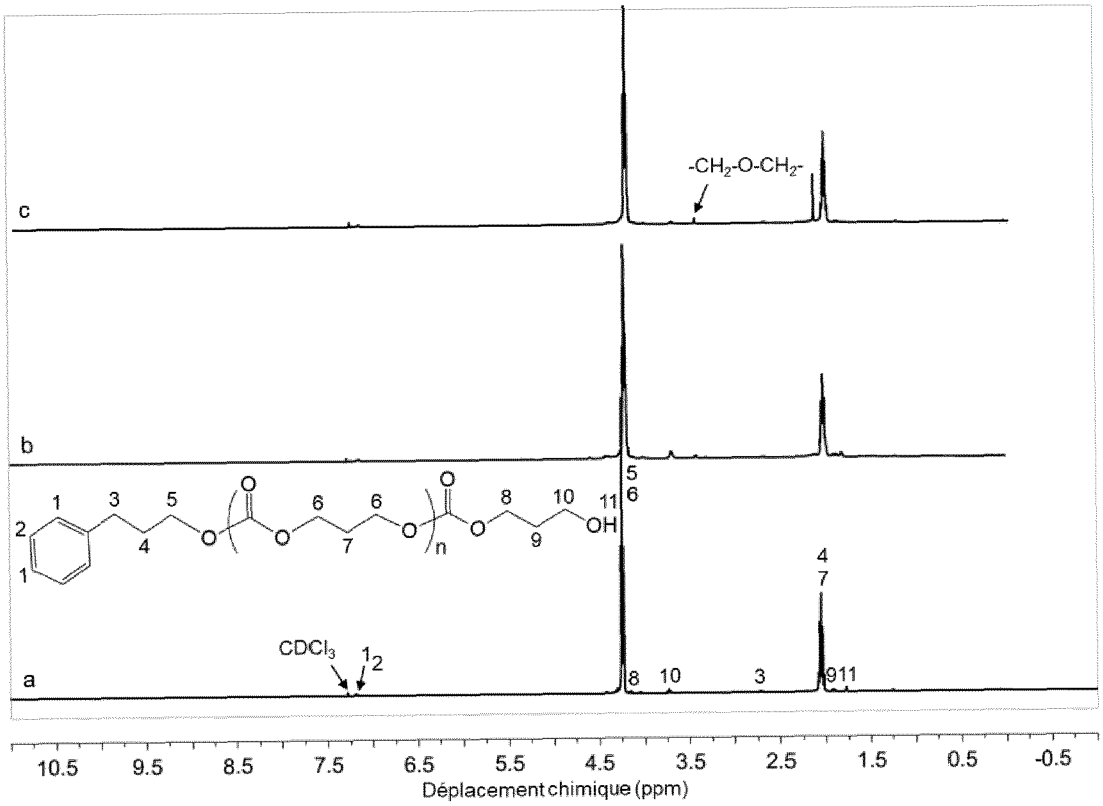
c
b
a
$-CH_2-O-CH_2-$
$CDCl_3$
10.5 9.5 8.5 7.5 6.5 5.5 4.5 3.5 2.5 1.5 0.5 -0.5
Déplacement chimique (ppm)

[Fig 2]

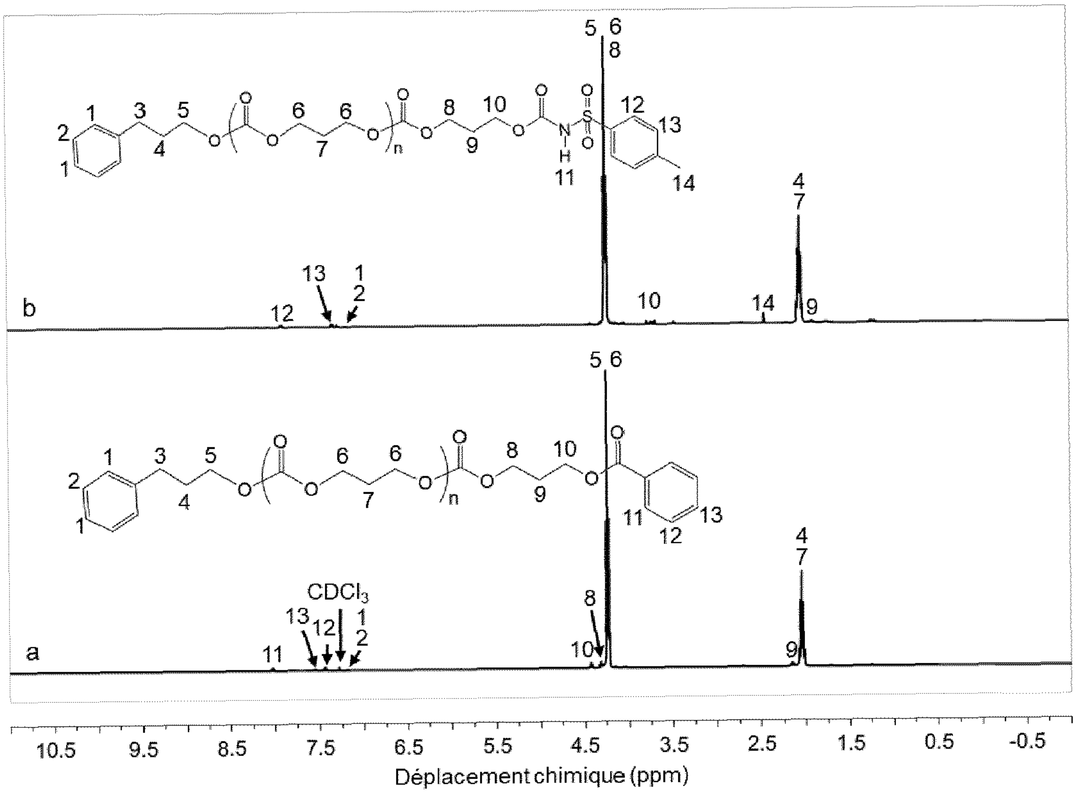
b
a
$CDCl_3$
10.5 9.5 8.5 7.5 6.5 5.5 4.5 3.5 2.5 1.5 0.5 -0.5
Déplacement chimique (ppm)

[Fig 3]

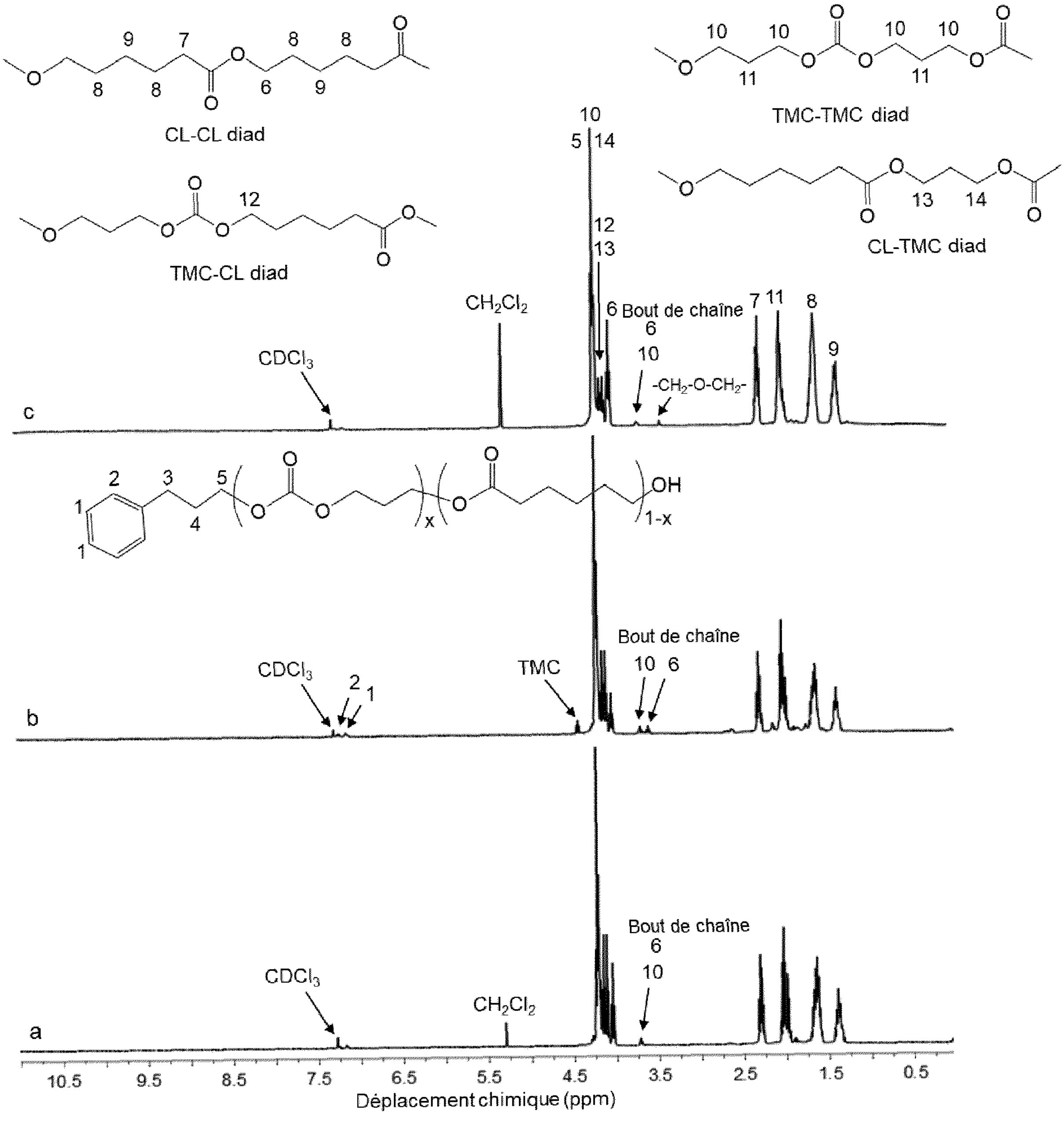
CL-CL diad
TMC-TMC diad
TMC-CL diad
CL-TMC diad
c
CDCl3
CH2Cl2
Bout de chaîne
-CH2-O-CH2-
b
CDCl3
TMC
Bout de chaîne
a
CDCl3
CH2Cl2
Bout de chaîne
10.5
9.5
8.5
7.5
6.5
5.5
4.5
3.5
2.5
1.5
0.5
Déplacement chimique (ppm)

[Fig 4]

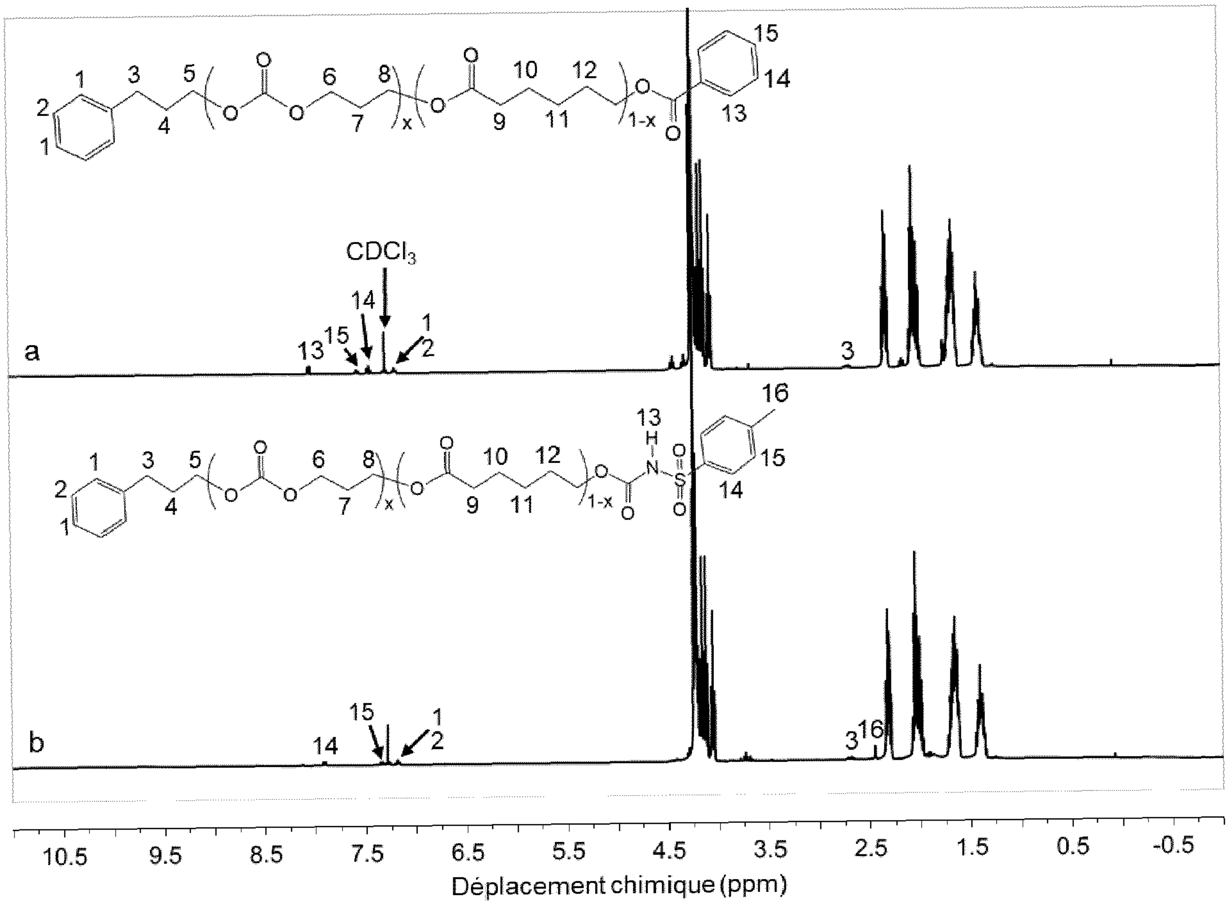
CDCl3
a
b
10.5
9.5
8.5
7.5
6.5
5.5
4.5
3.5
2.5
1.5
0.5
-0.5
Déplacement chimique (ppm)

[Fig 5]

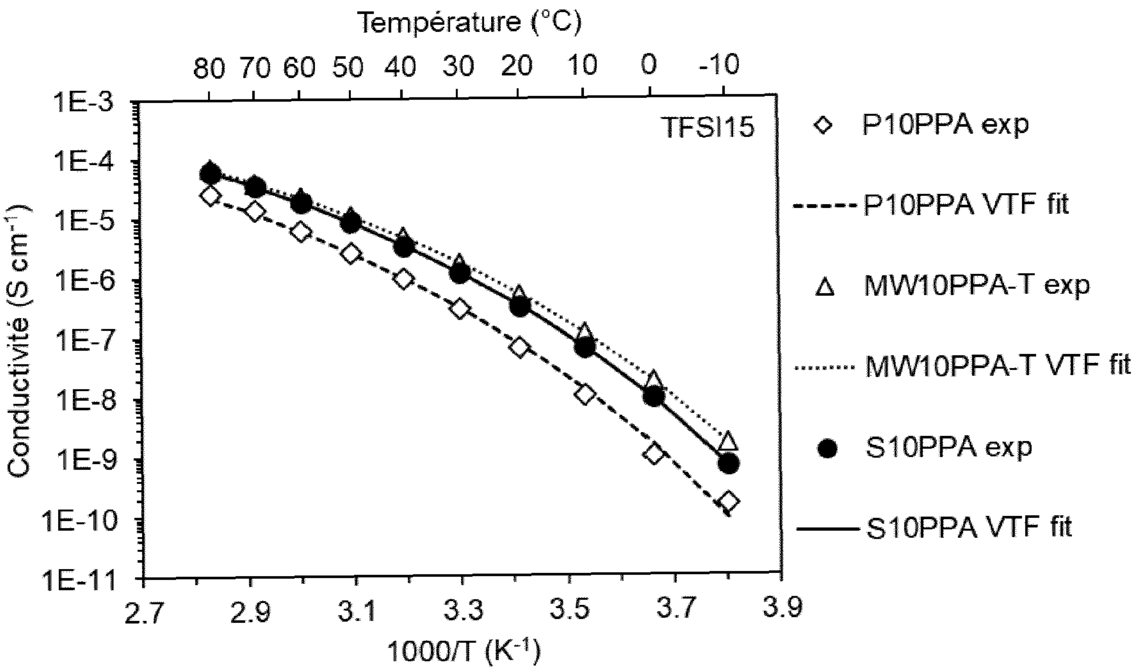
Température (°C)
80 70 60 50 40 30 20 10 0 -10
TFSI15
Conductivité (S cm-1)
1E-3
1E-4
1E-5
1E-6
1E-7
1E-8
1E-9
1E-10
1E-11
2.7 2.9 3.1 3.3 3.5 3.7 3.9
1000/T (K-1)
P10PPA exp
P10PPA VTF fit
MW10PPA-T exp
MW10PPA-T VTF fit
S10PPA exp
S10PPA VTF fit

[Fig 6]

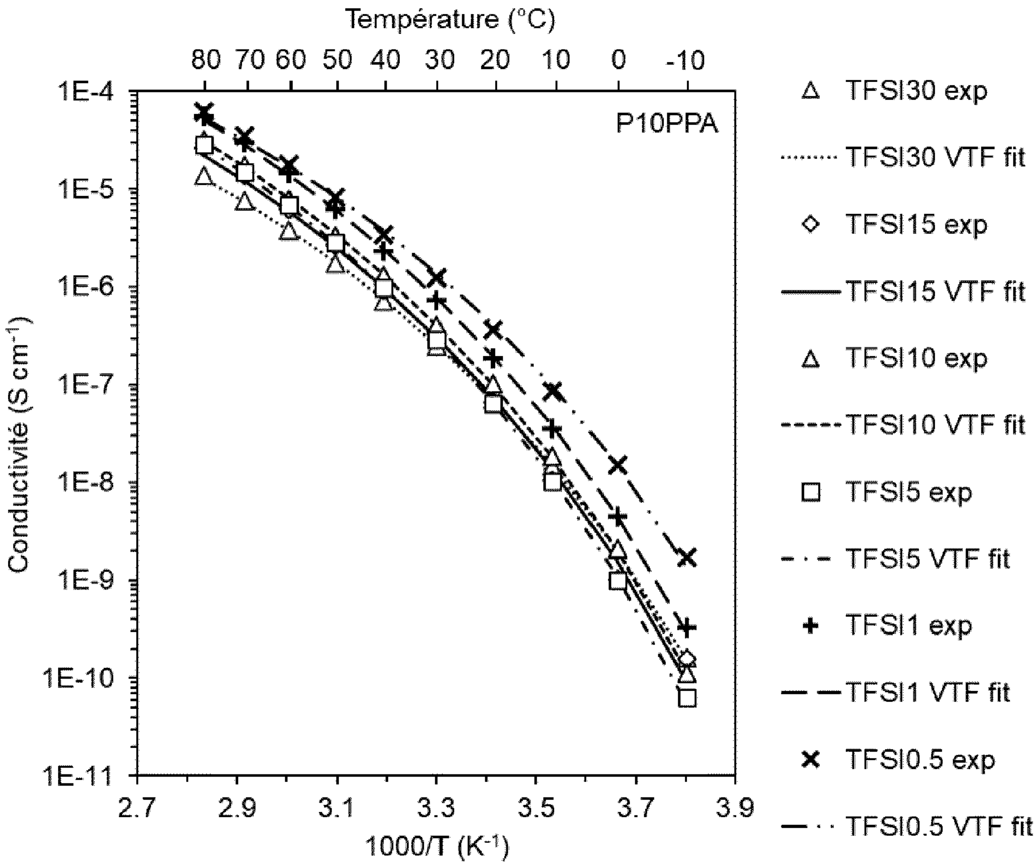
Température (°C)
80 70 60 50 40 30 20 10 0 -10
1E-4
1E-5
1E-6
1E-7
1E-8
1E-9
1E-10
1E-11
Conductivité (S cm-1)
P10PPA
2.7 2.9 3.1 3.3 3.5 3.7 3.9
1000/T (K-1)
TFSI30 exp
TFSI30 VTF fit
TFSI15 exp
TFSI15 VTF fit
TFSI10 exp
TFSI10 VTF fit
TFSI5 exp
TFSI5 VTF fit
TFSI1 exp
TFSI1 VTF fit
TFSI0.5 exp
TFSI0.5 VTF fit

[Fig 7]

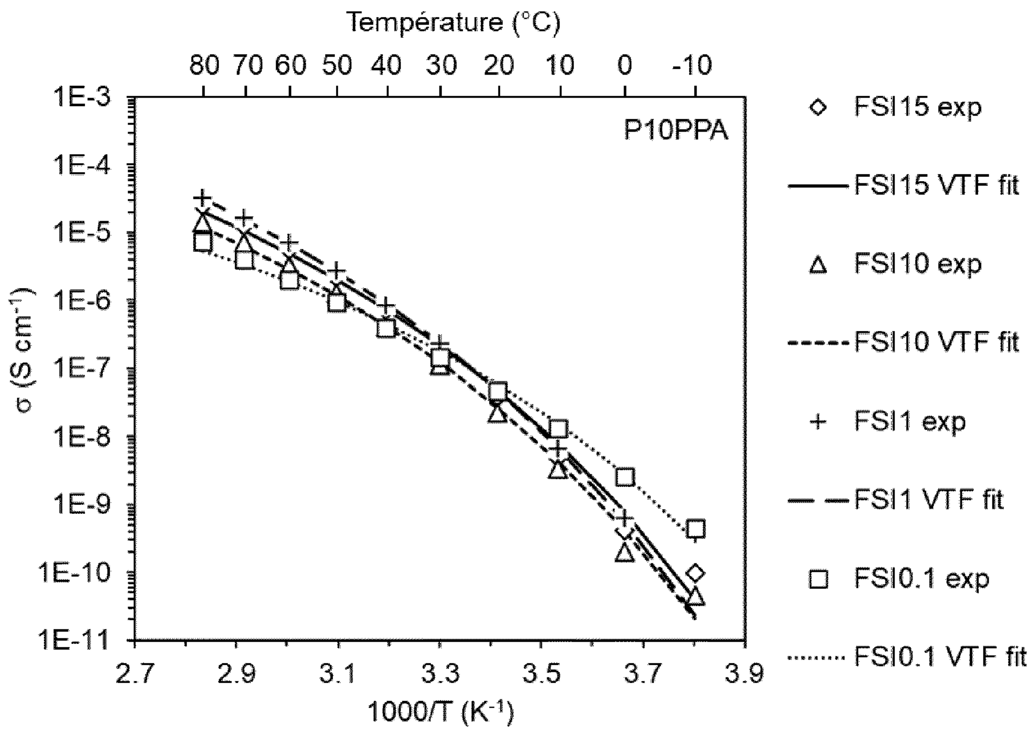
Température (°C)
80 70 60 50 40 30 20 10 0 -10
1E-3
1E-4
1E-5
1E-6
1E-7
1E-8
1E-9
1E-10
1E-11
σ (S cm-1)
P10PPA
2.7 2.9 3.1 3.3 3.5 3.7 3.9
1000/T (K-1)
FSI15 exp
FSI15 VTF fit
FSI10 exp
FSI10 VTF fit
FSI1 exp
FSI1 VTF fit
FSI0.1 exp
FSI0.1 VTF fit

[Fig 8]

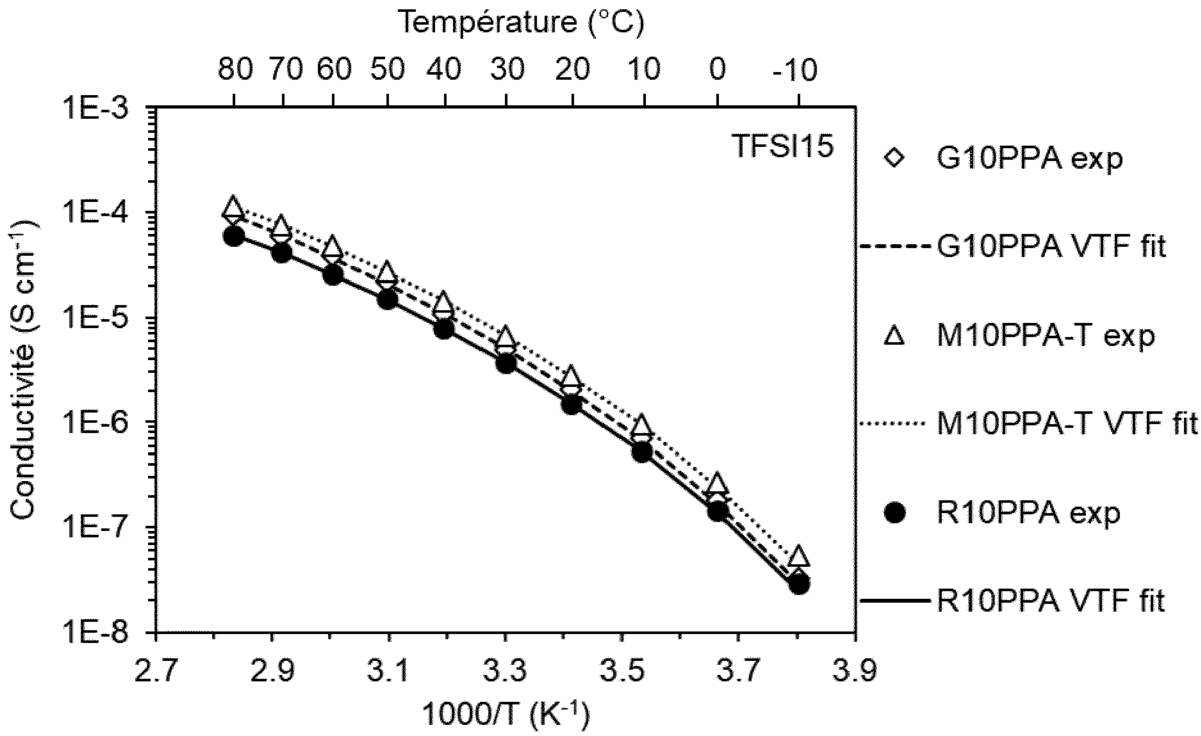
Température (°C)
80 70 60 50 40 30 20 10 0 -10
1E-3
1E-4
1E-5
1E-6
1E-7
1E-8
Conductivité (S cm-1)
TFSI15
G10PPA exp
G10PPA VTF fit
M10PPA-T exp
M10PPA-T VTF fit
R10PPA exp
R10PPA VTF fit
2.7 2.9 3.1 3.3 3.5 3.7 3.9
1000/T (K-1)

[Fig 9]

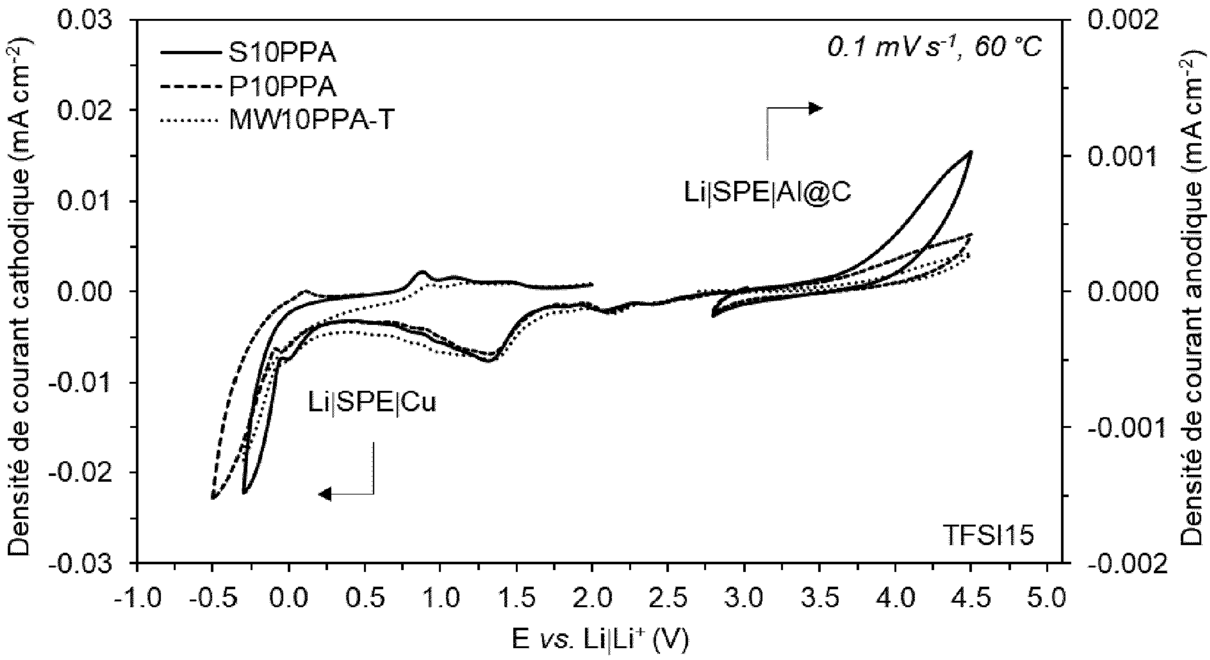
S10PPA
P10PPA
MW10PPA-T
0.1 mV s-1, 60 °C
Li|SPE|Al@C
Li|SPE|Cu
TFSI15
Densité de courant cathodique (mA cm-2)
Densité de courant anodique (mA cm-2)
0.03 0.02 0.01 0.00 -0.01 -0.02 -0.03
0.002 0.001 0.000 -0.001 -0.002
-1.0 -0.5 0.0 0.5 1.0 1.5 2.0 2.5 3.0 3.5 4.0 4.5 5.0
E vs. Li|Li+ (V)

[Fig 10]

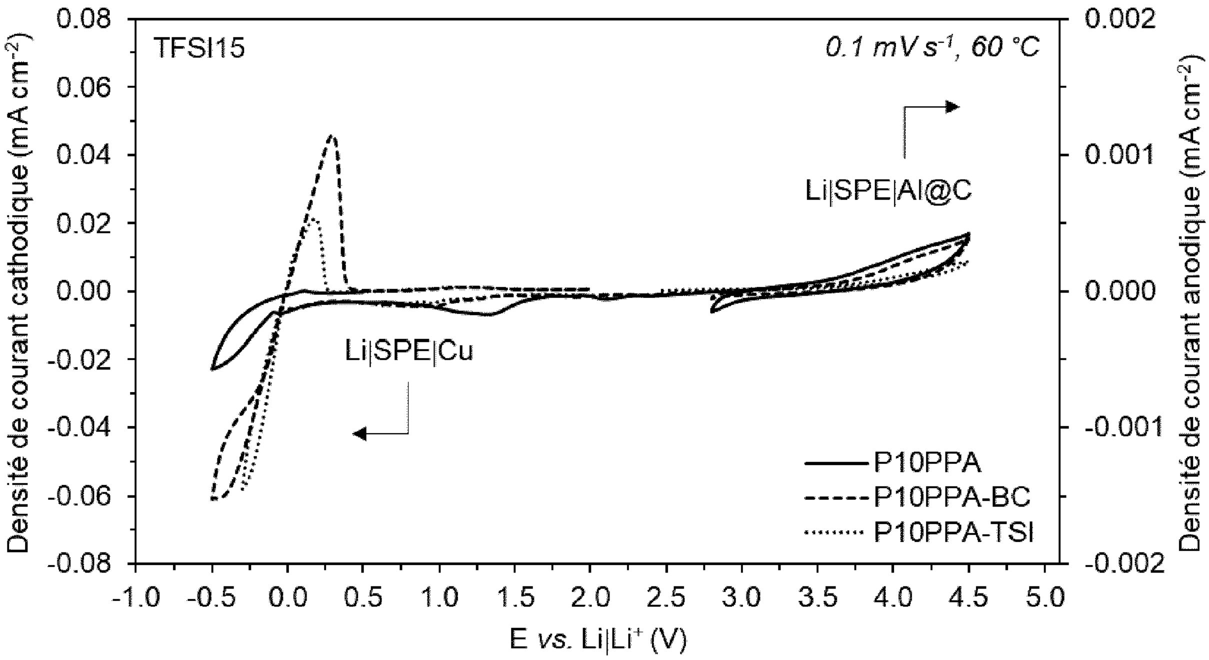
TFSI15
0.1 mV s-1, 60 °C
Li|SPE|Al@C
Li|SPE|Cu
P10PPA
P10PPA-BC
P10PPA-TSI
Densité de courant cathodique (mA cm-2)
Densité de courant anodique (mA cm-2)
E vs. Li|Li+ (V)
0.08
0.06
0.04
0.02
0.00
-0.02
-0.04
-0.06
-0.08
0.002
0.001
0.000
-0.001
-0.002
-1.0
-0.5
0.0
0.5
1.0
1.5
2.0
2.5
3.0
3.5
4.0
4.5
5.0

[Fig 11]

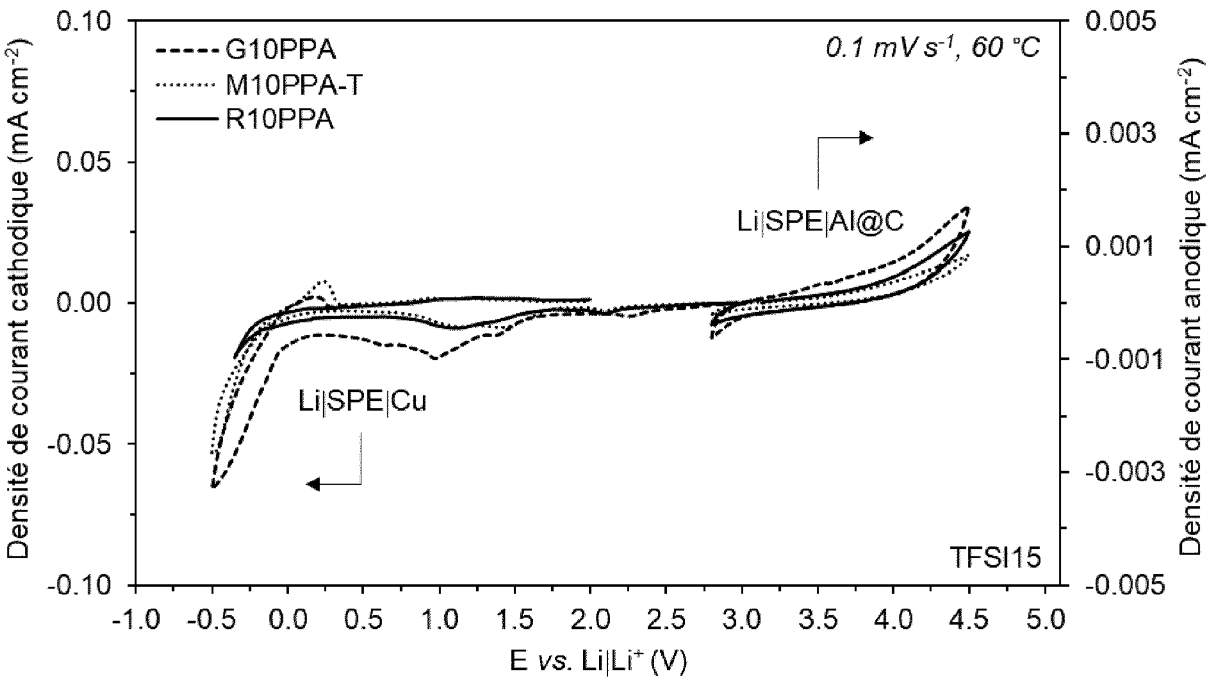
G10PPA
M10PPA-T
R10PPA
0.1 mV s-1, 60 °C
Li|SPE|Al@C
Li|SPE|Cu
TFSI15
Densité de courant cathodique (mA cm-2)
Densité de courant anodique (mA cm-2)
E vs. Li|Li+ (V)
0.10
0.05
0.00
-0.05
-0.10
0.005
0.003
0.001
-0.001
-0.003
-0.005
-1.0
-0.5
0.0
0.5
1.0
1.5
2.0
2.5
3.0
3.5
4.0
4.5
5.0

[Fig 12]

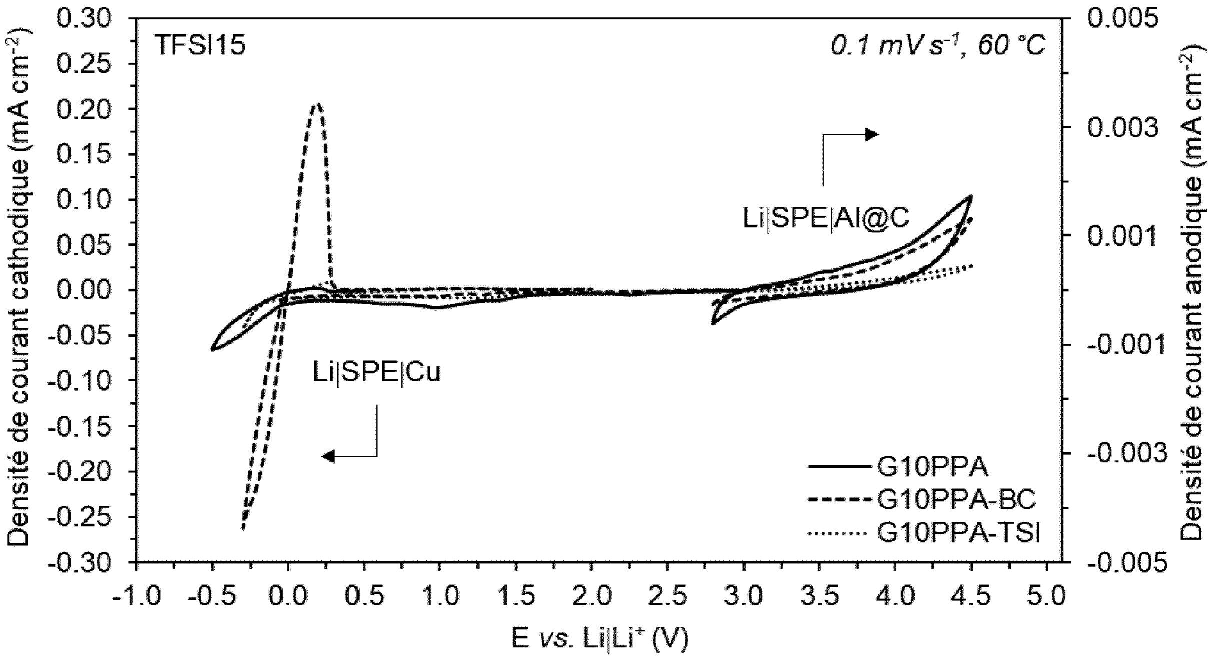
TFSI15
0.1 mV s-1, 60 °C
Li|SPE|Al@C
Li|SPE|Cu
G10PPA
G10PPA-BC
G10PPA-TSI
Densité de courant cathodique (mA cm-2)
Densité de courant anodique (mA cm-2)
E vs. Li|Li+ (V)
0.30
0.25
0.20
0.15
0.10
0.05
0.00
-0.05
-0.10
-0.15
-0.20
-0.25
-0.30
0.005
0.003
0.001
-0.001
-0.003
-0.005
-1.0
-0.5
0.0
0.5
1.0
1.5
2.0
2.5
3.0
3.5
4.0
4.5
5.0

[Fig 13]

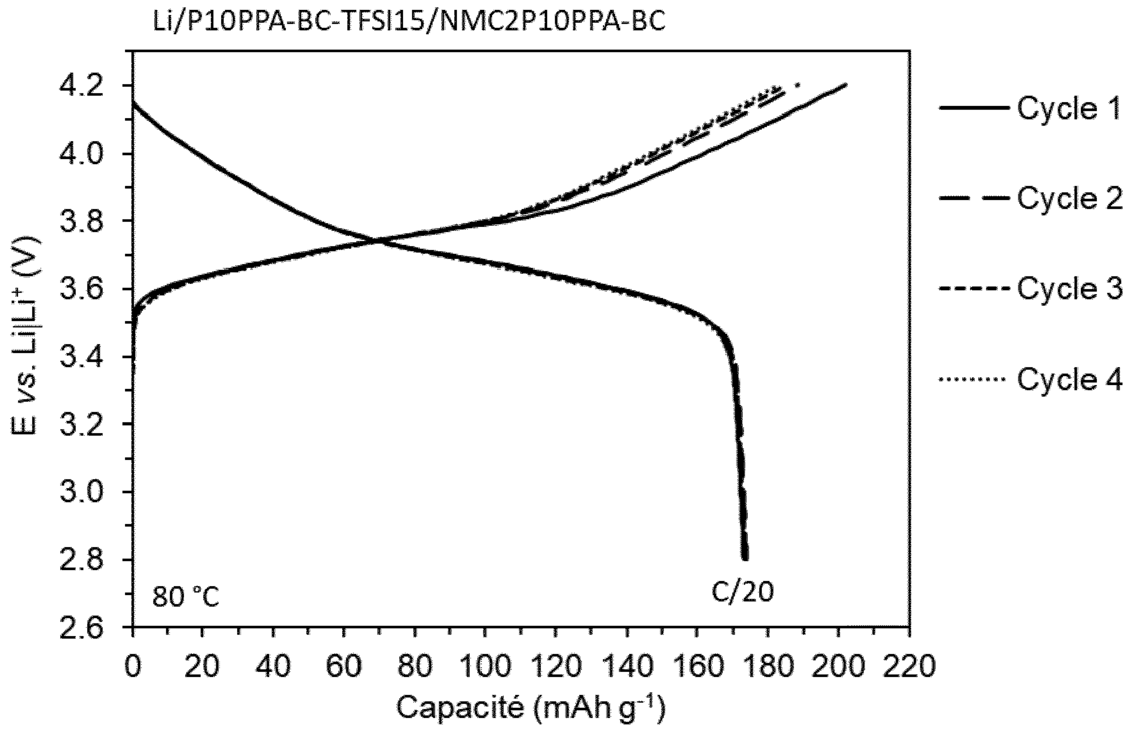
Li/P10PPA-BC-TFSI15/NMC2P10PPA-BC
Cycle 1
Cycle 2
Cycle 3
Cycle 4
80 °C
C/20
E vs. Li|Li+ (V)
Capacité (mAh g-1)
4.2
4.0
3.8
3.6
3.4
3.2
3.0
2.8
2.6
0
20
40
60
80
100
120
140
160
180
200
220

[Fig 14]

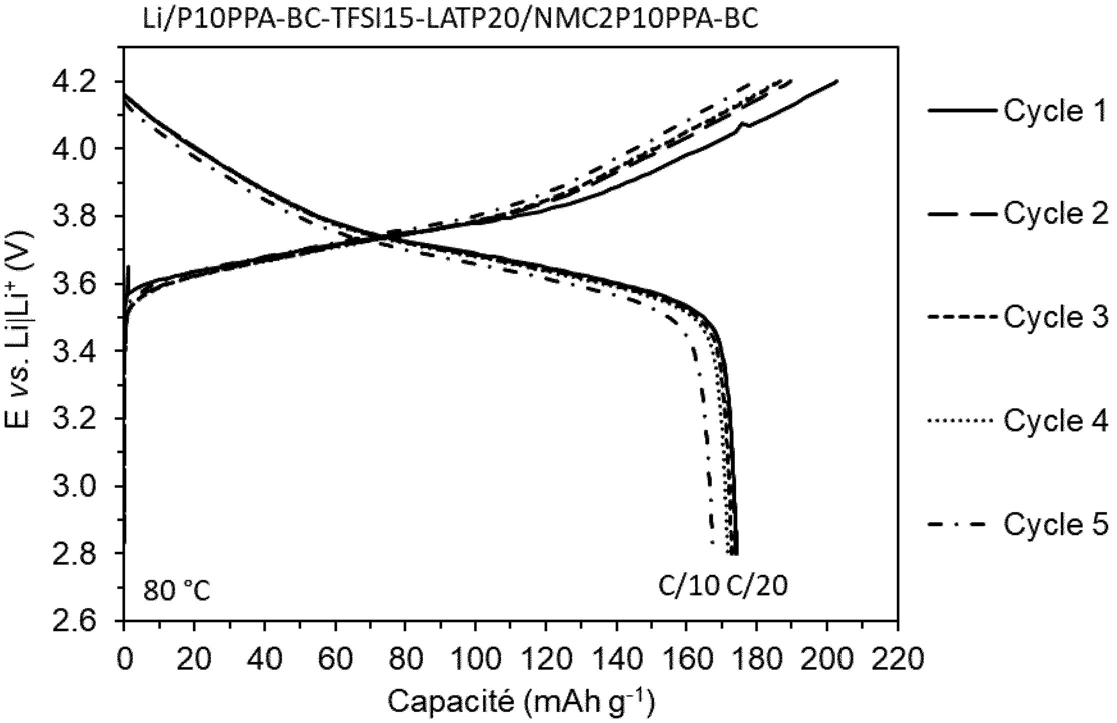
Li/P10PPA-BC-TFSI15-LATP20/NMC2P10PPA-BC
E vs. Li|Li+ (V)
4.2
4.0
3.8
3.6
3.4
3.2
3.0
2.8
2.6
0 20 40 60 80 100 120 140 160 180 200 220
Capacité (mAh g-1)
80 °C
C/10 C/20
Cycle 1
Cycle 2
Cycle 3
Cycle 4
Cycle 5

[Fig 15]

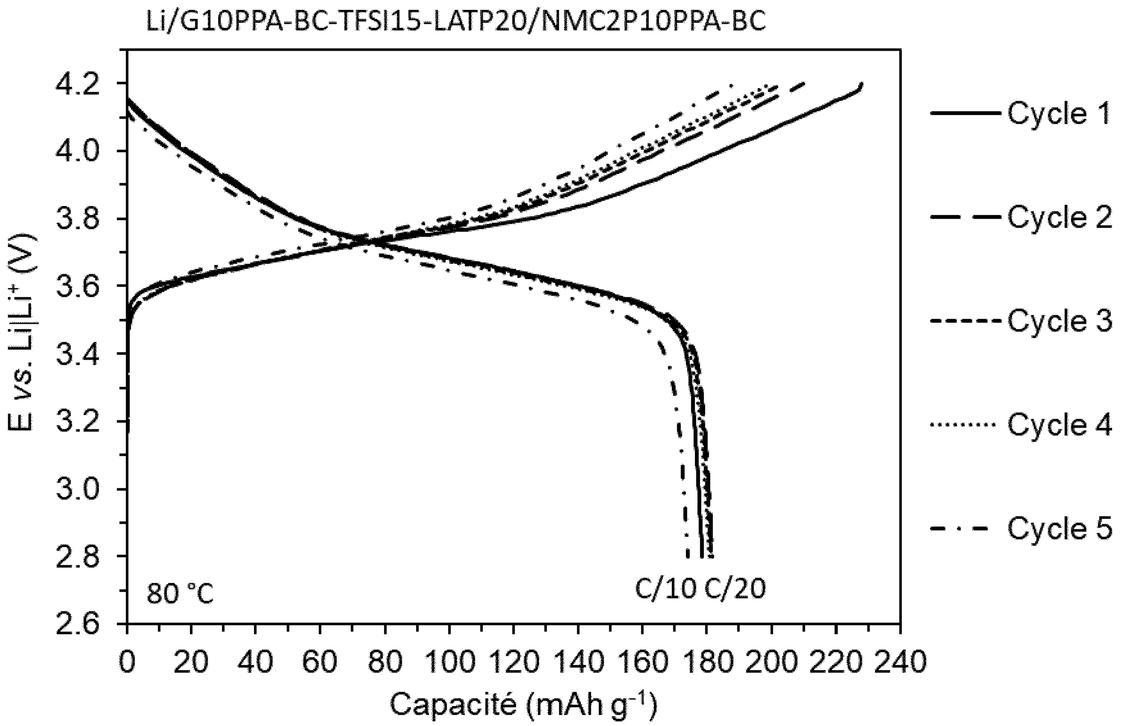
Li/G10PPA-BC-TFSI15-LATP20/NMC2P10PPA-BC
E vs. Li|Li+ (V)
4.2
4.0
3.8
3.6
3.4
3.2
3.0
2.8
2.6
0 20 40 60 80 100 120 140 160 180 200 220 240
Capacité (mAh g-1)
80 °C
C/10 C/20
Cycle 1
Cycle 2
Cycle 3
Cycle 4
Cycle 5

[Fig 16]

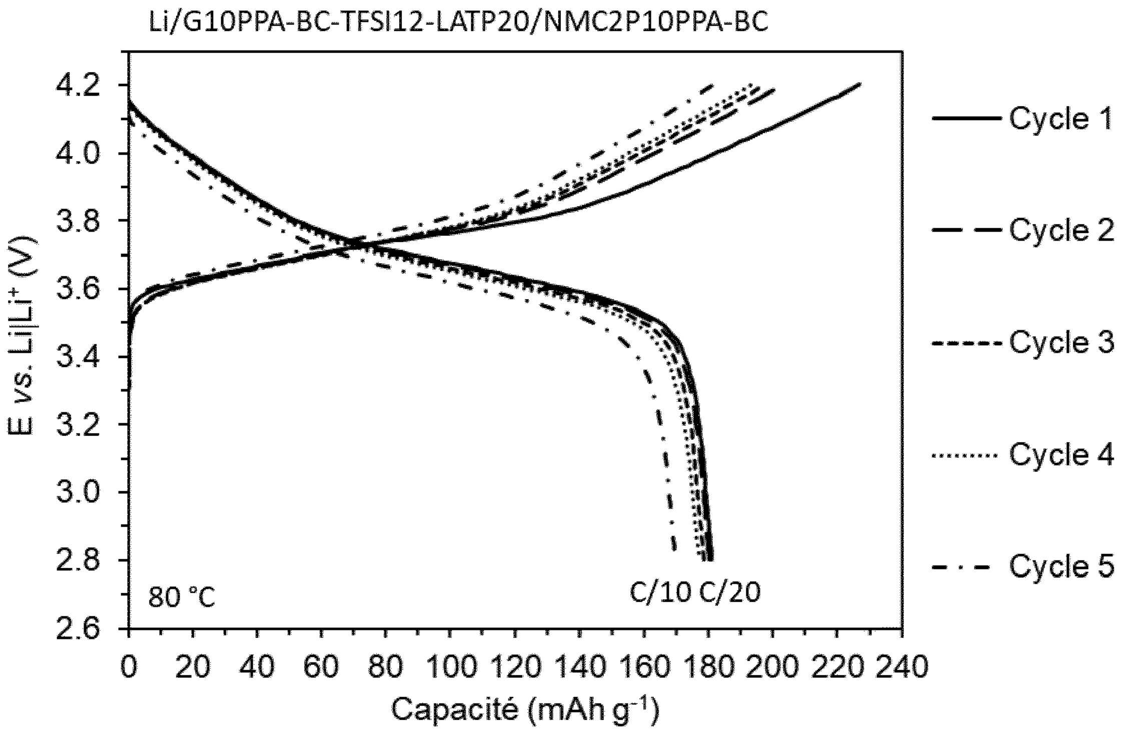
Li/G10PPA-BC-TFSI12-LATP20/NMC2P10PPA-BC
E vs. Li|Li+ (V)
Capacité (mAh g-1)
80 °C
C/10 C/20
Cycle 1
Cycle 2
Cycle 3
Cycle 4
Cycle 5
4.2
4.0
3.8
3.6
3.4
3.2
3.0
2.8
2.6
0
20
40
60
80
100
120
140
160
180
200
220
240

Europäisches Patentamt
European Patent Office
Office européen des brevets

# RAPPORT DE RECHERCHE EUROPEENNE

Numéro de la demande
EP 22 16 0894

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CN 111 129 602 A (CHINA ELECTRONICS TECHNOLOGY GROUP CORP.) 8 mai 2020 (2020-05-08) * abrégé * * alinéa [0027] * * exemples 1, 2 * * revendications 1-7, 9, 10 * ----- | 1-17 | INV. H01M4/04 H01M4/13 H01M4/139 H01M4/62 ADD. H01M10/052 H01M10/0562 H01M10/0565 |
| Y | J.M. CAMPOS ET AL: "Copolymerisation of [epsilon]-caprolactone and trimethylene carbonate catalysed by methanesulfonic acid", EUROPEAN POLYMER JOURNAL, vol. 49, no. 12, 25 septembre 2013 (2013-09-25), pages 4025-4034, XP028780416, ISSN: 0014-3057, DOI: 10.1016/J.EURPOLYMJ.2013.09.008 * le document en entier * ----- | 1-17 | |
| Y | A. COUFFIN ET AL: "Mild and Efficient Preparation of Block and Gradient Copolymers by Methanesulfonic Acid Catalyzed Ring-Opening Polymerization of Caprolactone and Trimethylene Carbonate", MACROMOLECULES, vol. 46, no. 11, 11 juin 2013 (2013-06-11), pages 4354-4360, XP055288602, US ISSN: 0024-9297, DOI: 10.1021/ma400916k * le document en entier * ----- -/-- | 1-17 | DOMAINES TECHNIQUES RECHERCHES (IPC) H01M |

Le présent rapport a été établi pour toutes les revendications

1

| Lieu de la recherche | Date d'achèvement de la recherche | Examinateur |
|---|---|---|
| Munich | 1 juillet 2022 | Masson, Jean-Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 22 16 0894

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | D. DELCROIX ET AL: "Ring-Opening Polymerization of Trimethylene Carbonate Catalyzed by Methanesulfonic Acid: Activated Monomer versus Active Chain End Mechanisms", MACROMOLECULES, vol. 43, no. 21, 9 novembre 2010 (2010-11-09), pages 8828-8835, XP055288433, US ISSN: 0024-9297, DOI: 10.1021/ma101461y * le document en entier * ----- | 1-17 | |
| Y,D | L. LIAO ET AL: "Rapid synthesis of poly(trimethylene carbonate) by microwave-assisted ring-opening polymerization", EUROPEAN POLYMER JOURNAL, vol. 43, no. 10, 28 septembre 2007 (2007-09-28), pages 4289-4296, XP022277519, ISSN: 0014-3057, DOI: 10.1016/J.EURPOLYMJ.2007.07.009 * le document en entier * ----- | 1-17 | |
| | | | DOMAINES TECHNIQUES RECHERCHES (IPC) |
| A | CN 109 301 342 B (SOUND GROUP CO., LTD.; SOUNDON NEW ENERGY TECHNOLOGY CO., LTD.) 25 décembre 2020 (2020-12-25) * abrégé * * exemples 1-13 * * revendications 1, 3, 6 * ----- | 1-17 | |
| A | US 2017/263921 A1 (SAMSUNG SDI CO., LTD.) 14 septembre 2017 (2017-09-14) * alinéa [0007] - alinéa [0027] * * alinéa [0043] - alinéa [0056] * * alinéa [0090] - alinéa [0093] * * exemples 1-8 * * revendications 1-4, 6-10, 12-15, 18 * ----- | 1-17 | |

Le présent rapport a été établi pour toutes les revendications

1

| Lieu de la recherche | Date d'achèvement de la recherche | Examinateur |
|---|---|---|
| Munich | 1 juillet 2022 | Masson, Jean-Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................................
& : membre de la même famille, document correspondant

EPO FORM 1503 03.82 (P04C02)

page 2 de 2

## ANNEXE AU RAPPORT DE RECHERCHE EUROPEENNE RELATIF A LA DEMANDE DE BREVET EUROPEEN NO.

EP 22 16 0894

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-07-2022

| Document brevet cité au rapport de recherche | Date de publication | Membre(s) de la famille de brevet(s) | Date de publication |
|---|---|---|---|
| CN 111129602 A | 08-05-2020 | AUCUN | |
| CN 109301342 B | 25-12-2020 | AUCUN | |
| US 2017263921 A1 | 14-09-2017 | KR 20170105873 A | 20-09-2017 |
| | | US 2017263921 A1 | 14-09-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **LESTRIEZ et al.** *Comptes Rendus Chim.,* 2010, vol. 13, 1341-1350
- **ZHANG et al.** *J. Power Sources,* 2014, vol. 247, 1-8
- **SHI et al.** *Acc. Chem. Res.,* 2017, vol. 50, 2642-2652
- **PIECZONKA et al.** *Adv. Energy Mater.,* 2015, vol. 5, 1501008
- **SUN et al.** *Solid State Ionics,* 2014, vol. 262, 738-742
- **MINDEMARK et al.** *Polymer (Guildfà.,* 2015, vol. 63, 91-98
- **DELCROIX et al.** *Macromolecules,* 2010, vol. 43, 8828-8835
- **LIAO et al.** *Eur. Polym. J.,* 2007, vol. 43, 4289-4296
- **LIAO et al.** *React. Funct. Polym.,* 2008, vol. 68, 751-758
- **TOMINAGA et al.** *Electrochim. Acta,* 2019, vol. 302, 286-290
- **ZHU et al.** *Polym. Degrad. Stab.,* 2012, vol. 97, 1589-1595
- **TUNDO et al.** *Green Chem.,* 2008, vol. 10, 1182-1189
- **MINDEMARK et al.** *Prog. Polym. Sci.,* 2018, vol. 81, 114-143
- **ARMAND et al.** *Solid State Ionics,* 1994, vol. 69, 309-319
- **LIN et al.** *Polymer (Guildf).,* 2011, vol. 52, 4106-4113
- **EVANS.** *Polymer,* 1987, vol. 28 (13), 2324-2328